# EUROPEAN PATENT APPLICATION

(11) **EP 1 655 619 A1**
(43) Date of publication of application: **10.05.2006**
(21) Application number: 04748133.8
(22) Date of filing: 30.07.2004
(51) Int. Cl.: G01S 5/14

(54) **TERMINAL POSITION IDENTIFICATION METHOD AND SYSTEM THEREOF**

(30) Priority: 31.07.2003 JP 2003284105
(71) Applicant: NEC CORPORATION, Minato-ku, Tokyo 108-8001 (JP)
(72) Inventor: MATSUDA, Jun-ichi, c/o NEC Corporation, Minato-ku, Tokyo 1088001 (JP)
(74) Representative: Glawe, Delfs, Moll
(86) International application number: PCT/JP2004/010972
(87) International publication number: WO 2005/012939

(57) **Abstract**

The invention is to provide a technique for specifying the location of a terminal with a high degree of accuracy even in an environment in which the grand total of the number of base stations and GPS satellites that can be measured is only two stations. A hyperbola 11 is found from the difference between the reception time of a signal from a base station 22 and the reception time of a signal from a base station 23 in a terminal 21, and a circle 12 is found from the round-trip propagation time between the base station 22 and the terminal 21. Intersection points between the hyperbola 11 and the circle 12 is calculated to find a candidate point 13 and a candidate point 14. The terminal 21 is located in a sector 27, so that the candidate point 13 existing in the range of the sector 27 is specified as the location of the terminal 27.

## Description

### [Technical Field to Which the Invention Pertains]

The present invention relates to a mobile radio communication field, and in particular to a method used in determining the geographical location of a mobile station in a mobile communication network.

### [Background Art]

For the purpose of more adequately describing a technological level for the present invention at present, all descriptions of the patents, patent applications, patent gazettes, scientific papers, and the like which are cited or specified in the present application will be incorporated herein by reference.

In recent years, a number of methods for specifying the location of a mobile telephone terminal have been reported, and some positioning systems for specifying the location of the mobile telephone terminal have been standardized in a plurality of standards bodies.

An example of the positioning systems includes a GPS positioning system using a signal from a GPS satellite.

This system is a positioning system standardized in the 3rd General Partnership Project (hereinafter, referred to as 3GPP) which is one of the bodies conducting standardization, and which defines the standard of a W-CDMA system, and the 3rd General Partnership Project 2 (hereinafter, referred to as 3GPP2) which defines a cdmaOne/2000 system.

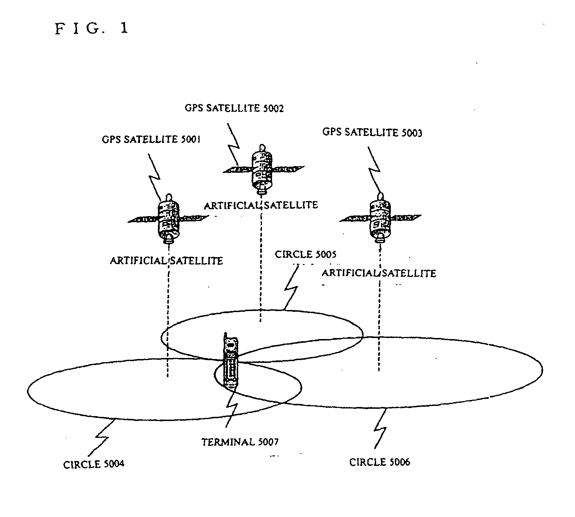

Fig. 1 is a diagram showing the principal of the GPS positioning system.

In Fig. 1, the GPS positioning system is a positioning system in which a terminal 5007 measures the reception time of signals from each of three GPS satellites 5001 to 5003, and finds circles 5004 to 5006 based on the distance between each of the GPS satellites 5001 to 5003 and the terminal 5007 calculated from the difference between transmission time contained in the received signals and the measured reception time to determine the intersection points between these three circles as the location of the terminal 5007. Incidentally, one more GPS satellite may be required for time synchronization of the terminal 5007 with the GPS satellites 5001 to 5003.

In addition, there has been devised a positioning system using signals from base stations instead of the signals from the GPS satellites. An example of the positioning systems using the signals from the base stations includes Observed Time Difference Of Arrival positioning (hereinafter, referred to as OTDOA positioning). This system is a positioning system which is standardized in the 3GPP.

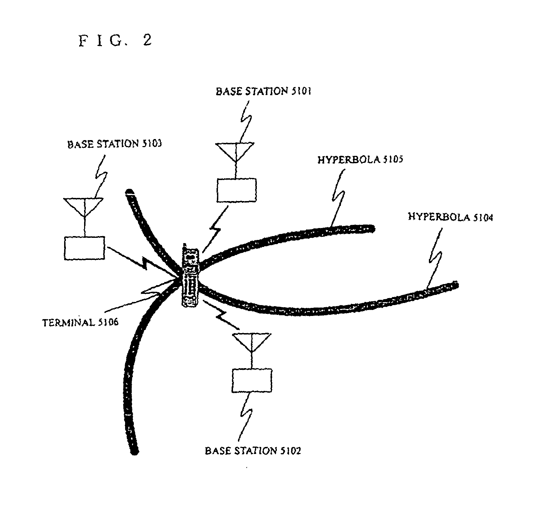

Fig. 2 is a diagram showing the principal of the OTDOA positioning.

In Fig. 2, the OTDOA positioning is a positioning system in which a terminal 5106 measures the reception time of signals from each of three base stations 5101 to 5103, and finds hyperbolas 5104 and 5105 based on a difference of the distance between each base station and the terminal 5106 calculated from a difference of the reception time of the signals from each base station to determine the intersection points between these two hyperbolas as the location of the terminal 5106. Incidentally, a difference of the reception time measured in the terminal 5106 is compensated by a transmission timing difference when the transmission timing of the signals from the base stations is not synchronized.

In addition, another example of the positioning systems using the signals from the base stations includes Advanced Forward Link Triangulation positioning (hereinafter, referred to as AFLT positioning). This system is a positioning system which is standardized in the 3GPP2.

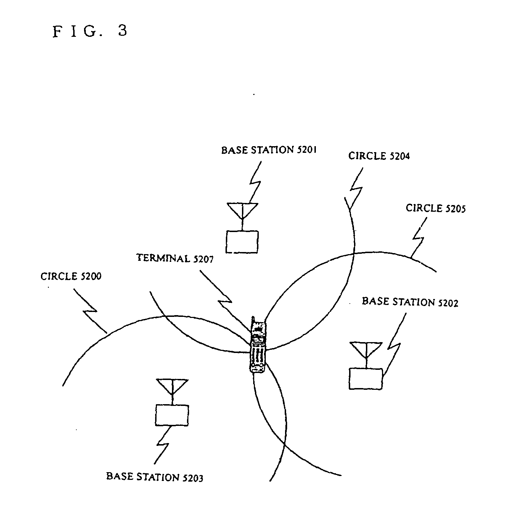

Fig. 3 is a diagram showing the principal of the AFLT positioning.

The AFLT positioning is a positioning system in which a terminal 5207 measures the reception time of signals from each of three base stations 5201 to 5207, and finds circles 5204 to 5206 based on a difference of the distance between each of the base stations 5201 to 5207 and the terminal 5207 calculated from a difference of the reception time between transmission time contained in the received signals and the measured reception time, to determine the intersection points between these three circles as the location of the terminal 5107.

In addition, there has been devised a positioning system using both signals from the GPS satellites and the base stations.

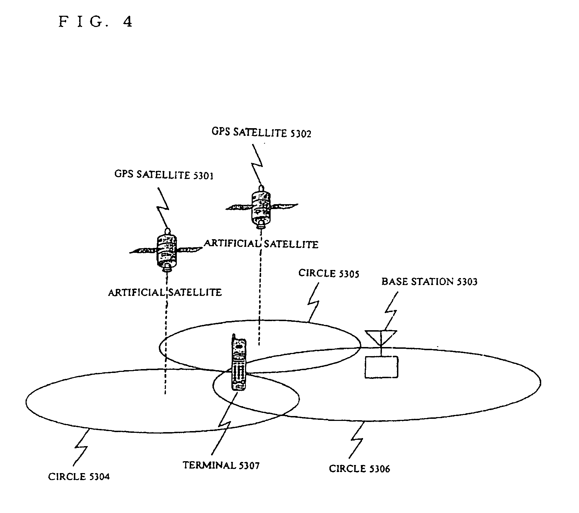

Fig. 4 is a diagram showing the principal of a positioning system using both of signals from the GPS satellites and a signal from the base station.

In Fig. 4, a terminal 5307 measures the reception time of signals from each of two GPS satellites 5301 and 5302 to find circles 5304 and 5305 based on the distance between each of the GPS satellites 5301 and 5302 and the terminal 5307 calculated from a difference between transmission time contained in the received signals and the measured reception time. In addition, the terminal 5307 measures the reception time of a signal from a base station 5303 to find a circle 5306 based on the distance between the base station 5303 and the terminal 5307 calculated from the difference between the transmission time contained in the received signal and the measured reception time. This is a positioning system in which the intersection points of these three circles are determined as the position of the terminal 5007. Incidentally, one more GPS satellite may be required for time synchronization of the terminal 5307 with the GPS satellites 5301 and 5302.

### [Disclosure of the Invention]

### [Problems to be Solved by the Invention]

However, the conventional positioning systems described above has a problem that signals from three or more base stations or three or more GPS satellites are necessary, but because two intersection points between two quadric curves are obtained in an environment in which the grand total of the number of base stations and GPS satellites that can be measured is only two stations, the location of terminals cannot be narrowed down, and thus the location of the terminals cannot be specified with a high degree of accuracy.

Whereat, the present invention is invented in the light of the aforementioned problem, and its object is to provide a terminal location specification method which is capable of specifying the location of a terminal with a high degree of accuracy even in an environment in which the grand total of the number of base stations and GPS satellites that can be measured is only two stations, and a system of the same.

### [Means for Solving the Problems]

A first invention of the present invention for solving the aforementioned problem is a terminal location specification method for specifying geographical location of a radio terminal by transmission and reception of signals between two radio stations, geographical location of which is known and the geographical location of which is different and a radio terminal, the geographical location of which is unknown, comprising the steps of: depicting two curves to determine two intersection points between the two curves as two candidate points for the geographical location of the radio terminal by the use of propagation time of radio signals between the two radio stations and the radio terminal; and specifying a communication range of at least one of the two radio stations to determine the candidate point included in the communication range of the two candidate points as the geographical location of the radio terminal.

A second invention of the present invention for solving the aforementioned problem is a terminal location specification method for specifying geographical location of a radio terminal by transmission and reception of signals between two radio stations, geographical location of which is known and the geographical location of which is different, and the radio terminal, the geographical location of which is unknown, comprising the steps of: depicting two curves to determine two intersection points between the two curves as two candidate points for the geographical location by the use of propagation time of radio signals between the two radio stations and the radio terminal; and specifying a arrival direction of the signal from the radio terminal received in a first radio station, and compares the direction of a straight line connecting each of the two candidate points and the first radio station with the arrival direction to determine the candidate point in which the arrival direction corresponds with the direction of the straight line as the geographical location of the radio terminal.

A third invention of the present invention for solving the aforementioned problem is a terminal location specification method for specifying geographical location of a radio terminal by transmission and reception of signals between two radio stations, geographical location of which is known and the geographical location of which is different, and the radio terminal, the geographical location of which is unknown, comprising the steps of: depicting two curves to determine two intersection points between the two curves as two candidate points for the geographical location of the radio terminal by the use of propagation time of radio signals between the two radio stations and the radio terminal; and specifying arrival directions of the signals received by the radio terminal from each of the two radio stations as arrival angles to calculate angles which a straight line connecting the candidate points and one of the two radio stations forms with a straight line connecting the candidate points and the other of said two radio stations for each of the candidate points as candidate angles to compare the difference of the arrival angles with each of the candidate angles to determine the candidate point having the candidate angle which corresponds with the difference of the arrival angles as the geographical location of the radio terminal.

A fourth invention of the present invention for solving the aforementioned problem is a terminal location specification method for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising the steps of: depicting two curves to determine two intersection points between the two curves as two candidate points for the geographical location of the radio terminal by the use of propagation time of radio signals between the two radio stations and the radio terminal; and measuring the electric field intensity of the signal received by the radio terminal from one of the two radio stations to compare this electric field intensity with received electric field intensity information which is kept in any one of the apparatus, the base stations, and the terminal, and in which the electric field intensity of the signals from the radio stations measured in a plurality of measurement points in communication ranges of the radio stations is related to the geographical location of the measurement points to specify the geographical location of the measurement points related to a value close to the electric field intensity to determine the candidate point close to the geographical location of the measurement points as the specified geographical location of the radio terminal.

A fifth invention of the present invention for solving the aforementioned problem is a terminal location specification method for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising the steps of: depicting two curves to determine two intersection points between the two curves as two candidate points for the geographical location of the radio terminal by the use of propagation time of radio signals between the two radio stations and the radio terminal; and measuring the propagation condition of the signal received by the radio terminal from one of the two radio stations to compare this propagation condition with propagation condition information which is kept in any one of the apparatus, the base stations, and the radio terminal, and in which propagation conditions of the signals from the radio stations measured in a plurality of measurement points in communication ranges of the radio stations are related to the geographical location of the measurement points to specify the geographical location of the measurement points having a propagation condition close to the propagation condition measured by the radio terminal to determine the candidate point close to the geographical location of the specified measurement points as the geographical location of the radio terminal.

A sixth invention of the present invention for solving the aforementioned problem is a terminal location specification method for specifying geographical location of a radio terminal by transmission and reception of signals between two radio stations, geographical location of which is known and the geographical location of which is different and the radio terminal having a function to measure geomagnetism, the geographical location of which is unknown in a mobile communication network composed of a fixed network to which the radio terminal, the radio stations, and at least one of the radio stations are connected, and other necessary apparatus connected to the fixed network, comprising the steps of: depicting two curves to determine two intersection points between the two curves as two candidate points for the geographical location of the radio terminal by the use of propagation time of radio signals between the two radio stations and the radio terminal; and comparing the geomagnetism measured by the radio terminal with geomagnetism information which is kept in any one of the apparatus, the base stations, and the radio terminal, and in which geomagnetism measured in a plurality of measurement points in communication ranges of the radio stations is related to the geographical location of the measurement points to specify the geographical location of the measurement points in relation to the value of geomagnetism close to the geomagnetism to determine the candidate point close to the geographical location of the specified measurement points as the geographical location of the radio terminal.

A seventh invention of the present invention for solving the aforementioned problem is a terminal location specification method for specifying geographical location of a radio terminal by transmission and reception of signals between two radio stations, geographical location of which is known and the geographical location of which is different and the radio terminal, the geographical location of which is unknown, comprising the steps of: depicting two curves to determine two intersection points between the two curves as two candidate points for the geographical location of the radio terminal by the use of propagation time of radio signals between the two radio stations and the radio terminal; and determining, if the radio terminal is in a location that is not likely to exist, the other candidate point as the geographical location of the radio terminal.

An eighth invention of the present invention for solving the aforementioned problem is a terminal location specification method for specifying geographical location of a radio terminal by transmission and reception of signals between two radio stations, geographical location of which is known and the geographical location of which is different and the radio terminal having a function to measure altitude, the geographical location of which is unknown in a mobile communication network composed of a fixed network to which the radio terminal, the radio stations, and at least one of the radio stations are connected, and other necessary apparatus connected to the fixed network, comprising the steps of: depicting two curves to determine two intersection points between the two curves as two candidate points for the geographical location of the radio terminal by the use of propagation time of radio signals between said two radio stations and said radio terminal; and comparing the altitude measured by the radio terminal with the altitude information on the candidate points of the altitude information which is kept in any one of the apparatus, the base stations, and the radio terminal, and in which altitude information on points of communication ranges of the radio stations is related to the geographical location to determine the candidate point in which the altitude information close to the measured altitude is kept as the location of the radio terminal.

A ninth invention of the present invention for solving the aforementioned problem is a terminal location specification method for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising the steps of: depicting two curves to determine two intersection points between the two curves as two candidate points for the geographical location of the radio terminal by the use of propagation time of radio signals between the two radio stations and the radio terminal; and comparing each of the candidate points with positioning history information in which the location of the radio terminal specified by any one of the apparatus, the base stations, and the radio terminal in the past is kept to determine the candidate point close to the location of the radio terminal kept in the positioning history information as the location of the radio terminal.

A tenth invention of the present invention for solving the aforementioned problem is a terminal location specification method for specifying geographical location of a radio terminal by transmission and reception of signals between two radio stations, geographical location of which is known and the geographical location of which is different and a first radio terminal, geographical location of which is unknown, comprising the steps of: depicting two curves to determine two intersection points between the two curves as two candidate points for the geographical location of the radio terminal by the use of propagation time of radio signals between the two radio stations and the first radio terminal; and conducting communication between the radio terminal and its same radio station to compare geographical location of a second radio terminal, the geographical location of which is known with the candidate points to determine the candidate point close to the geographical location of the second radio terminal as geographical location of the first radio terminal.

An eleventh invention of the present invention for solving the aforementioned problem is a terminal location specification method for specifying geographical location of a radio terminal by transmission and reception of signals between two radio stations, geographical location of which is known and the geographical location of which is different and the radio terminal having an imaging function, the geographical location of which is unknown in a mobile communication network composed of a fixed network to which the radio terminal, the radio stations, and at least one of the radio stations are connected, and other necessary apparatus connected to the fixed network, comprising the steps of: depicting two curves to determine two intersection points between the two curves as two candidate points for the geographical location of the radio terminal by the use of propagation time of radio signals between the two radio stations and the first radio terminal; and the radio terminal photographing the outward appearance of surrounding buildings using the imaging function with the outward appearance information of buildings in communication areas of the radio stations, which is kept in any one of the apparatus, the base stations, and the radio terminal to determine the candidate point in which the photographed outward appearance corresponds with the outward appearance information as the location of the radio terminal.

A twelfth invention of the present invention for solving the aforementioned problem is a terminal location specification method for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising the steps of: depicting two curves to determine two intersection points between the two curves as two candidate points for the geographical location of the radio terminal by the use of propagation time of radio signals between the two radio stations and the first radio terminal; and estimating the effect of a shield due to a building based on the disposition information of buildings in communication ranges of the radio stations, which is kept in any one of the apparatus, the base stations, and the radio terminal to determine, if one of the candidate points cannot receive the signal from at least one the radio station, the other of the candidate points as the location of the radio terminal.

In accordance with a thirteenth invention of the present invention for solving the aforementioned problem, it is possible to measure propagation time of radio signals between said radio stations and said radio terminal in the step of finding two candidate points in any one of the aforementioned first to twelfth inventions, wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

The steps of finding two candidate points as used herein, includes a step of depicting two curves by the use of propagation time of radio signals between the two radio stations and the radio terminal to determine two intersection points between the two curves as two candidate points for the geographical location of the radio terminal, and a step of depicting the two curves by the use of the propagation time of the radio signals between the two radio stations and the radio terminal to estimate the two intersection points between the two curves as the two candidate points of the geographical location of the radio terminal.

In accordance with a fourteenth invention of the present invention for solving the aforementioned problem, when it is possible to measure propagation time of a radio signal between one of said two radio stations and said radio terminal, it being possible to measure a difference of the propagation time of the radio signals between said radio terminal and said two radio stations in the step of finding two candidate points in any one of the aforementioned first to thirteenth inventions, a first distance is found from the propagation time, the difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

In accordance with a fifteenth invention of the present invention for solving the aforementioned problem, in a mobile communication network comprising at least one said radio terminal and at least two base stations, in which one the base station forms a plurality of communication ranges, and said radio terminal and the base stations existing in the communication ranges conduct radio communication, said two radio stations are the base stations.

In accordance with a sixteenth invention of the present invention for solving the aforementioned problem, said radio terminal has a function to receive a signal from a GPS satellite, and one of the radio stations is said base station, the other of the radio stations being the GPS satellite in said mobile communication network in any one of the aforementioned first to fifteenth inventions.

In accordance with a seventeenth invention of the present invention for solving the aforementioned problem, said radio terminal has a function to receive a signal from a GPS satellite, said radio stations being the GPS satellites in any one of the aforementioned first to sixteenth inventions.

An eighteenth invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown, comprising a first function block for depicting two curves to calculate two intersection points between the two curves as two candidate points for the geographical location of the radio terminal by the use of propagation time of radio signals between the two radio stations and the radio terminal, and a second function block for specifying a communication range of at least one of the two radio stations to determine the candidate point included in the communication range of said two candidate points as the geographical location of the radio terminal.

A nineteenth invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown, comprising a first function block for depicting two curves to calculate two intersection points between the two curves as two candidate points for the geographical location of the radio terminal by the use of propagation time of radio signals between the two radio stations and the radio terminal; and a second function block for specifying a arrival direction of the signal from the radio terminal received in a first radio station to compare the direction of a straight line connecting each of said two candidate points and the first radio station and the arrival direction to determine the candidate point in which the arrival direction corresponds with the direction of the straight line as the geographical location of the radio terminal.

A twentieth invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown, comprising a first function block for depicting two curves to calculate two intersection points between the two curves as two candidate points for the geographical location of the radio terminal by the use of propagation time of radio signals between the two radio stations and the radio terminal, and a second function block for specifying arrival directions of the signals received by the radio terminal from each of the two radio stations as arrival angles to calculate angles which a straight line connecting the candidate points and one of the two radio stations forms with a straight line connecting the candidate points and the other of said two radio stations for each of the candidate points as candidate angles to compare differences of the arrival angles with each of the candidate angles to determine the candidate point having the candidate angle which corresponds with the differences of the arrival angles as the geographical location of the radio terminal.

A twenty-first invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising a storage function block in which received electric field intensity information in which the electric field intensity of the signals from the radio stations measured in a plurality of measurement points in communication ranges of the radio stations is related to the geographical location of the measurement points has been stored; a first function block for depicting two curves to calculate two intersection points between the two curves as two candidate points for the geographical location of the radio terminal by the use of propagation time of radio signals between the two radio stations and the radio terminal; and a second function block for measuring the electric field intensity of the signal received by the radio terminal from one of the two radio stations to compare this electric field intensity with said stored, received electric field intensity information to specify the geographical location of the measurement points related to a value close to the electric field intensity to determine the candidate point close to the specified geographical location of the measurement points as the geographical location of the radio terminal.

A twenty-second invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising a first function block for depicting two curves to estimate two intersection points between the two curves as two candidate points for the geographical location of the radio terminal by the use of propagation time of radio signals between the two radio stations and the radio terminal; a storage function block in which propagation condition information in which propagation conditions of the signals from the radio stations measured in a plurality of measurement points in communication ranges of the radio stations are related to the geographical location of the measurement points has been stored; and a second function block for measuring the propagation condition of the signal received by the radio terminal from one of the two radio stations to compare this propagation condition with said propagation condition information to specify the geographical location of the measurement points having a propagation condition close to the propagation condition measured by the radio terminal to determine the candidate point close to the specified geographical location of the measurement points as the geographical location of the radio terminal.

A twenty-third invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising a radio terminal having a first function block for measuring geomagnetism; a second function block for depicting two curves to calculate two intersection points between the two curves as two candidate points for the geographical location of the radio terminal by the use of propagation time of radio signals between the two radio stations and the radio terminal; a storage function block in which geomagnetism information in which geomagnetism measured in a plurality of measurement points in communication ranges of the radio stations is related to the geographical location of the measurement points has been stored; and a third function block for comparing the geomagnetism measured by the radio terminal with said geomagnetism information to specify the geographical location of the measurement points related to the value of geomagnetism close to the geomagnetism to determine the candidate point close to the specified geographical location of the measurement points as the geographical location of the radio terminal.

A twenty-fourth invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown, comprising a first function block for depicting two curves to calculate two intersection points between the two curves as two candidate points for the geographical location of the radio terminal by the use of propagation time of radio signals between the two radio stations and the radio terminal; and a second function block for determining, if geographical location of one of the two candidate points is a location in which the radio terminal is not likely to exist, the other candidate point as the geographical location of the radio terminal.

A twenty-fifth invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising a radio terminal having a first function block for measuring altitude; a storage function block in which altitude information in which altitude information on points of communication ranges of the radio stations is related to the geographical location has been stored; a second function block for depicting two curves to calculate two intersection points between the two curves as two candidate points for the geographical location of the radio terminal by the use of propagation time of radio signals between said two radio stations and said radio terminal; and a third function block for comparing the altitude measured by the radio terminal with the altitude information on the candidate points of said altitude information to determine the candidate point in which the altitude information close to the measured altitude is kept as the location of the radio terminal.

A twenty-sixth invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising a storage function block in which positioning history information in which the location of the radio terminal specified by any one of the apparatus, the base stations, and the radio terminal in the past is kept has been stored; a first function block for depicting two curves to calculate two intersection points between the two curves as two candidate points for the geographical location of the radio terminal by the use of propagation time of radio signals between the two radio stations and the radio terminal, and a second function block for comparing each of the candidate points with said positioning history information to determine the candidate point close to the location of the radio terminal kept in said positioning history information as the location of the radio terminal.

A twenty-seventh invention of the present invention for solving the aforementioned problem is a terminal location specification system for specifying geographical location of a radio terminal by transmission and reception of signals between two radio stations, geographical location of which is known and the geographical location of which is different and a first radio terminal, geographical location of which is unknown, comprising a first function block for depicting two curves to calculate two intersection points between the two curves as two candidate points for the geographical location of the radio terminal by the use of propagation time of radio signals between the two radio stations and the first radio terminal; and a second function block for conducting communication between the radio terminal and its same radio station to compare geographical location of a second radio terminal, the geographical location of which is known with the candidate points to determine the candidate point close to the geographical location of the second radio terminal as the geographical location of the first radio terminal.

A twenty-eighth invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising a radio terminal having imaging means; a storage function block in which outward appearance information of buildings in communication areas of the radio stations has been stored in relation to the geographical location thereof; a first function block for depicting two curves to calculate two intersection points between the two curves as two candidate points for the geographical location of the radio terminal by the use of propagation time of radio signals between the two radio stations and the first radio terminal; and a second function block for comparing the outward appearance of the buildings photographed by the imaging means of the radio terminal with outward appearance information related to the candidate points of said outward appearance information to determine the candidate point in which said photographed outward appearance corresponds with said outward appearance information as the location of the radio terminal.

A twenty-ninth invention of the present invention for solving the aforementioned problem is a terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, comprising a storage function block in which disposition information of buildings in communication ranges of the radio stations has been stored; a first function block for depicting two curves to calculate two intersection points between the two curves as two candidate points for the geographical location of the radio terminal by the use of propagation time of radio signals between the two radio stations and the first radio terminal; and a second function block for estimating the effect of a shield of a building based on said disposition information to determine, if one of the candidate points cannot receive the signal from at least one of the radio stations, the other candidate point as the location of the radio terminal.

In accordance with a thirtieth invention of the present invention for solving the aforementioned problem, a function block for calculating said two candidate points is capable of measuring propagation time of radio signals between said radio stations and said radio terminal, wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

The function block for calculating two candidate points, as used herein, includes a function block for depicting two curves to calculate two intersection points between the two curves as two candidate points of the geographical location of the radio terminal by the use of propagation time of radio signals between the two radio stations and the radio terminal, and depicting the two curves to estimate the two intersection points between the two curves as the two candidate points of the geographical location of the radio terminal by the use of the propagation time of the radio signals between the two radio stations and the radio terminal.

In accordance with a thirty-first invention of the present invention for solving the aforementioned problem, when a function block for calculating said two candidate points is capable of measuring propagation time of a radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points of said radio terminal.

In accordance with a thirty-second invention of the present invention for solving the aforementioned problem, in a mobile communication network comprising at least one said radio terminal and at least two base stations, in which one the base station forms a plurality of communication ranges, and said radio terminal and the base stations existing in the communication ranges conduct radio communication, said two radio stations are the base stations.

In accordance with a thirty-third invention of the present invention for solving the aforementioned problem, in said mobile communication network, said radio terminal has means for receiving a signal from a GPS satellite, and one of said radio stations is said base station, the other of said radio stations being the GPS satellite.

In accordance with a thirty-fourth invention of the present invention for solving the aforementioned problem, said radio terminal has a function block to receive a signal from a GPS satellite, said radio stations being the GPS satellites.

### [Effects of the Invention]

The present invention has an excellent effect that the location of a terminal may be specified with a high degree of accuracy even in an environment in which the grand total of the number of base stations and GPS satellites that can be measured is only two stations.

### [Best Mode for Carrying Out the Invention]

Hereinafter, an embodiment of the present invention will be described with the use of the drawings.

A hyperbola is found from the difference between reception time of signals from base stations in a terminal and the reception time of the signals from the base stations, and a circle is found from round-trip propagation time between the base stations and the terminal. Intersection points between the hyperbola and the circle are calculated to find two candidate points. Since the terminal is located in a sector, the candidate points existing in the range of the sector are determined as the location of the terminal.

### Hereinafter, specific embodiments will be described.

### (Embodiment 1)

An embodiment 1 of the present invention will be described with reference to the drawings.

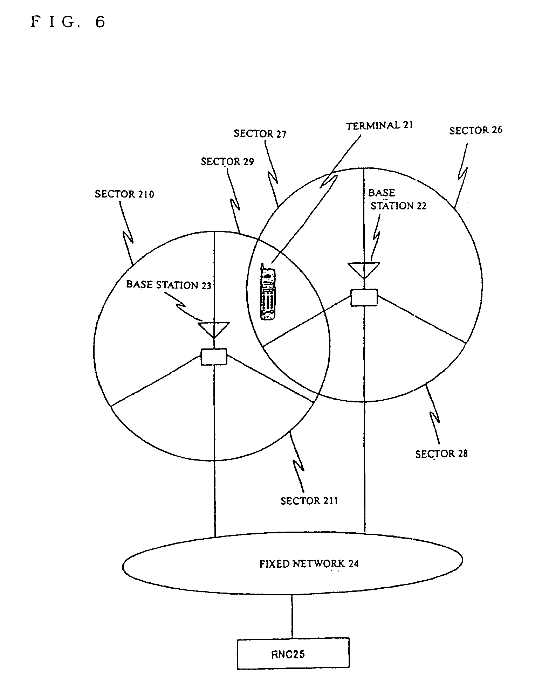

Fig. 6 is a drawing showing a mobile communication network in outline.

The mobile communication network comprises a terminal 21, a base station 22, a base station 23, a fixed network 24, and an RNC 25. When conducting communication, the terminal 21 establishes a connection with the RNC 25 through a radio link established with the base station 22 or the base station 23.

The base station 22 and the base station 23 are connected to the fixed network 24, and controlled by the RNC 25. In addition, the base stations 22 and 23 form a plurality of communication areas (hereinafter, referred to as sectors), for example, the base station 22 forms sectors 26, 27, and 28, whereas the base station 23 forms sectors 29, 210, and 211, and each sector is distinguished by scrambling code. Furthermore, the base stations 22 and 23 continuously transmit signals scrambled in the scrambling code in which predetermined signals are given for each sector with respect to sectors that each base station has, as pilot signals.

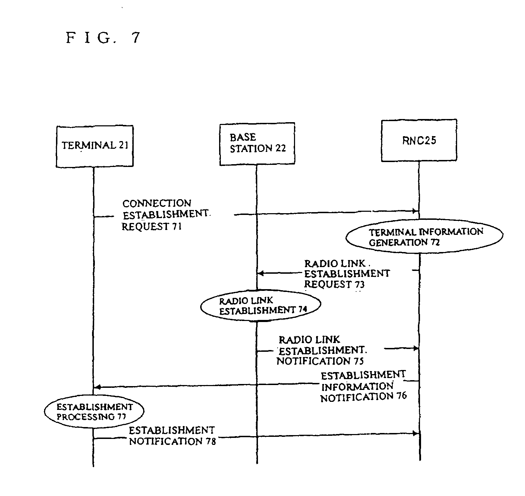

Fig. 7 is a drawing showing the flow of processing until a connection is established between the terminal 21 and the RNC 25.

In the case of establishing the connection between the terminal 21 and the RNC 25, the terminal 21 requests the RNC 25 to provide information necessary for establishing the connection (Step 71). At this time, the terminal ID of the terminal 21 (in the case of this embodiment, "0901234567), and scrambling code number (in the case of this embodiment, "178") used by a sector in which the terminal 21 is located are notified to the RNC 25.

The RNC 25 having received the request from the terminal 21 generates terminal information 30 by associating the terminal ID notified at the same time as the request with the scrambling code number used by the sector in which the terminal 21 is located (Step 72).

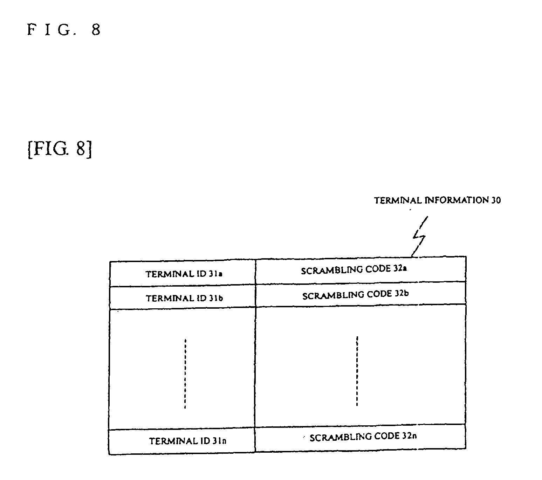

Fig. 8 is a drawing showing the terminal information 30 generated by the RNC 25.

The terminal information 30 is kept relating terminal IDs 31a to 31n specific for terminals which have established connections to scrambling code number 32a used by the sector in which the terminal is located, and generated when the terminal 21 establishes the connection with the RNC 25.

The RNC having completed the generation of the terminal information requests the base station 22 forming a sector 27 to establish a radio link with the terminal 21 (Step 73).

The base station 22 having received the request for the establishment of the radio link reserves resources for a new radio link, and sets different types of parameters (Step 74). Incidentally details of processing performed in the base station 22 have no direct relation to the description of the present embodiment, so that the detailed description will be omitted.

The base station 22 having completed to reserve the resources and to set the different types of parameters notifies the RNC 25 of the establishment of the radio link (Step 75).

The RNC 25 having ensured the establishment of the radio link notifies the terminal 21 of information necessary for the establishment of the connection (Step 76). Incidentally details of the information necessary for the establishment of the connection have no direct relation to the description of the present embodiment, so that the detailed description will be omitted.

The terminal 21 having received the information necessary for the establishment of the connection from the RNC 25 establishes the connection based on the received information (Step 77). Incidentally details of processing performed in the terminal 21 at the time of the establishment of the connection have no direct relation to the description of the present embodiment, so that the detailed description will be omitted.

Upon completion of the establishment of the connection, the terminal 21 notifies the RNC 25 of the information on the established connection (Step 78).

Incidentally, while the present embodiment assumes that the terminal information 30 is generated when the terminal 21 requests the RNC 25 to provide the information necessary for the establishment of the connection, the present procedure is an example, and the terminal information 30 may be generated in the case where the completion of the connection establishment is notified by the terminal 21.

Fig. 9 is a diagram showing the flow of processing in the generation of the terminal information 30 when the completion of the establishment of the connection is notified by the terminal 21.

Additionally, in accordance with the present embodiment, the terminal information 30 relates the scrambling code number used by the sector in which the terminal is located for each terminal ID, but a method for organizing the terminal IDs for each scrambling code number can be considered.

Fig. 10 is a drawing showing terminal information 30-1 for the case of organizing the terminal IDs for each scrambling code number.

Information on the geographical location of the base stations 22 and 23 and sectors formed by each base station is generated when each base station is located, and kept by the RNC 25 as base station information 40.

Fig. 11 is a diagram showing an example of the base station information 40 kept by the RNC 25.

The information on the base stations is kept relating the following information to base station IDs 41a to 41n specific for the base stations.
(1) Latitude 42a
(2) Longitude 43a
(3) Scrambling code 44a_1 to 44a_X
(4) Center direction of sectors 45a_1 to 45a_X
The latitude 42a and the longitude 43a indicate the geographical location of a base station with a base station ID 41a.

The scrambling code 44a_1 to 44a_X indicate scrambling code number used by each sector which are formed by the base station with the base station ID 41a. The center direction of the sectors 45a_1 to 45a_X indicate angles with respect to the true north of the center direction of the sectors formed by the base station with the base station ID 41a.

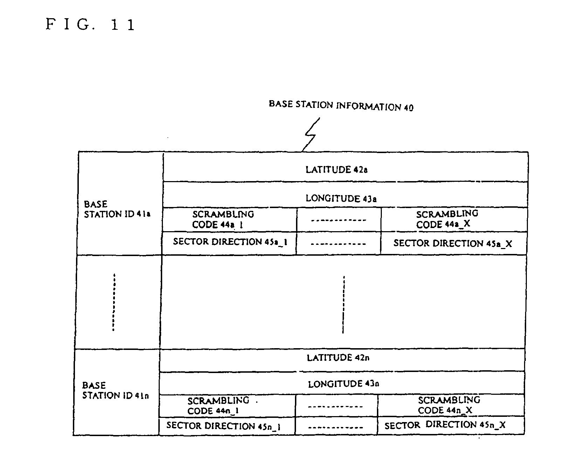

Incidentally, the base station information 40 shown in Fig. 11 is an example, and it can be considered that each sector has information.

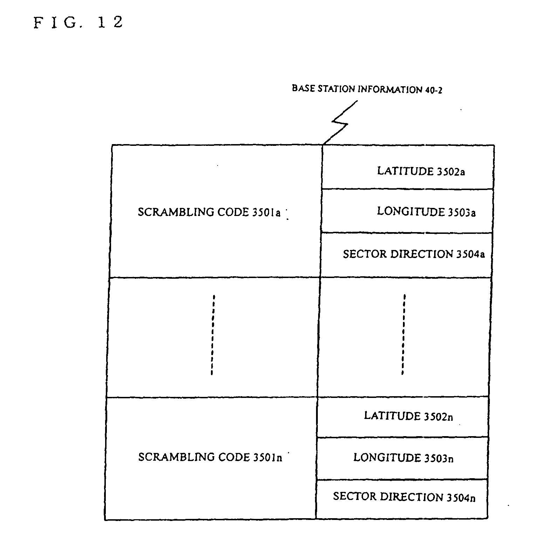

Fig. 12 is a drawing showing base station information 40-2 for the case where each sector has information.

Latitude 3502a to 3502n and longitude 3503a to 3503n indicate the location of antennas forming sectors.

Additionally, in accordance with the present embodiment, while the direction of sectors are represented as the center direction of the sectors, it is possible to represent the direction of the sectors using the starting angle of the sectors.

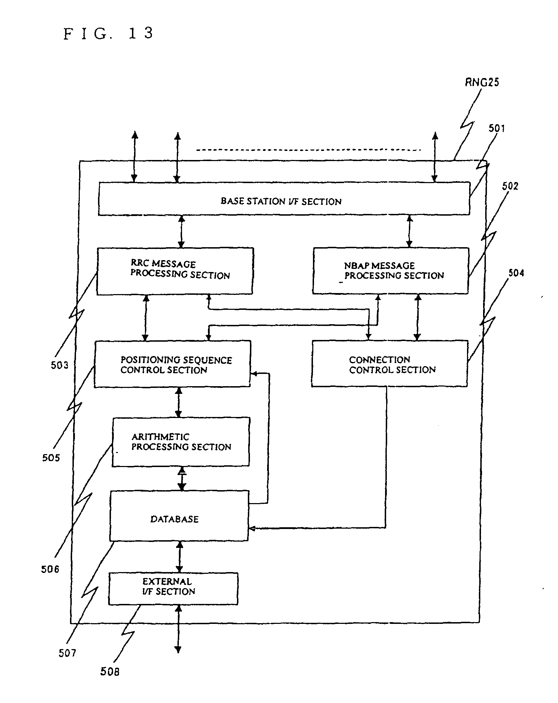

Fig. 13 is a drawing showing a configuration diagram of the RNC 25. It should be noted that the configuration diagram illustrates only the configuration involved in the present embodiment.

A base station I/F section 501 is an interface between a plurality of base stations connected to the RNC 25. An NBAP message processing section 502 has a function to process messages exchanged between the RNC 25 and the base stations, transmits the messages to the base stations in accordance with the control of a connection control section 504 and a positioning sequence control section, and notifies the connection control section 504 and the positioning sequence control section of the receipt of the messages from the base stations. An RRC message processing section 503 transmits the messages to the terminal in accordance with the control of the connection control section 504 and the positioning sequence control section 505, and notifies the connection control section 504 and the positioning sequence control section of the receipt of the messages from the terminal. The connection control section 504 has a function to control the connection between the terminal and the RNC 25, communicates with the base stations through the NBAP message processing section 502, and communicates with the terminal through the RRC message processing section 503. In addition, the connection control section 504 generates the terminal information 30 upon establishment of the connection, and stores the generated terminal information 30 in database 507.

The positioning sequence control section 505 has a function to control a procedure for specifying the location of a terminal, communicates with the base stations through the NBAP message processing section 502, and communicates with the terminal through the RRC message processing section 503. In addition, the positioning sequence control section 505 has a function to notify an arithmetic processing section 506 of measurement results received from the terminal and the base stations. Furthermore, the positioning sequence control section 505 refers to the database 507 in order to generate information (hereinafter, referred to as supplementary information) necessary for measurement with respect to the terminal and the base stations.

The arithmetic processing section 506 performs arithmetic processing for specifying the location of the terminal based on measurement results in the terminal and the base stations notified from the positioning sequence control section. Incidentally, the arithmetic processing section 506 refers to the database 507 in the case where it requires to refer to the terminal information 30 and the base station information 40 when specifying the location of the terminal.

The database 507 keeps the terminal information 30 notified from the connection control section, the base station information 40 notified through an external I/F 508, and the like, and notifies the terminal information 30 and the base station information 40 that the database 507 keeps at the request of the positioning sequence control section 505, the connection control section 504, and the arithmetic processing section 506. The external I/F section 508 is an interface used in accumulating information in the database 507 from outside of the fixed network 24.

Hereinafter, a specific principal of the location of the terminal in accordance with the present embodiment will be described with reference to the drawings.

Incidentally, it is assumed that the database 507 of the RNC 25 stores information of the form shown in Fig. 8 as terminal information, and information on the base station 22 and the base station 23 of the form shown in Fig. 11 as the base station information.

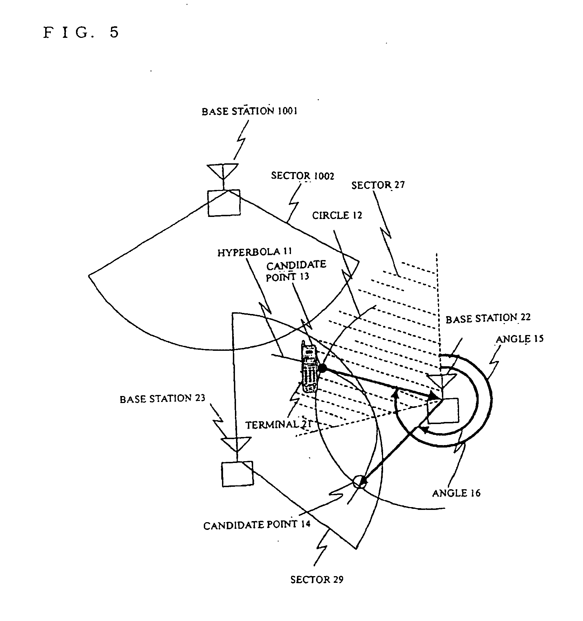

Fig. 5 is a drawing showing the principal of specifying the location of the terminal 21 in accordance with the present embodiment. Incidentally, it is assumed that a connection is established between the terminal 21 and the RNC 25 through the base station 22, and that the RNC 25 keeps the terminal information 30 on the terminal 21 and the base station information 40 on the base stations 22 and 23 in the database 507.

The terminal 21 measures the reception time of pilot signals transmitted by the base stations 22 and 23, finds a difference of distance calculated from a difference of the measured reception time of the pilot signals transmitted by the base stations 22 and 23, and finds a circle 12 with the distance between the base station 22 and the terminal 21 calculated from a hyperbola 11a obtained from the difference of the calculated distance, and the round-trip propagation time between the base station 22 in which the radio link has been established with the terminal 21, and the terminal 21 as a radius. Subsequently, the terminal 21 determines two intersection points between the hyperbola 11 and the circle 12 as candidate points 13 and 14, and calculates angles 15 and 16 which straight lines connecting each candidate point and the base station 22 form with the true north.

Then, the terminal 21 refers to the terminal information 30 to obtain information on the sector in which the terminal 21 is located, and refers to the base station information 40 to obtain a center direction of the sector 27 in which the terminal is located. After that, the terminal 21 compares the center direction of the sector with the angles 15 and 16 to specify the candidate point 13 having the angle 15 with an angle close to the center direction of the sector as the location of the terminal 21.

Incidentally, if information showing the direction of the sector 27 stored in the base station information 40 is the starting angle of the sector 27, the terminal 21 compares the angles 15 and 16 with the starting angle of the sector 27 to specify the candidate point having a larger angle than the starting angle of the sector 27 as the location of the terminal 21.

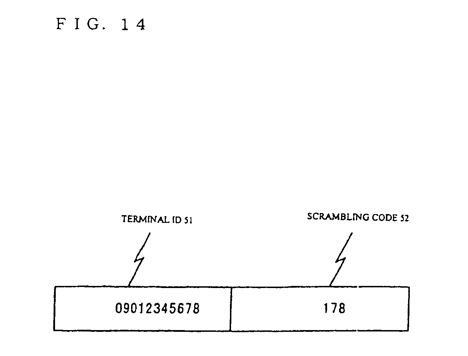

Fig. 14 is a diagram showing terminal information on the terminal 21 kept by the RNC 25.

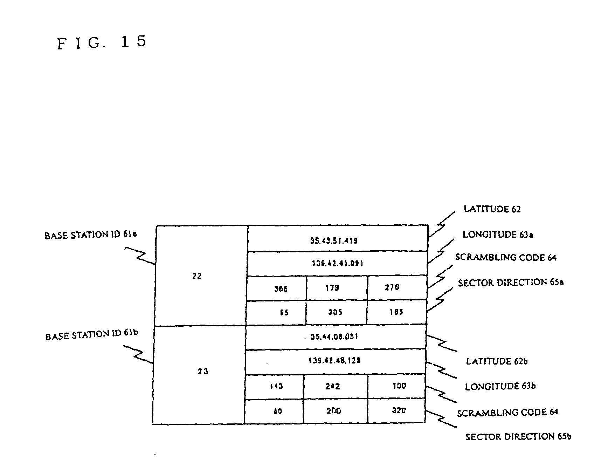

Also, Fig. 15 is a diagram showing base station information 60 on the base stations 22 and 23 kept by the RNC 25.

Hereinafter, an example of a procedure until the location of the terminal 21 is specified will be described with reference to the drawings.

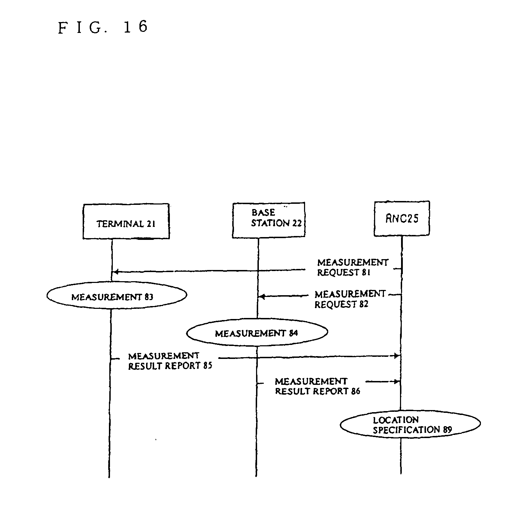

Fig. 16 is a diagram showing an example of a procedure until the location of the terminal 21 is determined.

In the case of determining the location of the terminal 21, the RNC 25 transmits a message requesting measurement for collecting information necessary for determining the location to the terminal 21 (Step 81). Specifically, the RNC 25 requests the terminal 21 to measure a difference of the reception time of pilot signals transmitted to each of the sectors 27, 29, and a sector 1002 with different base stations. At this time, the RNC 25 notifies the terminal 21 of scrambling code number of a sector serving as a reference and scrambling code number used by a sector to be measured other than the sector serving as a reference as the supplementary information.

A sector to which information to be notified as the supplementary information is notified is selected as follows.
(1) A sector in which a sector terminal serving as a reference has established a radio link
   In the case of the present embodiment, this sector is the sector 27.
(2) Sectors not serving as a reference
   The sectors are sectors formed by base stations different from the sector serving as a reference because a terminal is adjacent to the sector in which the radio link has been established to cause overlapped communication ranges. In the case of the present embodiment, the sectors are the sector 27 and a sector 1001.

In the case of the present embodiment, informed are scrambling code number used by the sector 27 as the scrambling code number of the sector serving as a reference, scrambling code number used by the sector 29 as scrambling code number used by the sector to be measured other than the sector serving as a reference, and scrambling code number used by a sector 1002.

In addition, the RNC 25 transmits the message requesting the measurement for collecting the information necessary for determining the location to the base station 22 (Step 82). Specifically, the RNC 25 requests the base station 22 to measure the round-trip propagation time between the terminal 21 and the base station 22. At this time, the terminal ID of the terminal 21 to be measured is notified to the base station 22.

Details of the processing in the terminal 21 having received the measurement request (Step 83) will be described below.

The terminal 21 having received the measurement request measures the reception time of the pilot signals received from each of sectors (in the case of the present embodiment, sectors 27, 29, and 1002) specified by the RNC 25. Incidentally, the present embodiment assumes that the terminal 21 cannot receive the pilot signal from the sector 1002 for some reason. The reason that the terminal 21 cannot receive the signal from the sector 1002 includes the effects of the distance between the terminal 21 and a base station 1001, and a shield such as a building.

Upon completion of the measurement of the reception time, the terminal 21 calculates a difference of the reception time based on the reception time from the sector 27 specified to serve as a reference in the notified supplementary information.

Upon completion of the calculation of the reception time, the terminal 21 transmits the calculated results to the RNC 25 (Step 85). Incidentally, the present embodiment assumes that the pilot signal from the sector 1002 cannot be received, so that only one difference of the reception time is reported.

The base station 22 having received the measurement request transmits a signal to a terminal (in the case of the present embodiment, the terminal 21) specified by the RNC 25, measures the round-trip propagation time of the signal between the terminal 21 and the base station 22 (Step 84), and transmits the measured round-trip propagation time to the RNC 25 (Step 86).

In Step 89, the RNC 25 specifies the location of the terminal 21. Hereinafter, a method for specifying the location of the terminal 21 will be described with reference to the drawings.

In the RNC 25 having received the measurement results in the terminal 21 and the base station 22, the arithmetic processing section 506 specifies the location of the terminal 21 using the measurement results.

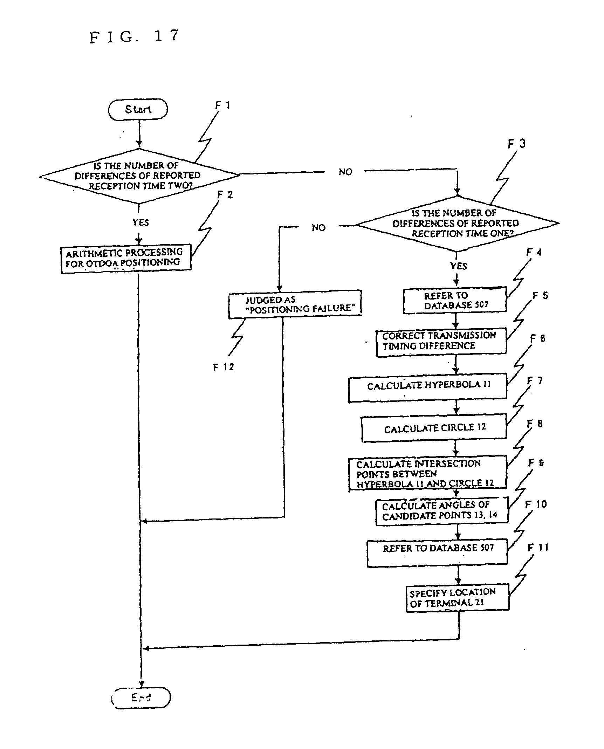

Fig. 17 is a drawing showing the flow of the processing in the arithmetic processing section 506 of the RNC 25.

The arithmetic processing section 506 checks the contents of the measurement results reported by the terminal 21 (F1, and F3). Specifically, the arithmetic processing section 506 checks the number of differences of the measured reception time. If the number of differences is two or more, which means to have received signals from three or more base stations, performs arithmetic processing for OTDOA positioning (F2). If no difference of the reception time is reported, the arithmetic processing section 506 recognizes as a positioning failure (F12).

If the difference of the reception time reported from the terminal 21 is one, the arithmetic processing section 506 refers to the base station information 30 kept in the database 507 to obtain latitude 62a, longitude 63a, latitude 62b, and longitude 63b of the base station information 30 on the base stations 22 and 23 to which the sector 27 and the sector 29 which have succeeded in the measurement of the differences of the reception time belong (F4).

The difference of the reception time reported from the terminal 21 is corrected by a difference of transmission time (F5). While some methods for measuring the amount of the correction can be considered, the description will be omitted in the present embodiment.

When the location of the base stations 22 and 23 is specified, the arithmetic processing section 506 finds a difference of the distance between the base station 22 and the terminal 21 and the distance between the base station 23 and the terminal 21 from the difference of the reception time, the measurement results to calculate the hyperbola 11 centering on the base stations 22 and 23 using the difference of the calculated distance (F6).

Then, the arithmetic processing section 506 finds the distance between the terminal 21 and the base station 22 from the round-trip propagation time reported from the base station 22 to calculate the circle 12 with the calculated distance as a radius, and with a focus on the points of the latitude 62a and the longitude 63a indicating the geographical location of the base station 22 obtained in F4 (F7).

Two points of the candidate points 13 and 14 for the location of the terminal 21 are obtained by finding intersection points 13 and 14 between the thus calculated hyperbola 11 and the circle 12 (F8), and the angle 15 and the angle 16, angles which straight lines connecting the calculated two candidate points and the location of the base station 22 form with the true north are found (F9). The present embodiment assumes that the angle 15 is 280 degrees, whereas the angle 16 is 200 degrees.

Upon completion of the calculation of the candidate points and the angles, the arithmetic processing section 506 refers to the base station information 30 kept in the database 507 to obtain a center direction 65b (in this case, "305") of a sector using scrambling code number 52 (F10).

The arithmetic processing section 506 compares the center direction 65b obtained as the center direction of the sector 27 in which the terminal 21 is located with the angle 15 and the angle 16 to determine the location of the candidate point having an angle close to the angle indicating the center direction of the sector 27 as the location of the terminal 21. In accordance with the present embodiment, the angle 15 is closer to the center direction of the sector 27, 305 degrees, so that the location of the terminal 21 is specified as the candidate point 13 (F11).

Next, other aspect 1 of the embodiment 1 will be described with reference to the drawings.

The procedure for specifying the location of the terminal 21 described in the embodiment 1 is an example, and other procedures can be considered.

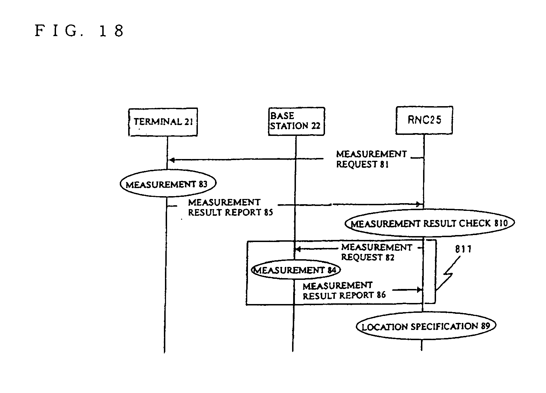

Fig. 18 is a diagram showing a procedure until the location of a terminal 21 in accordance with an embodiment 2 is determined.

In the case of determining the location of the terminal 21, the RNC 25 transmits the message requesting the measurement for collecting the information necessary for determining the location (Step 81). At this time, the RNC 25 notifies the information necessary for the measurement as the supplementary information. Incidentally, the supplementary information to be notified is identical to that in the embodiment 1, so that the description will be omitted.

The terminal 21 having received the measurement request performs the requested measurement, and reports the measurement results to the RNC 25 (Step 85). Incidentally, details of the measurement in the terminal 21 are identical to those in the present embodiment, so that the description will be omitted.

The RNC 25 having received the measurement results from the terminal 21 checks the reported measurement results. Specifically, the RNC 25 checks the number of differences of the reception time when the measurement has succeeded. If the number of differences of the reception time when the measurement has succeeded is 2, the RNC 25 executes Step 89. In this case, in Step 89, the arithmetic processing for OTDOA positioning is executed.

If the number of differences of the reception time when the measurement has succeeded is 0, the RNC 25 recognizes as having failed in specifying the location of the terminal 21 to complete the processing.

If the number of differences of the reception time when the measurement has succeeded is 1, the RNC 25 executes the step shown in 811 of Fig. 18, and then executes Step 89.

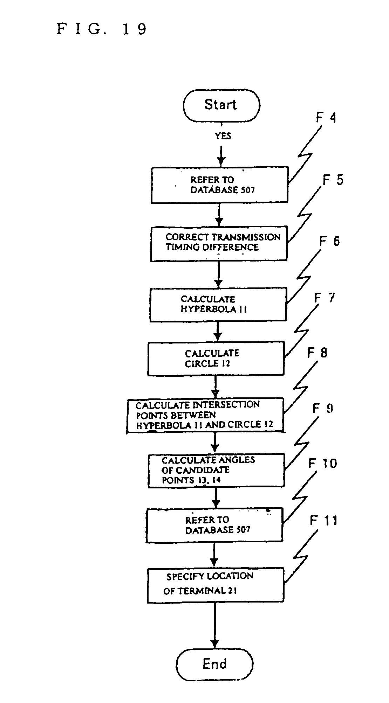

Fig. 19 is a drawing showing the flow of the processing in the arithmetic processing section 506 of the RNC 25 in Step 89 described above.

Incidentally, the processing in F4 to F11 of Fig. 19 is identical to the processing described in the present embodiment, so that the description will be omitted here.

Furthermore, other aspect 2 of the embodiment 1 will be described.

While the aforementioned embodiment has described that the center direction of the sector is stored in the base station information 40 in the description of the flow of the processing in the arithmetic processing section 506 of the RNC 25, the processing in F11 is changed if the starting angle of the sector is stored,.

If the starting angle of the sector is stored in the base station information 40, the obtained starting angle is compared with the angle 15 and the angle 16 to determine the location of the candidate point having a larger angle than the starting angle as the location of the terminal 21 in F11. In accordance with the present embodiment, the angle 15 has a larger angle than the starting angle of the sector 27, so that the location of the terminal 21 is specified as the candidate point 13.

Furthermore, other aspect 3 of the embodiment 1 will be described.

While the aforementioned embodiment has described that, when one of the candidate points is specified as the location of the terminal 21, the center direction or the starting angle of the sector stored in the base station information 40 is referred, the angle of the terminal 21 may be specified using the supplementary information notified to the terminal 21.

Whereat, the arithmetic processing section 506 of the RNC 25 refers to the database 507 to obtain the latitude/longitude of the base station 1001 having failed in the measurement to calculate an angle which a straight line connecting the location of the base station 22 specified as the base station serving as a reference and the location of the base station 1001 having a sector which has failed in the measurement forms with the true north to obtain a sector direction of the sector specified as the base station serving as a reference.

The arithmetic processing section 506 of the RNC 25 compares the calculated center direction of the sector with the angle 15 and the angle 16 to determine the location of the candidate point having an angle close to the angle indicating the center direction of the sector as the location of the terminal 21. In accordance with the present embodiment, the angle 15 is closer to the calculated center direction of the sector 27, so that the location of the terminal 21 is specified as the candidate point 13 (F11).

### (Embodiment 2)

An embodiment 2 of the present invention will be described with reference to the drawings.

While the aforementioned Embodiment 1 has described a case in which the RNC 25 performs the arithmetic processing to determine the location of the terminal 21, it can be considered that the terminal 21 performs the arithmetic processing for determining its location. Whereat, an example in which the terminal 21 performs the arithmetic processing for determining its location will be described.

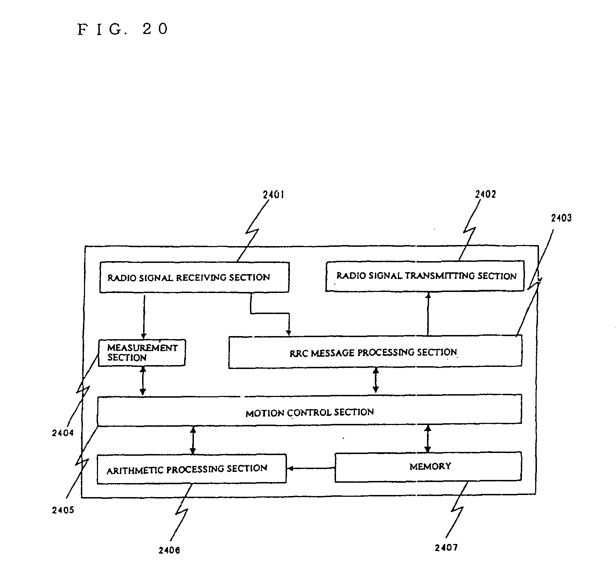

Fig. 20 is a block diagram showing the configuration of the terminal 21 having a function to perform arithmetic processing. It should be noted that the drawing illustrates only the configuration necessary for the description of the present embodiment.

A radio signal receiving section 2401 has a function to receive signals transmitted from base stations, and a radio signal transmitting section has a function to transmit radio signals to the base stations.

An RRC message processing section 2403 processes a message received from RNC through the radio signal receiving section 2401, and notifies a motion control section 2405 of the receipt of the message. In addition, the RRC message processing section 2403 generates a message in accordance with the instructions of the motion control section 2405, and transmits the message to the RNC through the radio signal transmitting section 2402.

A measurement section 2404 measures the reception time of pilot signals from the base stations in accordance with the instructions of the motion control section 2405, and notifies the measurement results to the control section.

Upon notification of the receipt of the message from the RRC message processing section, the motion control section 2405 keeps supplementary information contained in the message in memory 2407 to control the measurement section 2404 in order to execute the requested measurement. In addition, the motion control section 2405 notifies an arithmetic processing section 2406 of the reception time measured by the measurement section 2404.

The arithmetic processing section 2406 performs the arithmetic processing for specifying its own location based on the measurement results notified from the motion control section 2405 and the supplementary information kept in the memory 2407.

Hereinafter, a procedure for processing until the location of the terminal 21 is specified will be described with reference to the drawings.

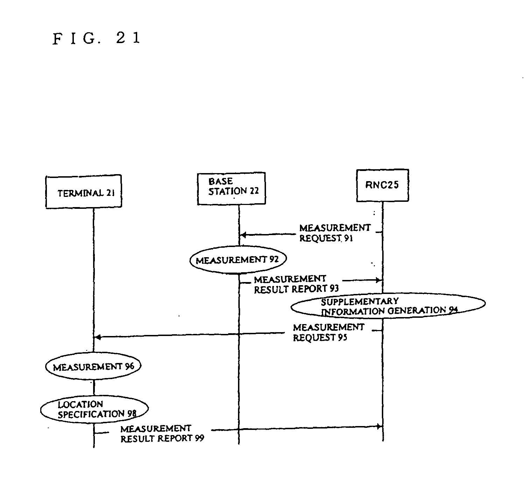

Fig. 21 is a diagram showing an example of the flow of processing for the case where the terminal 21 performs the arithmetic processing for determining its own location.

The RNC 25 requests the base station 22 to perform measurement necessary for determining the location of the terminal 21 (Step 91). Incidentally, this step is identical to Step 82 in the first embodiment.

The base station 22 having received the request from the RNC 25 transmits a signal to the terminal (in the case of the present embodiment, terminal 21) specified by the RNC 25, measures the round-trip propagation time of the signal between the terminal 21 and the base station 22 from the difference between the time when the base station 22 has received a response from the terminal and the time when the base station 22 has transmitted the signal (Step 92), and transmits the measured round-trip propagation time to the RNC 25 (Step 93). Incidentally, Step 91 is identical to Step 84 in the first embodiment, Step 92 being identical to Step 86 in the first embodiment.

The RNC 25 having received the measurement results from the base station 22 generates supplementary information necessary for performing measurement and arithmetic processing with respect to the terminal 21 (Step 94). The supplementary information to be generated will be described below.

The supplementary information generated by the RNC 25 includes the following information: scrambling code number used by a sector serving as a reference, and scrambling code number used by a sector in which the terminal 21 is located are set. In the case of the present embodiment, a connection established between the terminal 21 and the RNC 25 uses a radio link established with the base station 22, and the terminal 21 is located in the sector 27, so that the scrambling code number used by the sector 27 is set.
(1) Round-trip propagation time between a base station serving as a reference and a terminal
   In the case of the present embodiment, the round-trip propagation delay time between the base station 22 and the terminal 21 is set.
(2) Latitude and longitude of a base station forming a sector serving as a reference
   In the case of the present embodiment, the latitude/longitude of a base station 23 and the latitude/longitude of a base station 1001 are set.
(3) Scrambling code number used by a sector not serving as a reference
   In the case of the present embodiment, scrambling code number used by a sector 29 and a sector 1002 are set.
(4) Difference between the latitude/longitude of a base station forming a sector not serving as a reference and the latitude/longitude of a base station serving as a reference
   In the case of the present embodiment, the difference between the latitude/longitude of the base stations 23 and 1001, and the latitude/longitude of the base station 22 is set.
(5) Difference of transmission timing between a sector serving as a reference and a sector not serving as a reference
   In the case of the present embodiment, the transmission timing of the sector 29 and the sector 1002 with the transmission timing of the sector 27 as a reference is notified.

Upon completion of the generation of the supplementary information, the RNC 25 requests the terminal 21 to perform positioning (Step 95). At the same time, the RNC 25 notifies the supplementary information generated in Step 95.

The terminal 21 having received the positioning request from the RNC 25 performs measurement with reference to the supplementary information transmitted together (Step 96). In the case of the present embodiment, the difference between the reception time of a pilot signal received from the sector 27 and the reception time of a pilot signal received from the sector 29 is measured. The present embodiment assumes that the terminal 21 cannot receive a pilot signal from the sector 1002 for some reason. The reason that the terminal 21 cannot receive the signal from the sector 1002 includes the effects of the distance between the terminal 21 and the base station 1001, and a shield such as a building. And, the supplementary information is stored in the memory 2407.

In Step 98, the terminal 21 performs processing for specifying its own location. Hereinafter, details of the processing will be described with reference to the drawings.

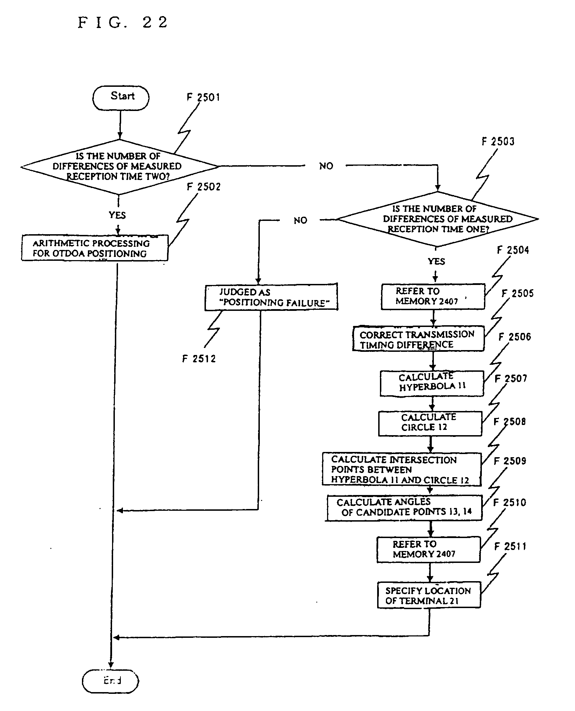

Fig. 22 is a drawing showing the flow of processing executed in the arithmetic processing section 2406 of the terminal 21.

The arithmetic processing section 2406 checks the contents of the measurement results (F2501 and F2503). Specifically, the arithmetic processing section 2406 checks the number of differences of the measured reception time. If the number of differences is 2, which means to have received signals from three base stations, the arithmetic processing section 2406 performs arithmetic processing for OTDOA positioning (F2502). If no difference of the reception time is reported, the arithmetic processing section 2406 recognizes as a positioning failure (F2512).

If the number of differences of the measured reception time is one, the arithmetic processing section 2406 obtains the latitude/longitude indicating the location of the base stations 22 and 23, which are notified as the supplementary information and stored in the memory 2407 (F2504). In addition, the arithmetic processing section 2406 obtains information on a difference of transmission time and information on the round trip propagation time between the base station 22 and the terminal 21.

The difference of the measured reception time is corrected by the difference of the transmission time obtained in F2504 (F2505).

When the location of the base stations 22 and 23 is specified, the arithmetic processing section 2406 finds the difference between the distance between the base station 22 and the terminal 21 and the distance between the base station 23 and the terminal 21 from the measurement results to calculate the hyperbola 11 with a focus on the base stations 22 and 23 using the difference of the calculated distance (F2505).

Then, the arithmetic processing section 2406 finds the distance between the terminal 21 and the base station 22 from the round-trip propagation time obtained in F2504 to calculate a circle 12 with the calculated distance as a radius and with a focus on the base station 22 (F2507).

The arithmetic processing section 2406 obtains two points of candidate points 13 and 14 for the location of the terminal 21 by finding intersection points 13 and 14 between the thus calculated hyperbola 11 and the circle 12 (F2508), and finds an angle 15 and an angle 16, angles which straight lines connecting the calculated two candidate points and the location of the base station 22 form with the true north (F2509).

Hereinafter, details of processing in F2511 will be described.

Upon completion of the calculation of the angles, the arithmetic processing section 2406 refers to the memory 247 to obtain the latitude/longitude of the base station 1001 having failed in the measurement to calculate an angle which a straight line connecting the location of the base station 22 specified as the base station serving as a reference and the location of the base station 1001 having a sector which has failed in the measurement forms with the true north to obtain a sector direction of the sector specified as the base station serving as a reference. The present embodiment assumes that the center direction of the sector 27 has been calculated to be 300 degrees.

The arithmetic processing section 2406 compares the calculated center direction of the sector with the angle 15 and the angle 16 to determine the location of the candidate point having an angle close to the angle indicating the center direction of the sector as the location of the terminal 21. In accordance with the present embodiment, the angle 15 is closer to the center direction of the sector 27, 300 degrees, so that the location of the terminal 21 is specified as the candidate point 13.

Finally, the terminal 21 reports the information on its own location specified to the RNC 25 (Step 99).

Next, other aspect 1 of the embodiment 2 will be described with reference to the drawings.

A specific procedure for the location of the terminal 21 includes other procedures.

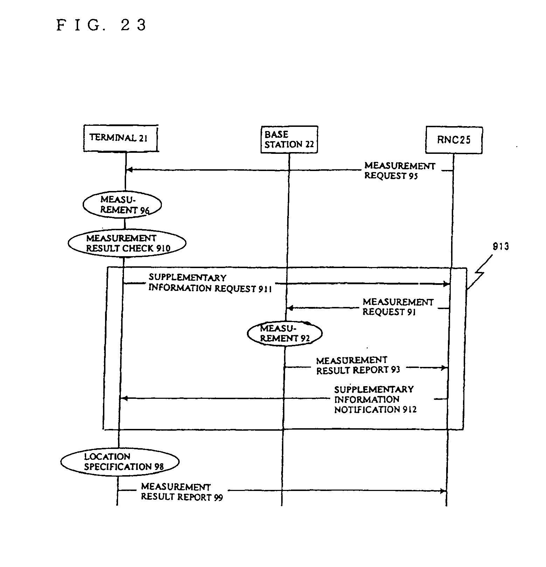

Fig. 23 is a drawing showing another example of the procedure until the location of the terminal 21 is determined.

In the case of specifying the location of the terminal 21, the RNC 25 requests the terminal 21 to perform a positioning request (Step 95). At the same time, it notifies the supplementary information necessary for the positioning. Hereinafter, details of information contained in the supplementary information will be described.
(1) Scrambling code number used by a sector serving as a reference
   The scrambling code number used by the sector in which the terminal 21 is located is set. In the case of the present embodiment, the connection established between the terminal 21 and the RNC 25 uses the radio link established with the base station 22, and the terminal 21 is located in the sector 27, so that the scrambling code number used by the sector 27 is set.
(2) Latitude and longitude of a base station forming a sector serving as a reference
   In the case of the present embodiment, the latitude/longitude of the base station 23 and the latitude/longitude of the base station 1001 are set.
(3) Scrambling code number used by a sector not serving as a reference
   In the case of the present embodiment, the scrambling code number used by the sector 29 and the sector 1002 are set.
(4) Difference between the latitude/longitude of a base station forming a sector not serving as a reference and the latitude/longitude of a base station serving as a reference
   In the case of the present embodiment, the difference between the latitude/longitude of the base stations 23 and 1001, and the latitude/longitude of the base station 22 is set.
(5) Difference of transmission timing between a sector serving as a reference and a sector not serving as a reference
   In the case of the present embodiment, the transmission timing between the sector 29 and the sector 1002 with the transmission timing of the sector 27 as a reference is notified.

The terminal 21 having received the positioning request from the RNC 25 performs measurement with reference to the supplementary information transmitted together (Step 96). In the case of the present embodiment, the difference between the reception time of a pilot signal received from the sector 27 and the reception time of a pilot signal received from the sector 29 is measured. The present embodiment assumes that the terminal 21 cannot receive a pilot signal from the sector 1002 for some reason. The reason that the terminal 21 cannot receive the signal from the sector 1002 includes the effects of the distance between the terminal 21 and the base station 1001, and a shield such as a building. And, the notified supplementary information is stored in the memory 2407.

Upon completion of the measurement, the terminal 21 checks the measurement results (Step 910). Specifically, the terminal 21 checks the number of differences of the reception time when the measurement has been accomplished. If the number of differences measured is two, the terminal 21 performs the processing in Step 98 without performing the processing shown in 913 in the drawing. If there is no measured difference, it executes Step 99 without performing the processing in Steps 911 and 98. Incidentally, at this time, "a positioning failure" is reported as a positioning result.

If the measured difference is one, the terminal 21 executes the processing in 913 in the drawing. Hereinafter, the processing in 911 will be described.

The terminal 21 notifies the RNC 25 of the supplementary information necessary for specifying its own location (Step 911). Specifically, the terminal 21 requests the round-trip propagation time between the base station 22 and the terminal 21 in which the radio link has been established.

The RNC 25 having received the request from the terminal 21 transmits a measurement request to the base station 22 (Step 91).

The base station 22 having received the request from the RNC 25 transmits a signal to the terminal (in the case of the present embodiment, terminal 21) specified by the RNC 25, measures the round-trip propagation time of the signal between the terminal 21 and the base station 22 from the difference between the time when the base station 22 has received a response from the terminal and the time when the base station 22 has transmitted the signal (Step 92), and transmits the measured round-trip propagation time to the RNC 25 (Step 93). Incidentally, Step 91 is identical to Step 84 in the first embodiment, Step 92 being identical to Step 86 in the first embodiment.

The RNC 25 having received the measurement results from the base station 22 notifies the terminal 21 of the round-trip propagation time reported from the base station 22 as the supplementary information (Step 912).

In Step 98, the terminal 21 performs processing for calculating the candidate points for its own location. Hereinafter, details of the processing in the present modification will be described with reference to the drawings.

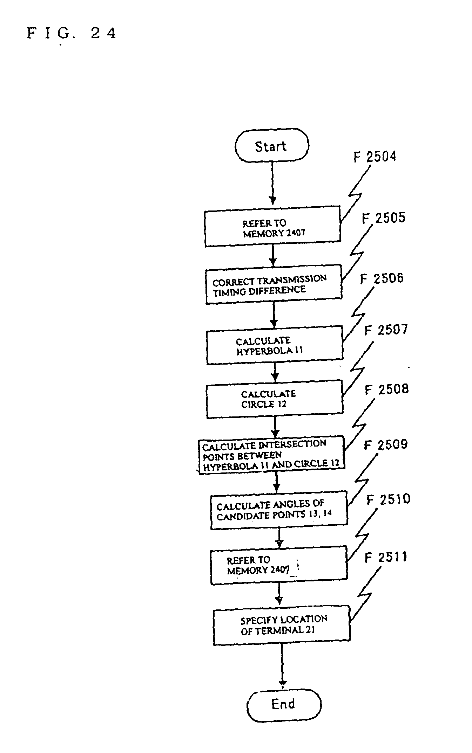

Fig. 24 is a drawing showing the flow of processing executed by the arithmetic section 2406 of the terminal 21.

Incidentally, the processing in F2504 to F2511 in Fig. 24 is identical to the processing described in the second embodiment, so that the description will be omitted here.

Then, other aspect 2 of the embodiment 2 will be described with reference to the drawings.

While in the description of the flow of the processing in the arithmetic processing section 2406 of the terminal 21, the location of the terminal 21 is specified by calculating the direction of each sector from the positional relationship between three base stations notified as the supplementary information, a case in which the center direction of a sector is notified as the supplementary information can be considered.

In this case, the supplementary information notified in Step 95 includes the following information.
(1) Scrambling code number used by a sector serving as a reference
   The scrambling code number used by the sector in which the terminal 21 is located is set. In the case of the present embodiment, the connection established between the terminal 21 and the RNC 25 uses the radio link established with the base station 22, and the terminal 21 is located in the sector 27, so that the scrambling code number used by the sector 27 is set.
(2) Latitude and longitude of a base station forming a sector serving as a reference
   In the case of the present embodiment, the latitude/longitude of the base station 23 and the latitude/longitude of the base station 1001 are set.
(3) Center direction of a sector serving as a reference
   In the case of the present embodiment, the center direction of the sector 27 is set.
(4) Scrambling code number used by a sector not serving as a reference
   In the case of the present embodiment, the scrambling code number used by the sector 29 and the sector 1002 are set.
(5) Difference between the latitude/longitude of a base station forming a sector not serving as a reference and the latitude/longitude of a base station serving as a reference
   In the case of the present embodiment, the difference between the latitude/longitude of the base stations 23 and 1001, and the latitude/longitude of the base station 22 is set.
(6) Center direction of a sector not serving as a reference
   In the case of the present embodiment, the center direction of the sectors 29 and 1002 is set.
(7) Difference of transmission timing between a sector serving as a reference and a sector not serving as a reference
   In the case of the present embodiment, the transmission timing between the sector 29 and the sector 1002 with the transmission timing of the sector 27 as a reference is notified.

If the center direction of a sector is notified as the supplementary information, the processing in F2511 is as follows.

Upon completion of the calculation of the candidate points and the angles, a center direction 65b (in this case, "305") of a sector using scrambling code number 52 is obtained with reference to base station information kept in the memory 2407 (F10).

The obtained center direction kept in the memory 2407 as the center direction of the sector 27 in which the terminal 21 is located is compared with the angle 15 and the angle 16, and the location of the candidate point having an angle close to the angle indicating the center direction of the sector 27 is determined as the location of the terminal 21. In accordance with the present embodiment, the angle 15 is closer to the center direction of the sector 27, so that the location of the terminal 21 is specified as the candidate point 13.

In addition, a case in which the starting angle of a sector is notified can be considered. The processing in F2511 in this case will be described below.

In F2511, the starting angle obtained from the memory 2407 is compared with the angle 15 and the angle 16, and the location of the candidate point having a larger angle than the starting angle is determined as the location of the terminal 21. In accordance with the present embodiment, the angle 15 has a larger angle than the starting angle of the sector 27, so that the location of the terminal 21 is specified as the candidate point 13.

Furthermore, other aspect 3 of the embodiment 2 will be described with reference to the drawings.

While in accordance with the embodiment 2 and other aspects 1 and 2 described above, the location of the base stations 23 and 1001 is notified to the terminal 21 as the difference with the base station 22, the location thereof may be notified as absolute latitude/longitude instead of the difference by way of an example of other embodiments.

### (Embodiment 3)

An embodiment 3 of the present invention will be described with reference to the drawings.

While the aforementioned embodiment 1 and embodiment 2 have described a method by which the RNC 25 or the terminal 21 calculates the candidate points 13 and 14 by finding the intersection points between the hyperbola 11 and the circle 12, it can be considered to obtain the two candidate points by finding the intersection points between a circle (circle 12) centering on the base station 22 and a circle centering on the base station 23.

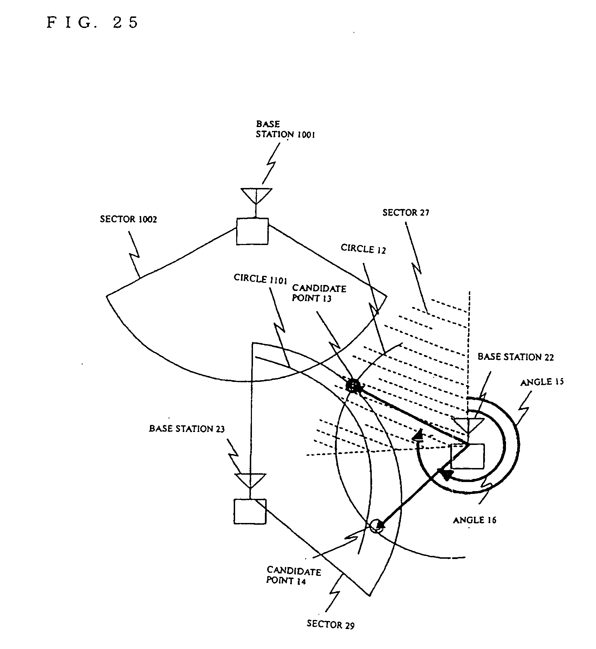

Fig. 25 is a drawing showing the principal of determining the location of the terminal 21 in accordance with the present embodiment.

In accordance with the present embodiment, the two candidate points 13 and 14 for the terminal 21 are calculated by finding the intersection points between the circle 12 centering on the base station 22 calculated from the round-trip propagation time between the terminal 21 and the base station 22 and a circle 11 centering on the base station 23 calculated from the round-trip propagation time between the terminal 21 and the base station 23.

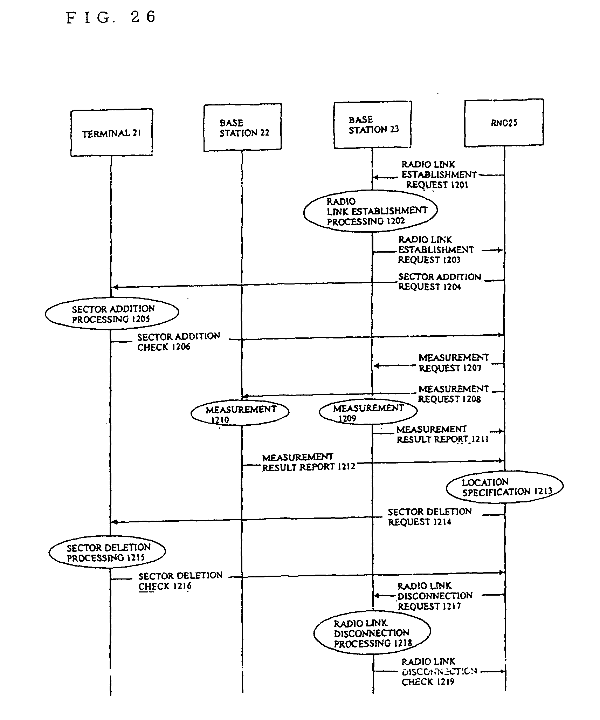

Fig 26 is a drawing showing an example of a procedure for determining the location of the terminal 21 in accordance with the present embodiment.

Incidentally, this procedure assumes that a connection is established between the terminal 21 and the RNC 22, and that a radio link is established between the base station 22 and the terminal 21.

The RNC 25 for specifying the location of the terminal 21 first requests the base station 23 to establish the radio link with the terminal 21 (Step 1201). In this case, the RNC 25 notifies the base station 23 of parameters necessary for the establishment of the radio link, which has no direct connection with the description of the present embodiment, and the detailed description will be omitted.

The base station 23 having received the request for the establishment of the radio link reserves resources and sets different types of parameters for a new radio link (Step 1202). Incidentally, details of the processing performed in the base station 23 has no direct connection with the description of the present embodiment, so that the detailed description will be omitted.

The base station 23 having completed to reserve the resources and to set the different types of parameters notifies the RNC 25 of the establishment of the radio link (Step 1203).

The RNC 25 having ensured the establishment of the radio link requests the terminal 21 to add sectors which will receive signals (Step 1204). At this time, the RNC 25 notifies scrambling code number used by the new sectors which will receive the signals. Incidentally, since the terminal 21 holds a list (hereinafter, referred to as an active set) of sectors which will receive the signals, the RNC 25 requests to add scrambling code number which will be specified for the active set in this step. In the case of the present embodiment, scrambling code number used by a sector 29 of the base station 23, "143" is specified.

The terminal 21 having received the request to add the scrambling code number to the active set adds the scrambling code number contained in the request to the active set that the terminal 21 itself holds, and starts receiving the signals from the specified sectors. Subsequently, the terminal 21 notifies the RNC 25 of the completion of the addition of the scrambling code number to the active set (Step 1206).

The RNC 25 having been notified of the completion of the addition of the scrambling code number to the active set requests the base stations 22 and 23 to measure the round-trip propagation time with the terminal 21 (Steps 1207 and 1208). At this time, the RNC 25 notifies the terminal ID of the terminal 21 to be measured.

The base stations 22 and 23 having received the measurement request measure the round-trip propagation time with reference to the terminal ID of the terminal 21 contained in the request (Steps 1209 and 1210). Upon completion of the measurement, the base stations 22 and 23 notify the RNC 25 of the measurement results (Steps 1211 and 1212).

Hereinafter, the processing in Step 1213 will be described with reference to the drawings.

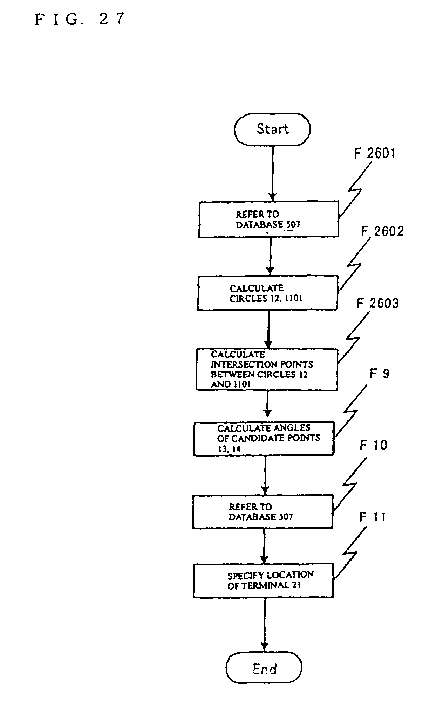

Fig. 27 is a drawing showing the flow of processing in an arithmetic processing section 506 of the RNC 25.

The arithmetic processing section 506 of the RNC 25 obtains information on the location of the base stations 22 and 23 kept in database 507 (F2601).

Subsequently, the arithmetic processing section 506 of the RNC 25 calculates the distance between the terminal 21 and the base station 22 and the distance between the terminal 21 and the base station 23 from the round-trip propagation time reported from the base stations 22 and 23, and calculates the circle 12 centering on the base station 22 with the distance between the terminal 21 and the base station 22 as a radius and a circle 1101 centering on the base station 23 with the distance between the terminal 21 and the base station 23 as a radius (F2602).

Then, the arithmetic processing section 506 of the RNC 25 calculates intersection points between the circle 12 and the circle 1101 calculated, and calculates the candidate points 13 and 14 which are the candidates for the location of the terminal 21 (F2603).

Upon calculation of the candidate points, the arithmetic processing section 506 of the RNC 25 calculates angles 15 and 16 using the information on the location of the base stations 22 and 23 obtained in F2601 (F9). Then, the arithmetic processing section 506 of the RNC 25 refers to base station information 40 kept in the database 507 (F10) to specify one of the two candidate points as the location of the terminal 21 (F11). Incidentally, the processing in F9 to F11 is identical to the processing in the aforementioned embodiment, so that the description will be omitted.

The RNC 25 having specified the location of the terminal 21 requests the terminal 21 to delete unnecessary scrambling code from the active set in order to delete radio links unnecessary for communication (Step 1214).

The terminal 21 having received the request to delete the scrambling code number from the active set deletes the specified scrambling code number from the active set (Step 1215). Upon completion of the deletion, the terminal 21 notifies the RNC 25 of the completion of the deletion (Step 1216).

The RNC 25 having been notified of the completion of the deletion from the active set requests the base station 23 to disconnect the radio link (Step 1218).

The base station 23 having received the request to disconnect the radio link releases the reserved resources and resets the different types of parameters (Step 1218), and upon completion of the processing, the base station 23 notifies the RNC 25 of the completion of the processing (Step 1219).

Next, other aspects of the embodiment 3 will be described with reference to the drawings.

While in accordance with the aforementioned embodiment, a description has been given of a case in which the RNC 25 performs arithmetic processing for specifying the location, the terminal may perform the arithmetic processing. Whereat, the description will be given with reference to the drawings below.

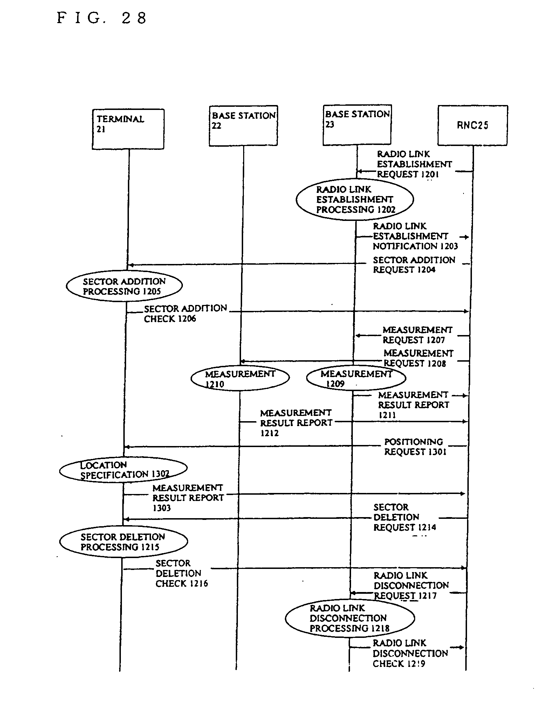

Fig 28 is a drawing showing an example of a procedure for specifying the location for the case where the terminal 21 performs the arithmetic processing for specifying the location.

Steps 1201 to 1212 have the same contents as those described as the embodiment 3, so that the detailed description will be omitted in the description of the present modification.

The RNC 25 having ensured that the specified scrambling code number has been added to the active set of the terminal 21 requests the terminal 21 to perform positioning (Step 1301). At the same time, the RNC 25 notifies the supplementary information necessary for the arithmetic processing. Details of the information to be notified will be described below.

To the positioning request transmitted in Step 1301, the following supplementary information is added.
(1) Scrambling code number used by a sector serving as a reference
   Scrambling code number used by a sector in which the terminal 21 is located is set. In the case of the present embodiment, the terminal 21 is located in the sector 27, so that scrambling code number used by the sector 27 is set.
(2) Round-trip propagation time between a base station forming a sector serving as a reference and a terminal
   In the case of the present embodiment, the round-trip propagation time between the base station 22 and the terminal 21 is set.
(3) Latitude and longitude of a base station forming a sector serving as a reference
   In the case of the present embodiment, the latitude/longitude of the base station 22 are set.
(4) Scrambling code number used by a sector not serving as a reference
   In the case of the present embodiment, the scrambling code number used by the sector 29 of the base station 23 is set.
(5) Difference between the latitude/longitude of a base station forming a sector not serving as a reference and the latitude/longitude of a base station serving as a reference
   In the case of the present embodiment, the difference between the latitude/longitude of the base stations 23 and the latitude/longitude of the base station 22 is set.
(6) Round-trip propagation delay time between a base station forming a sector not serving as a reference and a terminal
   In the case of the present embodiment, the round-trip propagation delay time between the base station 23 and the terminal 21 is set.
(7) Center direction of a sector in which the terminal 21 is located
   In the case of the present embodiment, the center direction of the sector 27 in which the terminal 21 is located is set.

Hereinafter, the processing in Step 1302 will be described with reference to the drawings.

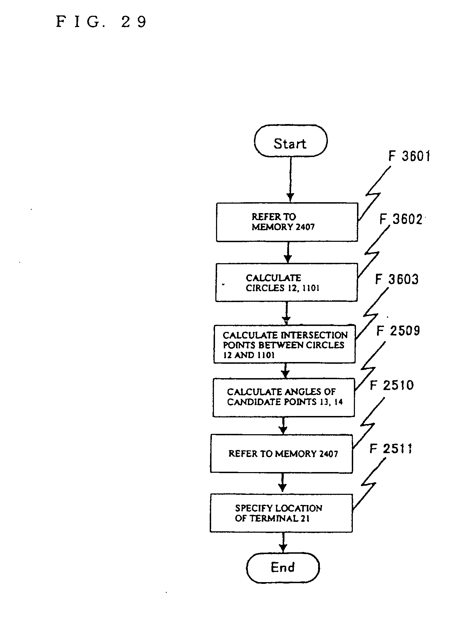

Fig. 29 is a drawing showing the flow of the processing in the arithmetic processing section 2406 of the terminal 21 in Step 1302.

The arithmetic processing section 2406 of the terminal 21 refers to memory 2407 to obtain the location of the base stations 22 and 23 and the round-trip propagation time with the terminal 21 (F3601).

The arithmetic processing section 2406 of the terminal 21 calculates the distance between the terminal 21 and the base station 22 and the distance between the terminal 21 and the base station 23 from the round-trip propagation time with the terminal 21 obtained in F3601 to find the circles 12 and 1101 centering on the location of the base stations 22 and 23 obtained in F3601 (F3602).

The arithmetic processing section 2406 of the terminal 21 calculates intersection points of the two circles calculated in F3602 to find the candidate points 13 and 14 (F3603).

Upon calculation of the candidate points 13 and 14, the arithmetic processing section 2406 of the terminal 21 calculate the angles 15 and 16 (F2509), and refers to the memory 2407 (F2510) to specify the location of the terminal (F2511). Incidentally, each processing is identical to the processing described in the second embodiment, so that the description will be omitted.

### (Embodiment 4)

An embodiment 4 of the present invention will be described with reference to the drawings.

While the aforementioned Embodiment 1, Embodiment 2, and Embodiment 3 have described a method for using signals from two base stations to calculate two candidate points, another method for using a signal from one GPS satellite and a signal from one base station to calculate two candidate points can be considered. Incidentally, in the case of using the signal from the GPS satellite, it is required that the time of the terminal be in synchronization with the time of the GPS satellite. In some cases, the synchronization requires to be able to receive a signal from one other GPS satellite.

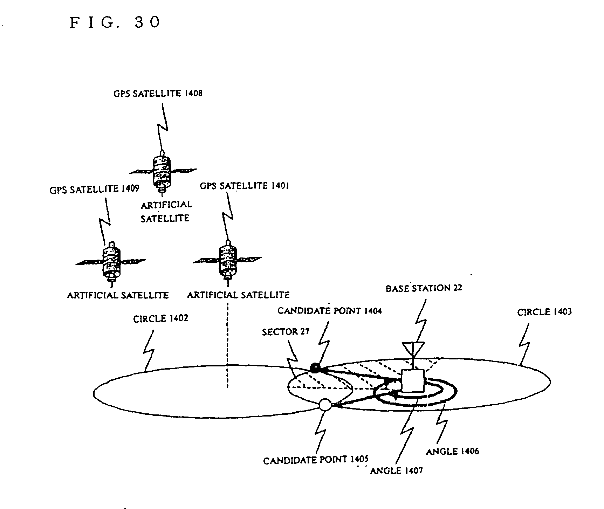

Fig. 30 is a drawing showing the principal of specifying the location of the terminal 21 in accordance with the present embodiment.

A GPS receiver for receiving a signal from a GPS satellite 1401 is mounted on the terminal 21 which can thus specify the time when the terminal 21 has received the signal from the GPS satellite, and calculate the distance between the GPS satellite 1401 and the terminal 21 from the difference between the transmission time when the GPS satellite 1401 has transmitted the signal and the reception time when the terminal 21 has received the signal, thereby allowing a circle 1402 centering on the GPS satellite 1401 to be found from the calculated distance.

In addition, the terminal 21 may calculate the distance between the base station 22 and the terminal 21 from the round-trip propagation time of the signal exchanged between the base station 22 and the terminal 21, and may find a circle 1403 centering on the base station22 from the calculated distance.

The terminal 21 may obtain candidate points 1404 and 1405 for the location of the terminal 21 by finding two intersection points between the circle 1402 and the circle 1403 calculated as described above.

Furthermore, the terminal 21 which understands to be located within the range of the sector 27 may specify the candidate point 1404 as the location of the terminal 21.

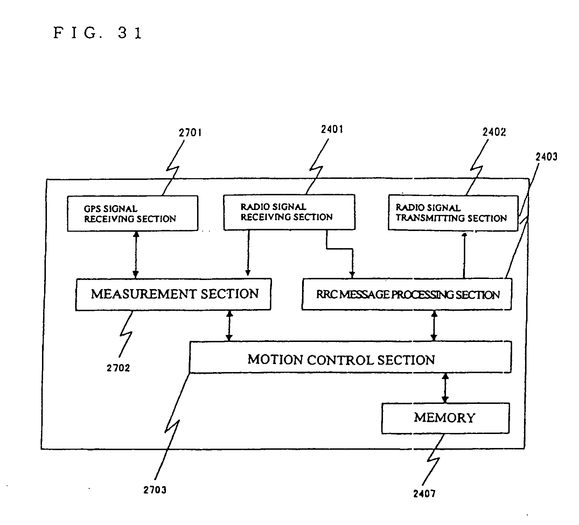

Fig. 31 is a drawing showing the configuration of the terminal 21 in accordance with the present embodiment. Incidentally, only portions relating to the description of the present embodiment are shown therein.

A radio signal receiving section 2401, a radio signal transmitting section 2402, an RRC message processing section 2403, and memory 2407 are identical to the block described in the aforementioned embodiment, so that the description will be omitted.

A GPS signal receiving section 2701 has a function to receive signals from the GPS satellites, receives the signals from the GPS satellites instructed from a measurement section 2702, and notifies the measurement section 2702 of the received signals.

The measurement section 2702 measures the reception time of signals received by the GPS signal receiving section 2701 and the transmission time thereof, or measures a difference of the reception time of signals received by the radio signal receiving section 2401, and notifies a motion control section 2703 of the measurement results reported from the GPS signal receiving section at the request of the motion control section 2703.

If a measurement request for the signals from the GPS satellites is contained in a message notified of the receipt from the RRC message processing section 2403, the motion control section 2703 requests the measurement section 2702 to measure the reception time of the signals from the GPS satellites and the transmission time thereof, or to measure the reception time of signals from base stations, and notifies the RRC message processing section 2403 of the measurement results notified from the measurement section 2702.

Hereinafter, a procedure for specifying the location of the terminal 21 in accordance with the present embodiment will be described with reference to Fig. 16.

Incidentally, it is assumed that the terminal 21 has established the connection with the RNC 25 using the radio link established with the base station 22. It is also assumed that the RNC 25 holds terminal information and base station information, and that the form of the base station information is the form shown in Fig. 11. In addition to that, the RNC 25 has orbit information on a plurality of the GPS satellites.

The RNC 25 requests the terminal 21 to perform measurement (Step 81), provided that unlike the first embodiment, the RNC 25 requests to measure signals from the GPS satellites 1401, 1408, and 1409. In this case, it is the orbit information on the GPS satellites to be measured that the RNC 25 notifies as the supplementary information.

In addition, the RNC 25 requests the base station 22 to measure the round-trip propagation time with the terminal 21 (Step 82). The processing in this step is identical to that in the first embodiment, so that the description will be omitted.

The terminal 21 having received the measurement request performs the requested measurement (Step 83), provided that unlike the embodiment 1, the terminal 21 measures transmission time contained in the signals from the GPS satellites 1401, 1408, and 1409 and reception time at the terminal 21 using the orbit information on the GPS satellites 1401, 1408, and 1409 notified as the supplementary information. The present embodiment assumes that the terminal 21 can receive only the signal from the GPS satellite 1401, and cannot receive the signals from the GPS satellites 1408 and 1409 for some reason. The reason that the terminal 21 cannot receive the signals from the GPS satellites 1408 and 1409 includes the effects of a shield such as a building.

Upon completion of the measurement, the terminal 21 reports the measurement results to the RNC 25 (step 85), provided that unlike the embodiment 1, it is the transmission time contained in the signal from the GPS satellite 1401 and the reception time at the terminal 21 that terminal 21 reports as the measurement results.

The base station 22 having received the measurement request measures the round-trip propagation time with the terminal 21 (Step 84), and reports the measurement results to the RNC 25 (Step 86). Incidentally, the processing in each Step is identical to the processing described in the aforementioned embodiment, so that the description will be omitted.

The RNC 25 having received the measurement result report from the base station 22 specifies the location of the terminal 21 (Step 83). Hereinafter, details of the processing in this step will be described with reference to the drawings.

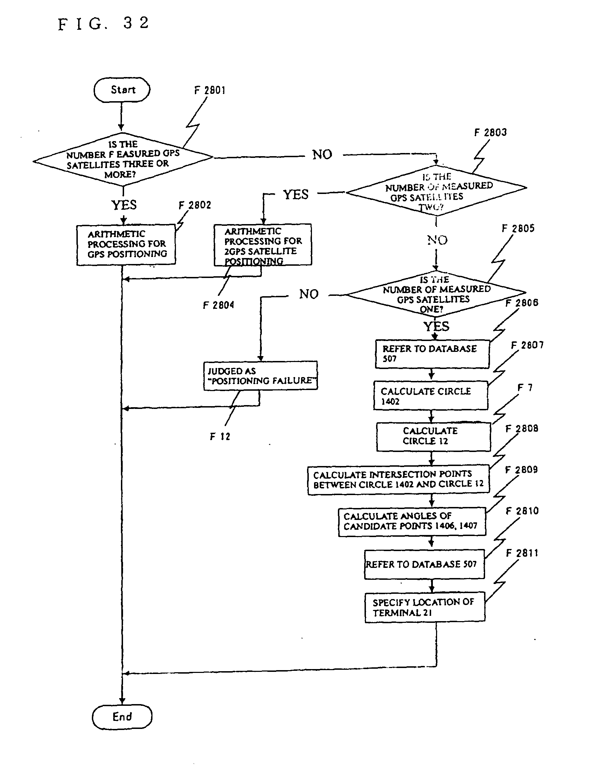

Fig. 32 is a diagram showing the flow of the processing in the arithmetic processing section 506 of the RNC 25 in accordance with the present embodiment.

The arithmetic processing section 506 of the RNC 25 checks the measurement results of the signals from the GPS satellites reported from the terminal 21 (F2801, 2803, and 2805). If the number of GPS satellites measured by the terminal 21 is three or more, the arithmetic processing section 506 of the RNC 25 performs arithmetic processing for GPS positioning (F2802). If the number of GPS satellites is two, the arithmetic processing section 506 of the RNC 25 performs arithmetic processing for positioning using two GPS satellites (F2805). If the number of GPS satellites is one, the arithmetic processing section 506 of the RNC 25 performs the processing after F2806. If the number of GPS satellites is zero, the arithmetic processing section 506 of the RNC 25 recognizes as a positioning failure to complete the processing (F12).

In the case of the present embodiment, the number of GPS satellites measured by the terminal 21 is one, and the processing after F2806 will be described below. Incidentally, the arithmetic processing for the positioning using the two GPS satellites (F2805) will be described in the after-mentioned embodiments, so that the description will be omitted in the present embodiment.

In F2806, the arithmetic processing section 506 of the RNC 25 refers to the database 507 to obtain the latitude/longitude indicating the location of the base station 22 and the orbit information on the GPS satellite 1401.

Then, the arithmetic processing section 506 of the RNC 25 finds the circle 1402 from the orbit information on the GPS satellite and the measurement results reported from the terminal 21 (F2807), and finds the circle 12 using the location of the base station 22 obtained in F2806 and the round-trip propagation time reported from the base station 22 (F7). Incidentally, the processing in F7 is identical to the processing described in the first embodiment.

In F2808, the arithmetic processing section 506 of the RNC 25 calculates intersection points between the circle 1402 and the circle 12 to find the candidate points 1404 and 1405. Then, the arithmetic processing section 506 of the RNC 25 finds angles 1406 and 1407 which straight lines connecting each candidate point and the base station 22 form with the true north.

In F2810, the arithmetic processing section 506 of the RNC 25 refers to the base station information 40 kept in the database 507 to obtain a center direction 65b of the sector 27 in which the terminal 21 is located.

In F2811, the arithmetic processing section 506 of the RNC 25 finally compares the center direction 65b obtained as the center direction of the sector 27 in which the terminal 21 is located with the angle 1406 and the angle 1407 to determine the location of the candidate point having an angle close to the angle indicating the center direction of the sector 27 as the location of the terminal 21. In accordance with the present embodiment, the angle 1406 is closer to the center direction of the sector 27, so that the location of the terminal 21 is specified as the candidate point 1404.

Next, other aspect 1 of the embodiment 4 will be described with reference to the drawings.

While the present embodiment has described the processing with reference to the procedures for the processing in the embodiment 1, the procedure for the processing in other aspect 1 of the embodiment 1 is possible.

Hereinafter, a description will be given with reference to Fig 18 showing the procedure for other aspect 1 of the embodiment 1.

In the case of determining the location of the terminal 21, the RNC 25 requests the terminal 21 to perform measurement for collecting information necessary for determining the location (Step 81), provided that in accordance with the present modification, it requests to measure the signals from the GPS satellites 1401, 1408, and 1409. And, in this case, it is the orbit information on the GPS satellites to be measured that the RNC 25 notifies as the supplementary information.

The terminal 21 having received the measurement request performs the requested measurement, and reports the measurement results to the RNC 25 (Step 85). Incidentally, the processing in this step is identical to the processing described in the present embodiment, so that the description will be omitted.

The RNC 25 having received the measurement results from the terminal 21 checks the reported measurement results (Step 810). Specifically, the RNC 25 checks the number of GPS satellites having succeeded in the measurement. If the number of differences of the reception time when the GPS satellites have succeeded in the measurement is three, the RNC 25 executes Step 89. Incidentally, in this case, in Step 89, arithmetic processing for normal GPS positioning is executed.

If the number of GPS satellites having succeeded in the measurement is zero, the RNC 25 recognizes to have failed in specifying the location of the terminal 21 to complete the processing.

If the number of GPS satellites having succeeded in the measurement is two or one, the RNC 25 executes the step shown in 811 of Fig. 18, and then executes Step 89.

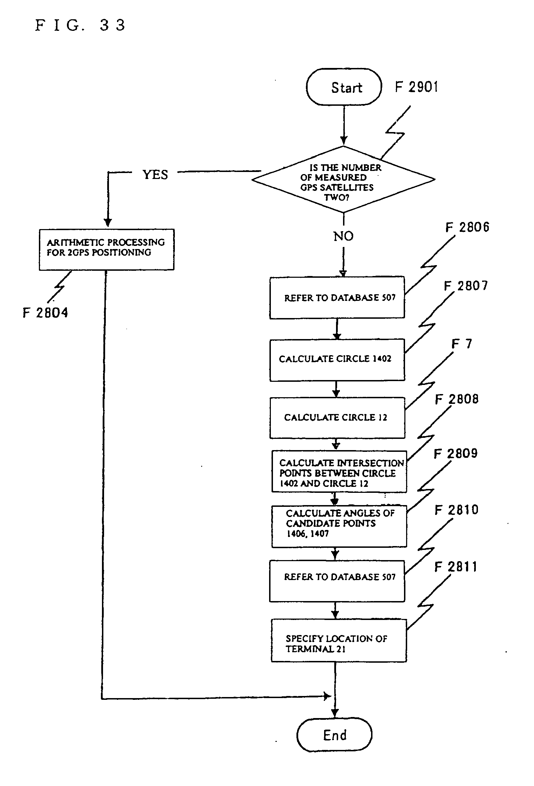

Fig. 33 is a drawing showing the flow of the processing in the arithmetic processing section 506 of the RNC 25 in Step 89 equivalent to this case.

The arithmetic processing section 506 of the RNC 25 having received the measurement result report from the base station 22 reconfirms the measurement results received from the terminal 21 in Step 810 (F2901). If the number of GPS satellites measured by the terminal 21 is two, the arithmetic processing section 506 of the RNC 25 performs the processing after F2804. If the number of GPS satellites measured by the terminal 21 is one, the arithmetic processing section 506 of the RNC 25 performs the processing after F2806. Incidentally, each processing thereafter is identical to the processing in the fourth embodiment, so that the description will be omitted.

Then, other aspect 2 of the Embodiment 4 will be described with reference to the drawings.

While the present embodiment and other aspect 1 have described that the form of the base station information kept by the RNC 25 is the form shown in Fig. 11, information on the direction of the sectors may be kept as the starting angle of the sectors.

If the information on the direction of the sectors is kept as the starting angle of the sectors, the processing in F2811 in Fig. 32 and Fig. 33 will be described below.

If the starting angle of the sectors are stored in the base station information, in F2811, the obtained starting angles are compared with the angle 1406 and the angle 1407 to determine the location of the candidate point having a larger angle than the starting angle thereof as the location of the terminal 21. In accordance with the present embodiment, the angle 15 has a larger angle than the starting angle of the sector 27, so that the location of the terminal 21 is specified as the candidate point 1404.

Furthermore, other aspect 3 of the embodiment 4 will be described with reference to the drawings.

While the present embodiment has described that the RNC 25 performs the arithmetic processing for specifying the location of the terminal 21, a method by which the terminal 21 performs the arithmetic processing can be considered.

Hereinafter, the flow of the processing for the case where the terminal 21 performs the arithmetic processing will be described with reference to Fig. 21.

The RNC 25 requests the base station 22 to perform measurement (Step 91), and the base station 22 having received the measurement request measures the round-trip propagation time between the base station 22 and the terminal 21 (Step 92), and reports the measurement results to the RNC 25 (Step 93). The processing in each step is identical to the processing in the embodiment 2, so that the description will be omitted.

The RNC 25 having received the measurement result report from the base station 22 generates the supplementary information which will be notified to the terminal 21 (Step 94), provided that unlike the embodiment 2, the following information is contained in the supplementary information.
(1) Orbit information on GPS satellites to be measured
   In the case of the present embodiment, the orbit information on the GPS satellites 1401, 1408, and 1409 is set.
(2) Round-trip propagation time between a base station forming a sector serving as a reference and a terminal
   This is identical to those described in other aspects of the embodiment 3, so that the description will be omitted.
(3) Latitude and longitude of a base station forming a sector serving as a reference
   This is identical to those described in other aspects of the embodiment 3, so that the description will be omitted.

Center direction of a sector in which the terminal 21 is located This is identical to those described in other aspects of the embodiment 3, so that the description will be omitted.

Upon completion of the generation of the supplementary information, the RNC 25 transmits a positioning request to the terminal 21 (Step 95). At the same time, the RNC 25 transmits the supplementary information including the aforementioned information.

The terminal 21 having received the positioning request refers to the orbit information on the GPS satellites 1401, 1408, and 1409 contained in the supplementary information to measure the signals from the GPS satellites (Step 96). This step is identical to Step 83 in the embodiment 4, so that the description will be omitted.

Upon completion of the measurement, the terminal 21 performs processing for calculating the candidate points (Step 98). Hereinafter, details of the processing in the present embodiment will be described with reference to the drawings.

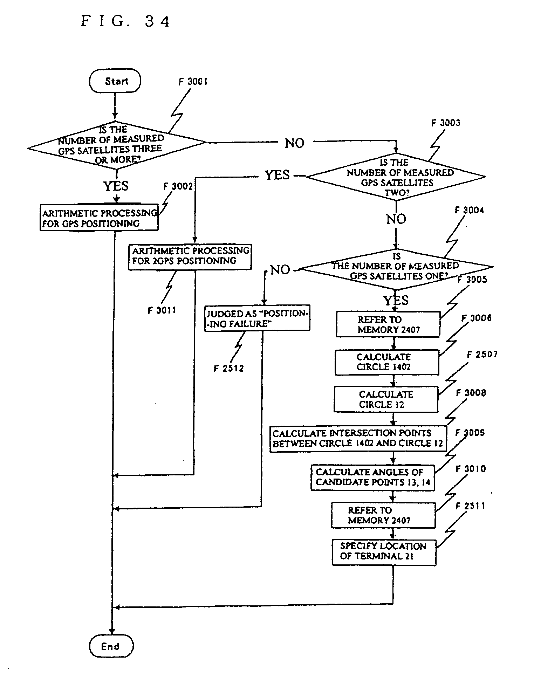

Fig. 34 is a diagram showing the flow of processing in an arithmetic processing section 2407 of the terminal 21 in accordance with the present embodiment.

The arithmetic processing section 2407 of the terminal 21 checks the measurement results of the signals from the GPS satellites (F3001, 3003, and 3004). If the number of GPS satellites measured by the terminal 21 is three or more, the arithmetic processing section 2407 of the terminal 21 performs the arithmetic processing for GPS positioning (F3002). If the number of GPS satellites is two, the arithmetic processing section 2407 of the terminal 21 performs the arithmetic processing for positioning using two GPS satellites (F3011). If the number of GPS satellites is one, the arithmetic processing section 2407 of the terminal 21 performs the processing after F3004. If the number of GPS satellites is zero, the arithmetic processing section 2407 of the terminal 21 recognizes as a positioning failure to complete the processing (F2512).

In the case of the present embodiment, the number of GPS satellites measured by the terminal 21 is one, and the processing after F3004 will be described. Incidentally, the arithmetic processing for positioning using the two GPS satellites (F3011) will be described as other aspect of the embodiment 5, so that the description will be omitted in the present embodiment.

In F3005, the arithmetic processing section 2406 of the terminal 21 refers to the memory 2407 to obtain the latitude/longitude indicating the location of the base station 22, and the orbit information on the GPS satellite 1401.

Then, the arithmetic processing section 2406 of the terminal 21 finds the circle 1402 from the orbit information on the GPS satellites obtained in F3005 and the measurement results reported from the terminal 21 (F3006), and finds the circle 12 using the location of the base station 22 obtained in F3005 and the round-trip propagation time reported from the base station 22 (F2507). Incidentally, the processing in F2507 is identical to the processing described in the second embodiment.

In F3008, the arithmetic processing section 2406 of the terminal 21 calculates the intersection points between the circle 1402 and the circle 12 to find the candidate points 1404 and 1405. Then, the arithmetic processing section 2406 of the terminal 21 finds the angles 1406 and 1407 which straight lines connecting each candidate point and the base station 22 form with the true north (F3009).

In F3010, the arithmetic processing section 2406 of the terminal 21 refers to the base station information which is notified as the supplementary information and kept in the memory 2407 to obtain the center direction of the sector 27 in which the terminal 21 is located.

In F2511, the arithmetic processing section 2406 of the terminal 21 compares the center direction obtained as the center direction of the sector 27 in which the terminal 21 is located with the angle 1406 and the angle 1407 to determine the location of the candidate point having an angle close to the angle indicating the center direction of the sector 27 as the location of the terminal 21. In the present embodiment, the angle 1406 is closer to the center direction of the sector 27, so that the location of the terminal 21 is specified as the candidate point 1404.

Furthermore, other aspect 4 of the embodiment 4 will be described.

While the aforementioned other aspect 3 has described the processing with reference to the procedures for the processing in the embodiment 2, the procedure for the processing in the other aspect 1 of the embodiment 2 is possible.

Hereinafter, a description will be given with reference to Fig 23 showing the procedure for the other aspect 1 of the embodiment 1.

The RNC 25 transmits a positioning request to the terminal 21 (Step 95). At the same time, the RNC 25 transmits the following information as the supplementary information.
(1) Orbit information on GPS satellites to be measured
   In the case of the present embodiment, the orbit information on the GPS satellites 1401, 1408, and 1409 is set.

The terminal 21 having received the positioning request refers to the orbit information on the GPS satellites 1401, 1408, and 1409 contained in the supplementary information to measure the signals from the GPS satellites (Step 96). This step is identical to Step 83 in the fourth embodiment, so that the description will be omitted.

Upon completion of the measurement, the terminal 21 checks the measurement results. If the number of GPS satellites having succeeded in the measurement is three, the terminal 21 executes the processing in Steps 98 and 99 without executing the processing shown in 913 in the drawing. However, in Step 98, the arithmetic processing for GPS positioning is performed. In addition, if the number of GPS satellites having succeeded in the measurement is zero, the terminal 21 executes the processing in Step 99, provided that the terminal 21 notifies a "positioning failure" as a positioning result.

If the number of GPS satellites having succeeded in the measurement is one or two, the processing in 913 in the drawing is executed. Hereinafter, the processing executed in 913 will be described.

The terminal 21 requests the RNC 25 to notify the supplementary information necessary for specifying its own location (Step 911). Specifically, the terminal 21 requests the location of the base station 22, and the round-trip propagation delay time between the base station 22 and the terminal 21.

The RNC 25 having received the request from the terminal 21 requests the base station 22 to perform measurement for generating the supplementary information (Step 91), the base station 22 having received the measurement request measures the round-trip propagation time between the base station 22 and the terminal 21 (Step 92), and reports the measurement results to the RNC 25 (Step 93). The processing in each step is identical to that in the embodiment 2, so that the description in the present modification will be omitted.

Upon completion of the generation of the supplementary information, the RNC 25 notifies the terminal 21 of the supplementary information including the following information.
(1) Round-trip propagation time between a base station forming a sector serving as a reference and a terminal
   This is identical to those described in other aspects of the embodiment 3, so that the description will be omitted.
(2) Latitude and longitude of a base station forming a sector serving as a reference
   This is identical to those described in other aspects of the embodiment 3, so that the description will be omitted.
(3) Center direction of a sector in which the terminal 21 is located
   This is identical to those described in other aspects of the embodiment 3, so that the description will be omitted.

The terminal 21 having received the supplementary information performs the processing for calculating the candidate points (Step 98). Hereinafter, details of the processing in the present embodiment will be described with reference to the drawings.

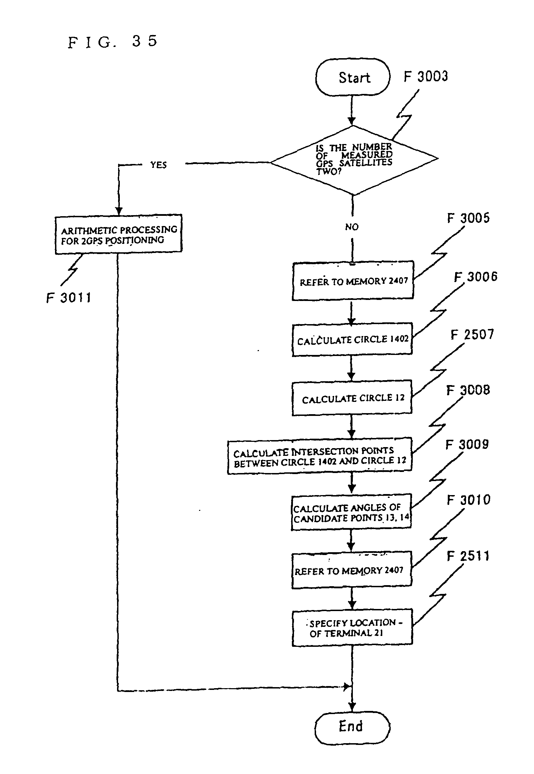

Fig. 35 is a diagram showing the flow of the processing in the arithmetic processing section 2407 of the terminal 21 in accordance with the present embodiment.

Incidentally, each processing is identical to that of the other aspect 3, so that the description will be omitted.

Furthermore, other aspect 5 of the embodiment 4 will be described that .

While the other aspects 3 and 4 have described that the information on the direction of the sectors notified from the RNC 25 as the supplementary information is the one on the center direction of the sectors, the information on the direction of the sectors may be notified as the starting angle of the sectors.

If the information on the direction of the sectors is kept as the starting angle of the sectors, the processing in F2511 in Fig. 34 and Fig. 35 will be described below.

If the starting angle of the sectors are stored in the base station information, in F2511, the obtained starting angles are compared with the angle 1406 and the angle 1407, and the location of the candidate point having a larger angle than the starting angle thereof is determined as the location of the terminal 21. In accordance with the present embodiment, the angle 15 has a larger angle than the starting angle of the sector 27, so that the location of the terminal 21 is specified as the candidate point 1404.

### (Embodiment 5)

An embodiment 5 of the present invention will be described with reference to the drawings.

While the aforementioned embodiment has described a method for using signals from two base stations to find two candidate points and a method for using signals from one GPS satellite and one base station to find two candidate points, a method for using signals from two GPS satellites to find two candidate points can be considered, as was referred to the description of the embodiment 4.

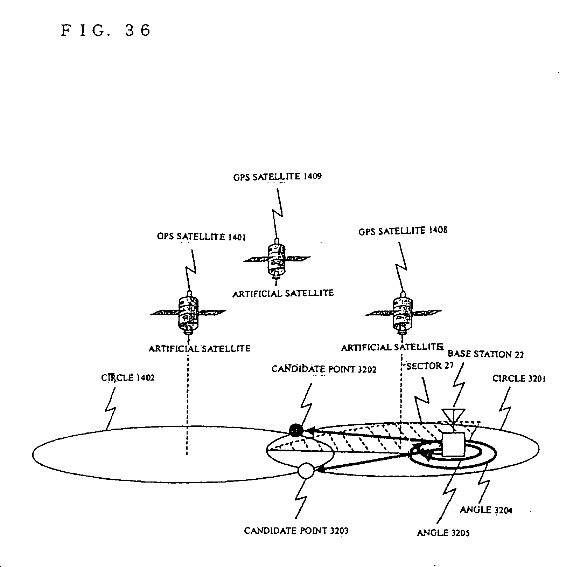

Fig. 36 is a drawing showing the principal of specifying the location of a terminal 21 in accordance with the present embodiment.

A GPS receiver for receiving a signal from a GPS satellite 1401 is mounted on the terminal 21 which can thus specify the time when the terminal 21 has received the signal from the GPS satellite, and calculate the distance between the GPS satellite 1401 and the terminal 21 from the difference between the transmission time when the GPS satellites 1401 and 1408 have transmitted signals and the reception time when the terminal 21 has received the signals, thereby allowing circles 1402 and 3201 centering on the GPS satellite 1401 to be found from the calculated distance.

The terminal 21 finds candidate points 3202 and 3203 for the location of the terminal 21 by finding two intersection points between the circle 1402 and the circle 3201 calculated.

Furthermore, the terminal 21 which understands to be located within the range of the sector 27 specifies the candidate point 3202 as the location of the terminal 21.

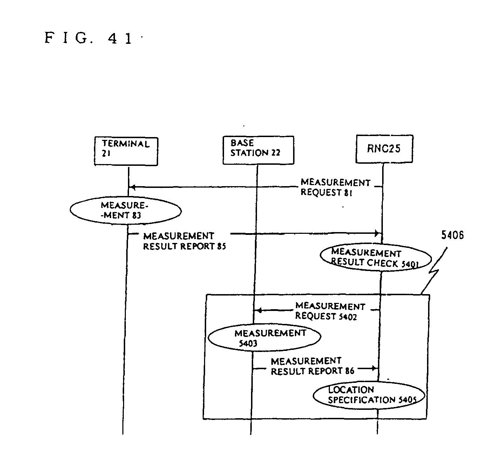

Hereinafter, a procedure for specifying the location of the terminal 21 in accordance with the present embodiment will be described with reference to Fig. 41.

Incidentally, it is assumed that the terminal 21 has established a connection with the RNC 25 using a radio link established with the base station 22. It is also assumed that the RNC 25 holds terminal information and base station information, and that the form of the base station information is the form shown in Fig. 15. In addition to this, the RNC 25 has orbit information on a plurality of the GPS satellites.

The RNC 25 requests the terminal 21 to perform measurement (Step 81), provided that unlike the embodiment 1, the RNC 25 requests to measure signals from the GPS satellites 1401, 1408, and 1409. In this case, it is the orbit information on the GPS satellites to be measured that the RNC 25 notifies as the supplementary information.

The terminal 21 having received the measurement request performs the requested measurement (Step 83), provided that unlike the embodiment 1, the terminal 21 measures transmission time contained in the signals from the GPS satellites 1401, 1408, and 1409 and reception time at the terminal 21 using the orbit information on the GPS satellites 1401, 1408, and 1409 notified as the supplementary information. The present embodiment assumes that the terminal 21 can receive only the signals from the GPS satellites 1401 and 1408, and cannot receive the signal from the GPS satellite 1409 for some reason. The reason that the terminal 21 cannot receive the signal from the GPS satellite 1409 includes the effect of a shield such as a building.

Upon completion of the measurement, the terminal 21 reports the measurement results to the RNC 25 (Step 85), provided that unlike the embodiment 1, it is the transmission time contained in the signals from the GPS satellites 1401 and 1408 and the reception time at the terminal 21 that the terminal 21 reports as the measurement results. For the GPS satellite 1409, a positioning failure is reported.

The RNC 25 having received the measurement result report from the terminal 21 specifies the location of the terminal 21 (Step 83). Hereinafter, details of the processing in this step will be described with reference to the drawings.

Fig. 32 is a diagram showing the flow of processing in an arithmetic processing section 506 of the RNC 25 in accordance with the present embodiment.

The arithmetic processing section 506 of the RNC 25 checks the measurement results of the signals from the GPS satellites reported from the terminal 21 (F2801, 2803, and 2805). If the number of GPS satellites measured by the terminal 21 is three or more, the arithmetic processing section 506 of the RNC 25 performs arithmetic processing for GPS positioning (F2802). If the number of GPS satellites is two, the arithmetic processing section 506 of the RNC 25 performs arithmetic processing for positioning using two GPS satellites (F2805). If the number of GPS satellites is one, the arithmetic processing section 506 of the RNC 25 performs the processing after F2806. If the number of GPS satellites is zero, the arithmetic processing section 506 of the RNC 25 recognizes as a positioning failure to complete the processing (F12).

In the case of the present embodiment, the number of GPS satellites measured by the terminal 21 is two, and the processing in F2805 will be described. Incidentally, the arithmetic processing for positioning using one GPS satellite (after F2806) has been described as the embodiment 4, so that the description will be omitted in the present embodiment.

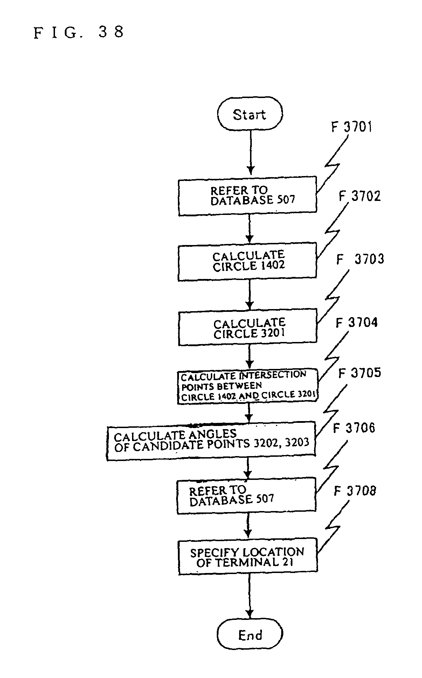

Fig. 38 is a drawing showing details of the flow of the processing in F2805.

The arithmetic processing section 506 of the RNC 25 refers to database 507 to obtain the orbit information on the GPS satellites 1401 and 1408 (F3701).

Then, the arithmetic processing section 506 of the RNC 25 finds the circle 1402 from the orbit information on the GPS satellite 1401 obtained in F3701 and the measurement results reported from the terminal 21 (F3702), and finds the circle 3201 from the orbit information on the GPS satellite 1408 obtained in F3701 and the measurement results reported from the terminal 21.

In F3704, the arithmetic processing section 506 of the RNC 25 calculates the intersection points between the circle 1402 and the circle 3201 to find candidate points 3202 and 3203. Then, the arithmetic processing section 506 of the RNC 25 finds angles 3204 and 3205 which straight lines connecting each candidate point and the base station 22 form with the true north.

In F3706, the arithmetic processing section 506 of the RNC 25 refers to base station information 40 kept in the database 507 to obtain a center direction 65b of the sector 27 in which the terminal 21 is located.

In F3708, the arithmetic processing section 506 of the RNC 25 compares the center direction 65b obtained as the center direction of the sector 27 in which the terminal 21 is located with the angles 3204 and 3205 to determine the location of the candidate point having an angle close to the angle indicating the center direction of the sector 27 as the location of the terminal 21. In accordance with the present embodiment, the angle 3204 is closer to the center direction of the sector 27, so that the location of the terminal 21 is specified as the candidate 3202.

Next, other aspect 1 in the embodiment 5 will be described.

While the present embodiment has described that the form of the base station information 40 kept by the RNC 25 is the form shown in Fig. 11, information on the direction of sectors may be kept as the starting angle of the sectors.

If the information on the direction of the sector is kept as the starting angle of the sectors, the processing in F3708 in Fig. 38 will be described below.

If the starting angle of the sectors are stored in the base station information, in F3708, the obtained starting angle thereof is compared with the angle 3204 and the angle 3205, and the location of the candidate point having a larger angle than the starting angles is determined as the location of the terminal 21. In accordance with the present embodiment, the angle 3204 has a larger angle than the starting angle of the sector 27, so that the location of the terminal 21 is specified as the candidate point 3202.

Subsequently, other aspect 2 in the embodiment 5 will be described.

While the present embodiment and the other aspect 1 have described that the RNC 25 performs the arithmetic processing for specifying the location of the terminal 21, a method by which the terminal 21 performs the arithmetic processing can be considered.

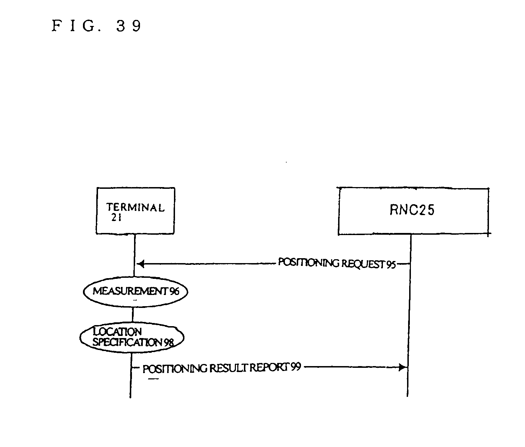

Hereinafter, the flow of the processing for the case where the terminal 21 performs the arithmetic processing will be described with reference to Fig. 39.

The RNC 25 transmits a positioning request to the terminal 21 (Step 95).

At this time, the RNC 25 transmits supplementary information including the following information together.
(1) Orbit information on GPS satellites to be measured
   In the case of the present embodiment, the orbit information on the GPS satellites 1401, 1408, and 1409 is set.
(2) Latitude and longitude of a base station forming a sector serving as a reference
   This is identical to those described in other aspects of the embodiment 3, so that the description will be omitted.
(3) Center direction of a sector in which the terminal 21 is located
   This is identical to those described in other aspects of the embodiment 3, so that the description will be omitted.

The terminal 21 having received the positioning request refers to the orbit information on the GPS satellites 1401, 1408, and 1409 contained in the supplementary information to measure the signals from the GPS satellites (Step 96). This step is identical to Step 83 in the embodiment 5, so that the description will be omitted.

Upon completion of the measurement, the terminal 21 performs processing for specifying its own location (Step 98). Hereinafter, details of the processing in the present modification will be described with reference to the drawings.

Fig. 34 is a diagram showing the flow of processing in an arithmetic processing section 2407 of the terminal 21 in accordance with the present other aspect.

The arithmetic processing section 2407 of the terminal 21 checks the measurement results of the signals from the GPS satellites (F3001, 3003, and 3004). If the number of GPS satellites measured by the terminal 21 is three or more, the arithmetic processing section 2406 of the terminal 21 performs the arithmetic processing for the GPS positioning (F3002). If the number of GPS satellites is two, the arithmetic processing section 2406 of the terminal 21 performs the arithmetic processing for the positioning using two GPS satellites (F3011). If the number of GPS satellites is one, the arithmetic processing section 2406 of the terminal 21 performs the processing after F3004. If the number of GPS satellites is zero, the arithmetic processing section 2406 of the terminal 21 recognizes as a positioning failure to complete the processing (F2512).

In the case of the present embodiment, the number of GPS satellites measured by the terminal 21 is two, and the processing in F3011 will be described. Incidentally, the arithmetic processing for the positioning using one GPS satellite (after F3005) is identical to that in the other aspect of the embodiment 4, so that the description will be omitted in the present embodiment.

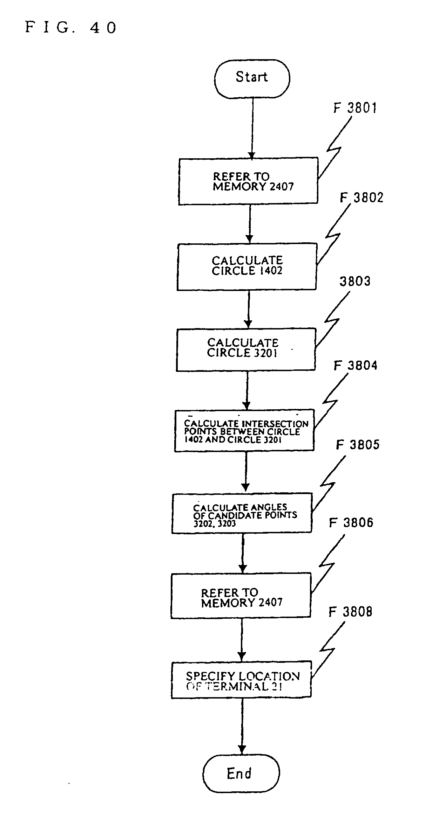

Fig. 40 is a drawing showing details of the flow of the processing in F3011.

The arithmetic processing section 2406 of the terminal 21 refers to memory 2407 to obtain the orbit information on the GPS satellites 1401 and 1408 (F3801).

Subsequently, the arithmetic processing section 2406 of the terminal 21 finds the circle 1402 from the orbit information on the GPS satellite 1401 obtained in F3801 and the measurement results (F3802), and finds the circle 3201 from the orbit information on the GPS satellite 1408 obtained in F3801 and the measurement results.

In F3804, the arithmetic processing section 2406 of the terminal 21 calculates the intersection points between the circle 1402 and the circle 3201 to find the candidate points 3202 and 3203. Then, the arithmetic processing section 2406 of the terminal 21 finds the angles 3204 and 3205 which straight lines connecting each candidate point and the base station 22 form with the true north (F3805).

In F3806, the arithmetic processing section 2406 of the terminal 21 refers to information on the center direction of sectors which is notified as the supplementary information and kept in the memory 2407 to obtain the center direction of the sector 27 in which the terminal 21 is located.

In F3808, the arithmetic processing section 2406 of the terminal 21 compares the center direction obtained as the center direction of the sector 27 in which the terminal 21 is located with the angle 3204 and the angle 3205 to determine the location of the candidate point having an angle close to the angle indicating the center direction of the sector 27 as the location of the terminal 21. In accordance with the present embodiment, the angle 3204 is closer to the center direction of the sector 27, so that the location of the terminal 21 is specified as the candidate point 3202.

Furthermore, other aspect 3 in the embodiment 5 will be described.

While the aforementioned other aspect 2 has described that the information on the direction of the sectors notified from the RNC 25 is the one on the center direction of the sectors, the information on the direction of the sectors may be notified as the starting angle of the sectors.

If the information on the direction of the sectors is kept as the starting angle of the sectors, the processing in F3808 in Fig. 40 will be described below.

If the starting angle of the sectors are stored in the memory 2407, in F3808, the obtained starting angle thereof is compared with the angle 3204 and the angle 3205 to determine the location of the candidate point having a larger angle than the starting angle thereof as the location of the terminal 21. In accordance with the present embodiment, the angle 3204 has a larger angle than the starting angle of the sector 27, so that the location of the terminal 21 is specified as the candidate point 3202.

Furthermore, other aspect 4 in the embodiment 5 will be described.

While the present embodiment and the other aspects 1 to 3 specify one of the candidate points as the location of the terminal 21 from the two calculated candidate points of the terminal 21 using information on the sector in which the terminal is located, a method for specifying the location of the terminal 21 using the distance between the base station 22 and the terminal 21 can be considered.

Hereinafter, a procedure for specifying the location of the terminal 21 in accordance with the present other aspect will be described with reference to Fig. 41. Incidentally, it is assumed that the terminal 21 has established the connection with the RNC 25 using the radio link established with the base station 22. It is also assumed that the RNC 25 has the orbit information on a plurality of the GPS satellites.

First, the RNC 25 requests the terminal 21 to perform measurement (Step 81). The terminal 21 having received the measurement request performs the requested measurement (Step 83). Upon completion of the measurement, the terminal 21 reports the measurement results to the RNC 25 (Step 85). Incidentally, details of Steps 81, 83, and 85 are identical to those in the present embodiment, so that the description will be omitted.

The RNC 25 having received the measurement result report from the terminal 21 checks the measurement results (Step 5401). Specifically, the RNC 25 checks the number of GPS satellites that the terminal 21 has succeeded in the measurement. If the number of GPS satellites measured by the terminal 21 is three or more, the RNC 25 performs the arithmetic processing for the GPS positioning to complete the processing. The processing for the case where the number of GPS satellites measured by the terminal 21 is one has been described as the embodiment 4, so that the description will be omitted in the present embodiment. If the number of GPS satellites measured by the terminal 21 is zero, the RNC 25 recognizes as a positioning failure to complete the processing. If the number of GPS satellites measured by the terminal 21 is two, the RNC 25 executes the step shown in 5406 of Fig. 41.

If the number of GPS satellites measured by the terminal 21 is two, the RNC 25 requests the base station 22 to measure the round-trip propagation time with the terminal 21 (Step 5402). Specifically, the RNC 25 requests to measure the round-trip propagation time between the terminal 21 and the base station 22. At this time, the terminal ID of the terminal 21 to be measured is notified to the base station 22.

The base station 22 having received the measurement request transmits a signal to the terminal (in the case of the present embodiment, terminal 21) specified by the RNC 25, measures round-trip propagation time of the signal between the terminal 21 and the base station 22 from the difference between the time when the base station 22 has received a response from the terminal and the time when the base station 22 has transmitted the signal (Step 5403), and transmits the measured round-trip propagation time to the RNC 25 (Step 5404).

The RNC 25 having received the measurement result report from the base station 22 performs the arithmetic processing for specifying the location of the terminal 21 using the arithmetic processing section 506 to complete the processing.

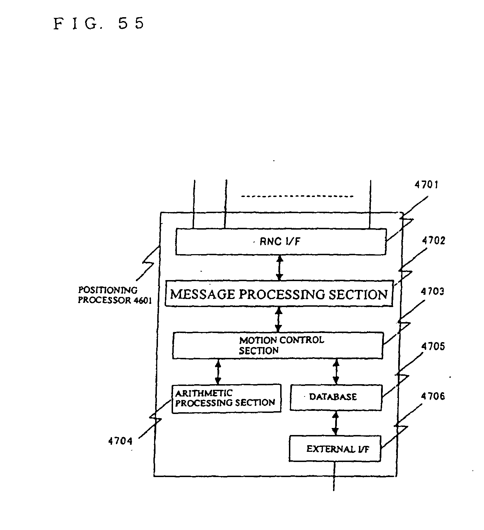

Fig. 55 is a drawing showing details of the flow of the processing in Step 5405 executed in the arithmetic processing section 506 of the RNC 25.

The arithmetic processing section 506 of the RNC 25 calculates the circles 1402 and 3201 using the measurement results of the signals from the GPS satellites 1401 and 1408 reported from the terminal 21 (F5501, 5502).

Subsequently, the arithmetic processing section 506 of the RNC 25 calculates the intersection points between the calculated circles to find the candidate points 3202 and 3203 (F5503). Then, the arithmetic processing section 506 of the RNC 25 refers to the base station information 40 kept in the database 507 to obtain information on the location of the base station 22 (F5504).

The arithmetic processing section 506 of the RNC 25 calculates the distance between the two candidate points 3202, 3203 and the base station 22 from the information on the two candidate points 3202, 3203 calculated in F5503, and the location of the base station 22 obtained in F5504, respectively (F5505).

The arithmetic processing section 506 of the RNC 25 calculates the distance between the terminal 21 and the base station 22 using the round-trip propagation time with the terminal 21 measured in the base station 22 (F5506).

The arithmetic processing section 506 of the RNC 25 compares the distance between the two candidate points and the base station 22 calculated in F5505 with the distance between the terminal 21 and the base station 22 calculated in F5506 to determine the candidate point having a value close to the distance between the terminal 21 and the base station 22 as the location of the terminal 21. In accordance with the present other aspect, the angle 3202 has a value closer to the distance calculated in F5506, so that the location of the terminal 21 is specified as the candidate point 3202.

This is the end of the description of the other aspect 4 in the embodiment 5.

Next, other aspect 5 in the embodiment 5 will be described.

While the aforementioned other aspect 4 has described that the RNC 25 executes the arithmetic processing for calculating the location of the terminal 21, a method by which the terminal 21 performs the arithmetic processing can be considered.

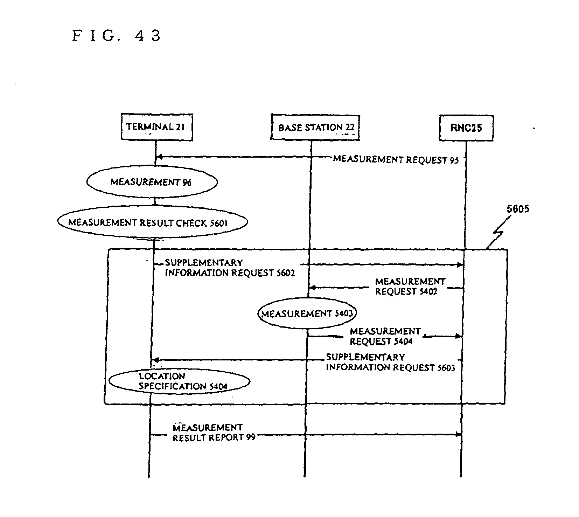

Hereinafter, the procedure for specifying the location of the terminal 21 in accordance with the other aspect 5 will be described with reference to Fig. 43. Incidentally, it is assumed that the terminal 21 has established the connection with the RNC 25 using the radio link established with the base station 22. It is also assumed that the RNC 25 has the orbit information on a plurality of the GPS satellites.

First, the RNC 25 requests the terminal 21 to perform positioning (Step 95). The terminal 21 having received the positioning request performs the requested measurement (Step 96). Incidentally, Steps 95 and 96 are identical to those in the other aspect 2 of the present embodiment, so that the description will be omitted.

Upon completion of the measurement, the terminal 21 checks the measurement results (Step 5601). Specifically, the terminal 21 checks the number of GPS satellites that the terminal 21 has succeeded in the measurement. If the number of GPS satellites measured by the terminal 21 is three or more, the terminal 21 performs the arithmetic processing for the GPS positioning to complete the processing. The processing for the case where the number of GPS satellites measured by the terminal 21 is one has been described as the embodiment 4, so that the description will be omitted in the present embodiment. If the number of GPS satellites measured by the terminal 21 is zero, the terminal 21 recognizes as a positioning failure to complete the processing. If the number of GPS satellites measured by the terminal 21 is two, the terminal 21 executes the step shown in 5605 of Fig. 43.

If the number of GPS satellites measured by the terminal 21 is two, the terminal 21 requests the RNC 25 to provide supplementary information necessary for an operation (Step 5602). Specifically, the terminal 21 requests information on the round-trip propagation time between the terminal 21 and the base station 22.

The RNC 25 having received the request from the terminal 21 transmits a measurement request to the base station 22 (Step 5402), and the base station 22 having received the measurement request from the RNC 25 performs the requested measurement (Step 5403), and reports the measurement results to the RNC 25 following completion of the measurement (Step 5404). Incidentally, details of Steps 5402 to 5404 are identical to those in the other aspect 4 of the present embodiment, so that the description will be omitted.

The RNC 25 having received the measurement results from the base station 22 notifies the terminal 21 of the measurement results as the supplementary information (Step 5603). Specifically, the RNC 25 notifies the round-trip propagation time between the terminal 21 and the base station 22 as the supplementary information.

The terminal 21 having received the supplementary information from the RNC 25 stores the supplementary information in the memory 2407, and calculates its own location by combining the measurement results in Step 96 with the supplementary information (Step 5604).

Upon completion of the arithmetic processing for calculating the location, the terminal 21 reports the positioning results to complete the processing (Step 99).

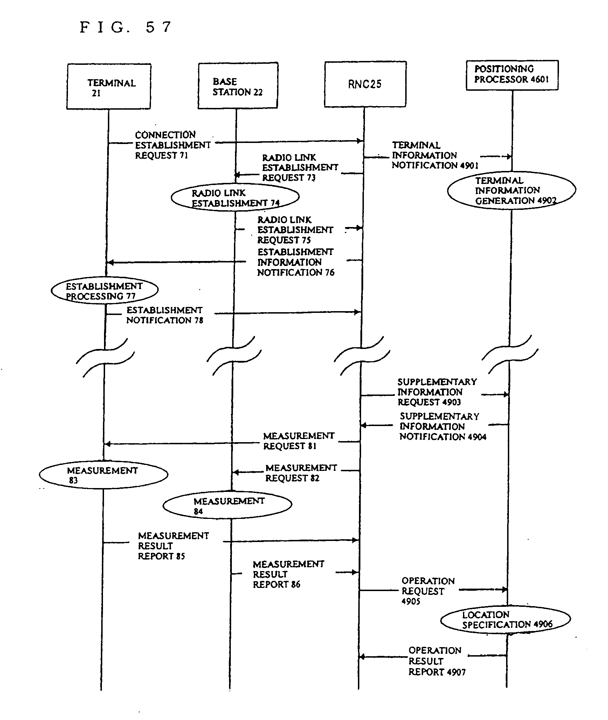

Fig. 57 is a drawing showing the flow of the processing in Step 5604 in the arithmetic processing section 2406 of the terminal 21.

The arithmetic processing section 2406 of the terminal 21 refers to the memory 2407 to obtain the orbit information on the GPS satellites 1401 and 1408 (F5701) to calculate the circle 1402 and the circle 3201 by combining the orbit information with the measurement results in Step 96 (F5702, F5703).

Subsequently, the arithmetic processing section 2406 of the terminal 21 calculates the intersection points between the calculated circles to find the candidate points 3202 and 3203 (F5704). Then, the arithmetic processing section 2406 of the terminal 21 refers to the memory 2407 to obtain the information on the location of the base station 22 to calculate the distance between the candidate points 3202, 3203 and the base station 22 (F5706).

The arithmetic processing section 2406 of the terminal 21 further refers to the memory 2407, and refers to the round-trip propagation time between the base station 22 and the terminal 21 notified as the supplementary information (F5707) to calculate the distance between the terminal 21 and the base station 22 (F5708).

The arithmetic processing section 2406 of the terminal 21 compares the distance between the two candidate points and the base station 22 calculated in F5706 with the distance between the terminal 21 and the base station 22 calculated in F5708 to determine the candidate point having a value close to the distance between the terminal 21 and the base station 22 as the location of the terminal. In accordance with the present other aspect, the candidate point 3202 has a value closer to the distance calculated in F5706, so that the location of the terminal 21 is specified as the candidate point 3202.

This is the end of the description of the other aspect 5 in the embodiment 5.

### (Embodiment 6)

An embodiment 6 of the present invention will be described with reference to the drawings.

While the embodiment 1 to the embodiment 5 use the information on the sector in which the terminal 21 is located in specifying the location of the terminal 21, a method for specifying the location of the terminal 21 by that a base station 22 measures the arrival direction of a signal from the terminal 21 can be considered.

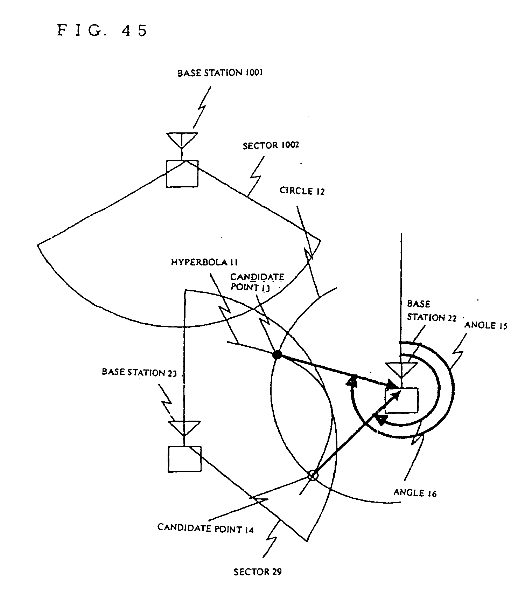

Fig. 45 is a drawing showing the principal of specifying the location of the terminal 21 in accordance with the present embodiment. Incidentally, a radio link is measured between the terminal 21 and the base station 22.

In accordance with the present embodiment, candidate points 13 and 14 are calculated by finding intersection points between a hyperbola 11 and a circle 12 in a way similar to the embodiments 1 and 2. Incidentally, the candidate points may be calculated by finding intersection points between a circle 12 and a circle 1101 in a way similar to the embodiment 3, or the candidate points may be calculated by finding intersection points between a circle 1402 and a circle 1403 in a way similar to the embodiment 4.

In addition, the present embodiment assumes that base station information is stored in the form shown in Fig. 11. Incidentally, information showing the direction of sectors may be represented by the starting angle of the sectors.

To specify the location of the terminal 21 from the two candidate points, the present embodiment uses an angle from the true north in a direction in which a signal from the terminal 21 comes (hereinafter, referred to as an arrival angle). As a specific method for measuring the arrival angle, there can be considered a method for utilizing an antenna directivity direction upon receipt of the signal from the terminal 21, and the like by using an adaptive allay antenna for a receiving antenna in the base station 22.

Once the arrival angle has been measured, the measured arrival angle is compared with angles 15 and 16 to specify the candidate point 13 having an angle which corresponds with the arrival angle as the terminal 21.

Hereinafter, an example of a procedure for specifying the location in accordance with the present embodiment with reference to Fig. 12.

The RNC 25 transmits a measurement request to the terminal 21 (Step 81), and the terminal 21 having received the measurement request performs the requested measurement (Step 83), and reports the measurement results to the RNC 25 (Step 85). Incidentally, the processing in each step is identical to the step in the embodiment 1, so that the description will be omitted.

The RNC 25 also transmits a measurement request to the base station 22 (Step 82). At this time, unlike the embodiment 1, the measurement that the RNC 25 requests is the measurement of the round-trip propagation time between the terminal 21 and the base station 22, and the measurement of the arrival angle of the signal from the terminal 21, so that the RNC 25 notifies terminal IDs necessary for the measurement together with the measurement request.

The base station 22 having received the measurement request performs the requested measurement (Step 84). In accordance with the present embodiment, unlike the embodiment 1, the base station 22 performs the measurement of the arrival angle from the terminal 21 in addition to the measurement of the round-trip propagation time with the terminal 21.

Upon completion of the measurement, the base station 22 reports the measurement results to the RNC 25 (Step 86). In accordance with the present embodiment, unlike the embodiment 1, the base station 22 reports the measurement results of the arrival angle from the terminal 21 in addition to the measurement results of the round-trip propagation time with the terminal 21.

The RNC 25 having received the measurement results from the terminal 21 and the base station 22 performs processing for specifying the location of the terminal (Step 89). Hereinafter, the processing in Step 89 in the present embodiment will be described with reference to the drawings.

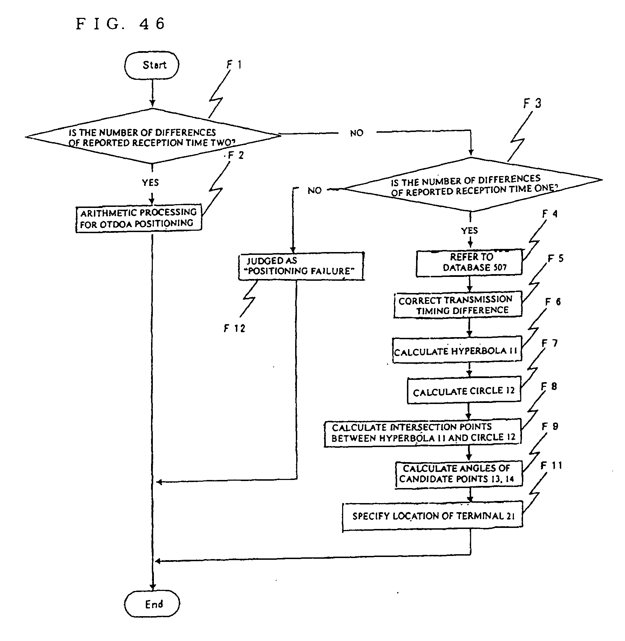

Fig. 46 shows the flow of processing in an arithmetic processing section 506 of the RNC 25 in accordance with the present embodiment.

Incidentally, each processing other than in F11 is identical to the processing described in the first embodiment, so that the description will be omitted.

The processing in F11 in accordance with the present embodiment will be described below.

In F11, angles 15 and 16 calculated in F9 are compared with the measured arrival angle of the terminal 21 to determine the location of the candidate point having an angle close to the angle indicating the center direction of a sector 27 as the location of the terminal 21. In accordance with the present embodiment, the angle 15 is closer to the center direction of the sector 27, 305 degrees, so that the location of the terminal 21 is specified as the candidate point 13.

Incidentally, while the present embodiment has described the procedure in Fig. 16 as an example, the location of the terminal 21 may be specified using the procedure in Fig. 17 in a way similar to the first embodiment.

Next, other aspect 1 of the embodiment 6 will be described.

While the present embodiment has described an example in which the RNC 25 performs arithmetic processing for calculating the location of the terminal 21, the terminal 21 may perform the arithmetic processing in a way similar to the embodiment 2.

Hereinafter, an example of the processing in the other aspect 1 of the present embodiment will be described with reference to Fig. 17.

A measurement request 91 which the RNC 25 transmits to the base station 22 includes the measurement request for the arrival angle of the signal from the terminal 21 in addition to the round-trip propagation time between the terminal 21 and the base station 22. In measurement 84, the measurement of the arrival angle of the signal from the terminal 21 in addition to the round-trip propagation time between the terminal 21 and the base station 22 is performed. A measurement result report 93 includes the measurement results of the arrival angle in addition to the measured round-trip propagation time.

Additionally, information on "the arrival angle of the signal from the terminal 21" measured by the base station 22 is added to supplementary information notified together with a positioning request 94.

Hereinafter, the processing in location specification 98 will be described with reference to the drawings.

Fig. 39 is a diagram showing the flow of processing in an arithmetic processing section 2406 of the terminal 21 in accordance with the present modification.

Incidentally, each processing other than in F2511 is identical to the processing described in the first embodiment, so that the description will be omitted.

The processing in F2511 in the present other aspect will be described below.

In F2511, the angles 15 and 16 calculated in F2509 are compared with the arrival angle of the terminal 21 notified as the supplementary information to determine the location of the candidate point having an angle close to the angle indicating the center direction of the sector 27 as the location of the terminal 21. In accordance with the present embodiment, the angle 15 is closer to the center direction of the sector 27, 305 degrees, so that the location of the terminal 21 is specified as the candidate point 13.

Incidentally, while the present embodiment has described the procedure in Fig. 21 as an example, the location of the terminal 21 may be specified using the procedure in Fig. 23 in a way similar to the first embodiment.

### (Embodiment 7)

An embodiment 7 of the present invention will be described with reference to the drawings.

While the embodiment 6 has described a method for using the arrival angle of the signal from the terminal 21 measured by the base station 22 to specify one of the two calculated candidate points for the terminal 21 as the location of the terminal 21, a method for specifying one of the calculated candidate points as the location of the terminal 21 by that the terminal 21 measures arrival angles of signals from base stations 22 and 23 can be considered.

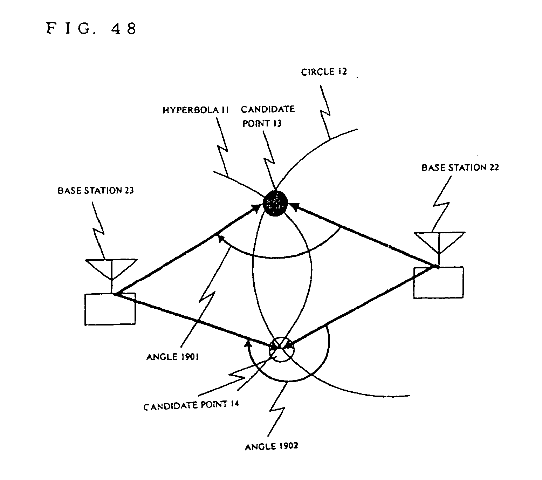

Fig. 48 is a drawing showing the principal of a method for specifying the location of the terminal 21 in accordance with the present embodiment. Incidentally, a radio link is measured between the terminal 21 and the base station 22.

In accordance with the present embodiment, candidate points 13 and 14 are calculated by finding intersection points between a hyperbola 11 and a circle 12 in a way similar to the embodiments 1 and 2. Incidentally, the candidate points may be calculated by finding the intersection points between the circle 12 and a circle 1101 in a way similar to the embodiment 3.

To specify the location of the terminal 21 from the two candidate points, the present embodiment uses a difference of the arrival angles of the signals from the base station 22 and the base station 23. As a specific method for measuring arrival angles, there can be considered a method for utilizing an antenna directivity direction upon receipt of the signal from the terminal 21 with the use of an adaptive allay antenna for a receiving antenna of the base station 22 , and the like.

Once the arrival angles have been measured, each of angles 1901 and 1902 which is a difference of angles which straight lines connecting the base stations 22 and 23 calculated from the location of the base stations 22 and 23 and the location of the candidate points 13 and 14 and the candidate points form with the true north is compared with the difference of the arrival angle measured by the terminal 21 to specify the candidate point 13 having the angle 1901 which corresponds with the difference of the arrival angle as the terminal 21.

Hereinafter, a procedure for location specification in accordance with the present embodiment with reference to Fig. 16 showing the location specification.

In the case of determining the location of the terminal 21, an RNC 25 requests the terminal 21 to perform measurement for collecting information necessary for determining the location (Step 81). In the case of the present embodiment, the RNC 25 requests the terminal 21 to perform the measurement of the arrival angles of pilot signals transmitted by each of the base stations 22 and 23 in addition to the measurement of a difference of the reception time of the pilot signals transmitted by each of the base stations 22 and 23.

The RNC 25 also requests the base station 22 to perform the measurement for collecting the information necessary for determining the location (Step 82). Incidentally, the processing in this step is identical to the processing described in the embodiment 1, so that the description will be omitted.

The terminal 21 having received the measurement request measures the reception time of the pilot signals having received from each of the base stations (in the case of the present embodiment, base stations 22, and 23) specified by the RNC 25, and calculates the difference of the measured reception time. In addition, the terminal 21 measures the arrival angles of the pilot signals transmitted by each of the base stations 22 and 23 (Step 83). Upon completion of the measurement, the terminal 21 transmits the measurement results to the RNC 25 (Step 85). And, the base station 22 having received the measurement request transmits a signal to the terminal (in the case of the present embodiment, terminal 21) specified by the RNC 25, measures the round-trip propagation time of the signal between the terminal and the base station 22 from the difference between the time when the base station 22 has received a response from the terminal and the time when the base station 22 has transmitted the signal (Step 84), and transmits the measured round-trip propagation time to the RNC 25 (Step 86).

In Step 89, the RNC 25 calculates the candidate points for the location of the terminal 21. Hereinafter, a method for specifying the location of the terminal with reference to the drawings.

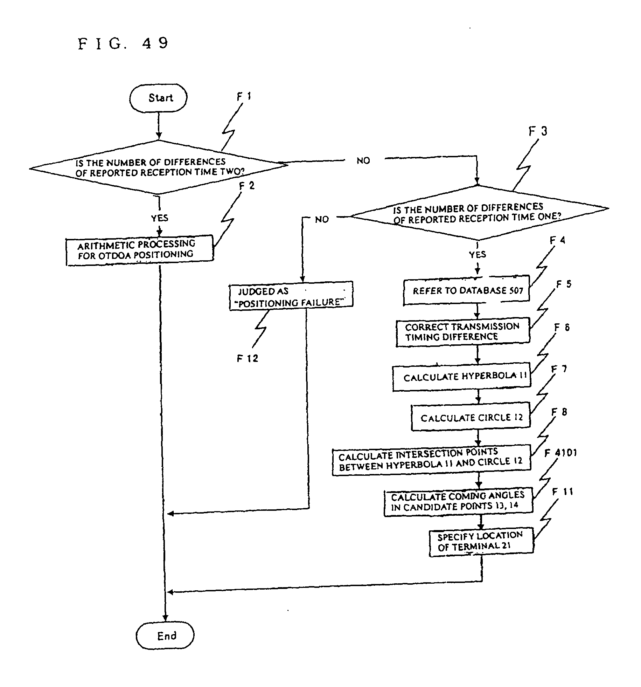

Fig. 49 is a drawing showing the flow of processing in an arithmetic processing section 506 of the RNC 25.

Incidentally, each processing other than in F4101 and F11 is identical to the processing described in the first embodiment, so that the description will be omitted.

The processing in F4101 and F11 in accordance with the present embodiment will be described below.

In F4101, the angle 1901 of an angle which a straight line connecting the candidate point 13 and the base station 23 forms with a straight line connecting the candidate point 13 and the base station 22 is calculated. For the candidate point 14, the same processing is performed to calculate the angle 1902.

In F11, the difference between the arrival angle reported from the terminal 21 and the arrival angle from the base station 23 based on the arrival angle from the base station 22 is calculated, and compared with the angles 1901 and 1902 to specify the candidate point 13 having the angle 1901 which corresponds with the difference of the arrival angle in size as the location of the terminal 21.

Incidentally, while the present embodiment has described the procedure in Fig. 16 as an example, the location of the terminal 21 may be specified using the procedure in Fig. 17 in a way similar to the first embodiment.

Next, other aspect 1 in the embodiment 7 will be described.

While the present embodiment has described that the RNC 25 performs the arithmetic processing for specifying the location of the terminal 21, the terminal 21 may perform the arithmetic processing.

Hereinafter, an example of a procedure for the processing in the present modification will be described with reference to Fig. 21.

In the case of the present modification, in a positioning request 95 transmitted to the terminal 21 by the RNC 25, requested is the measurement of the arrival angles of the pilot signals transmitted by each of the base stations 22 and 23 in addition to the measurement of the difference of the reception time of the pilot signals transmitted by each of the base stations 22 and 23.

Additionally, information on "the center direction of the sector in which the terminal 21 is located" is deleted from supplementary information notified together with the positioning request 95.

Hereinafter, the processing in location specification 98 will be described with reference to the drawings.

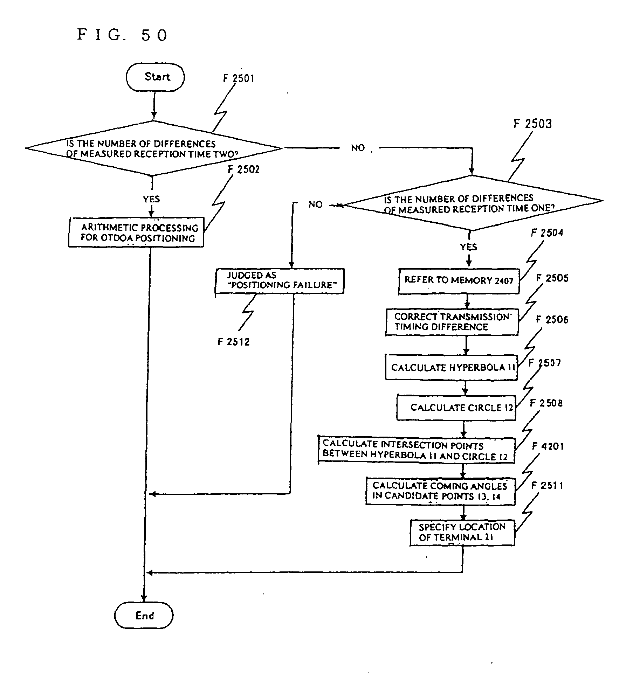

Fig. 50 is a drawing showing the flow of processing in an arithmetic processing section 2406 of the terminal 21.

Incidentally, each processing other than in F4201 and F2511 is identical to the processing described in the second embodiment, so that the description will be omitted.

In F4201, the angle 1901 of an angle which a straight line connecting the candidate point 13 and the base station 22 forms with a straight line connecting the candidate point 13 and the base station 23 is calculated from information on the location of the base stations 22 and 23 obtained in F2504. For the candidate point 14, the same processing is performed to calculate the angle 1902.

In F2511, the difference between the measured arrival angle and the arrival angle of the signal from the base station 23 based on the arrival angle of the signal from the base station 22 is calculated, and compared with the angles 1901 and 1902 to specify the candidate point 13 having the angle 1901 which corresponds with the difference of the arrival angle in size as the location of the terminal 21.

Incidentally, while the present embodiment has described the procedure in Fig. 21 as an example, the location of the terminal 21 may be specified using the procedure in Fig. 23 in a way similar to the embodiment 1.

### (Embodiment 8)

Embodiment 8 of the present invention will be described with reference to the drawings.

While the embodiments 1 to 7 have specified one of the two calculated candidate points for the terminal 21 as the location of the terminal 21 using the information on the sector 27 in which the terminal 21 is located and the arrival angles received by the base stations and the terminal, a method for utilizing the electric field intensity of a signal received by the terminal can be considered.

In the case of the present embodiment, candidate points 13 and 14 may be calculated by finding intersection points between a hyperbola 11 and a circle 12 in a way similar to the embodiments 1 and 2, or the candidate points may be calculated by finding intersection points between the circle 12 and a circle 1101 in a way similar to the embodiment 3, or the candidate points may be calculated by finding intersection points between a circle 1402 and a circle 1403 in a way similar to the embodiment 4, or the candidate points may be calculated by finding intersection points between the circle 1402 and a circle 3201 in a way similar to the embodiment 5. However, the present embodiment will describe a case in which the candidate points 13 and 14 are obtained by finding the intersection points between the hyperbola 11 and the circle 12.

In addition, arithmetic processing for specifying the location of the terminal 21 may be executed by an RNC 25, or by the terminal 21. However, the present embodiment will describe the processing for the case where the RNC 25 specifies the location of the terminal 21.

A procedure for specifying one of the two candidate points in accordance with the present embodiment as the location of the terminal 21 will be described with reference to Fig. 16.

Incidentally, in the case of the present embodiment, measurement of the received electric field intensity of a pilot signal received from the base station 22 is performed in a plurality of points of a sector formed by the base station 22. The present embodiment assumes that the measurement results are kept in database 507 of the RNC 25 together with the coordinates of the points in which the measurement has been performed.

In the case of specifying the location of the terminal 21, the RNC 25 first transmits a measurement request to the terminal 21 (Step 81). Specifically, the RNC 25 requests the terminal 21 to measure a difference of the reception time of pilot signals from the base stations 22, 23, and 1001 and the received electric field intensity. At this time, the RNC 25 notifies supplementary information necessary for the measurement, but the supplementary information in the present embodiment is identical to the supplementary information in the embodiment 1, so that the description will be omitted.

In addition, the RNC 25 transmits the measurement request to the base station 22 (Step 82), and the base station 22 having received the measurement request performs the measurement (Step 84), and reports the measurement results to the RNC 25 (Step 86).

Incidentally, the processing in each step is identical to the processing in the embodiment 1, so that the description will be omitted.

The terminal 21 having received the measurement request performs the requested measurement (Step 83). Specifically, the terminal 21 measures the difference of the reception time of the pilot signals from the base stations 22, 23, and 1001 and the received electric field intensity of the pilot signals received from the base stations 22, 23, and 1001.

The terminal 21 having completed the measurement reports the measurement results to the RNC 25 (Step 85). Specifically, the terminal 21 reports the measurement of the difference of the reception time of the pilot signals from the base stations 22 and 23, and the received electric field intensity of the pilot signals received from the base stations 22 and 23.

The RNC 25 having received the measurement result report from the terminal 21 and the base station 22 performs arithmetic processing for location specification (Step 89).

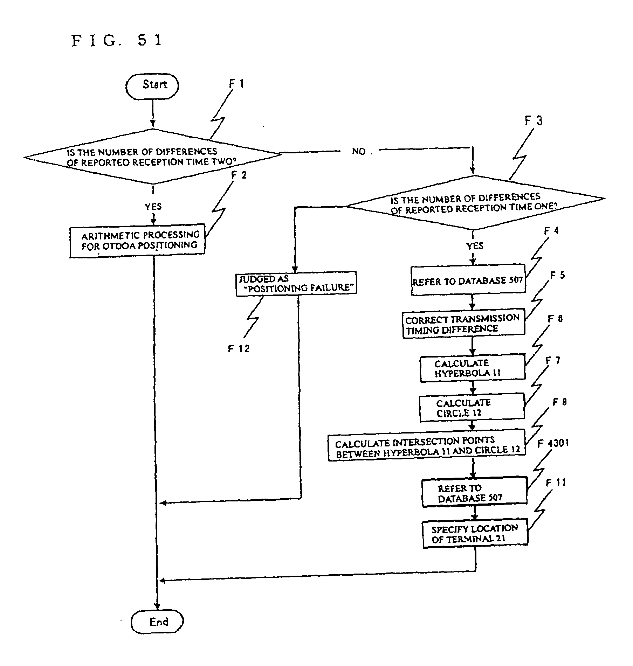

Hereinafter, processing in an arithmetic processing section 506 of the RNC 25 will be described with reference to Fig. 51.

The processing in F1 to F8 in the arithmetic processing section 506 of the RNC 25 is identical to that in the embodiment 1, so that the description will be omitted.

In F4301, the arithmetic processing section 506 of the RNC 25 refers to the database 507 to obtain the received electric field intensity and the coordinates of the points in which the measurement has been performed. Incidentally, it is the received electric field intensity measured at a point closest to each location of the candidate points 13 and 14 calculated in F8 that the arithmetic processing section 506 of the RNC 25 has obtained.

In F11, the arithmetic processing section 506 of the RNC 25 compares the received electric field intensity reported from the terminal 21 with the received electric field intensity obtained in F4301 to specify a point close to the received electric field intensity measured in the terminal 21. Then, the arithmetic processing section 506 of the RNC 25 compares the specified point with the location of the calculated candidate points 13 and 14 to specify the candidate point at a position close to the specified point as the location of the terminal 21.

Next, other aspect 1 in the embodiment 8 will be described.

While the present embodiment has specified one of the two candidate points as the location of the terminal 21 based on the received electric field intensity of the pilot signal from the base station 22 received by the terminal 21, a method for using the propagation condition of the pilot signals instead of the received electric field intensity to specify the location of the terminal 21 can be considered.

Hereinafter, the present modification will be described in detail with reference to Fig. 16.

Incidentally, in accordance with the present modification, performed is the propagation condition of the pilot signal from the base station 22 at the plurality of points in the sector formed by the base station 22 at the time of locating the base station 22. Specifically, measured is a delay profile in each measurement point. The measured delay profile is stored in the database 507 of the RNC 25 in relation to the location of the points in which the measurement has been performed.

In the case of specifying the location of the terminal 21, the RNC 25 first transmits a measurement request to the terminal 21 (Step 81). Specifically, the RNC 25 requests the terminal 21 to measure the difference of the reception time of the pilot signals from the base stations 22, 23, and 1001, and the delay profiles. At this time, the RNC 25 notifies the supplementary information necessary for the measurement, but the supplementary information in the present embodiment is identical to the supplementary information in the embodiment 1, so that the description will be omitted.

In addition, the RNC 25 transmits the measurement request to the base station 22 (Step 82), and the base station 22 having received the request performs the measurement (Step 84), and reports the measurement results to the RNC 25 (Step 86).

Incidentally, the processing in each step is identical to the processing in the embodiment 1, so that the description will be omitted.

The terminal 21 having received the measurement request performs the requested measurement (Step 83). Specifically, the terminal 21 measures the difference of the reception time of the pilot signals from the base stations 22, 23, and 1001 and the received electric field intensity of the pilot signals received from the base stations 22, 23, and 1001.

The terminal 21 having completed the measurement reports the measurement results to the RNC 25 (Step 85). Specifically, the terminal 21 reports the measurement of the difference of the reception time of the pilot signals from the base stations 22 and 23, and the delay profiles of the pilot signals received from the base stations 22 and 23.

The RNC 25 having received the measurement result report from the terminal 21 and the base station 22 performs the arithmetic processing for the location specification (Step 89).

Hereinafter, the processing in the arithmetic processing section 506 of the RNC 25 will be described with reference to Fig. 51.

The processing in F1 to F8 in the arithmetic processing section 506 of the RNC 25 is identical to that in the embodiment 1, so that the description will be omitted.

In F4301, the arithmetic processing section 506 of the RNC 25 refers to the database 507 to obtain the delay profiles and the coordinates of the points in which the measurement has been performed. Incidentally, it is the delay profiles measured in a point closest to each location of the candidate points 13 and 14 calculated in F8 that the arithmetic processing section 506 of the RNC 25 has obtained.

In F11, the arithmetic processing section 506 of the RNC 25 compares the delay profiles reported from the terminal 21 with the delay profiles obtained in F4301 to specify a point in which profiles close to the delay profiles measured in the terminal 21 have been measured. Specifically, the arithmetic processing section 506 of the RNC 25 specifies a point in which the number of peaks measured and the time difference between the peaks are close. Then, the arithmetic processing section 506 of the RNC 25 compares the specified point with the location of the calculated candidate points 13 and 14 to specify the candidate point at a position close to the specified point as the location of the terminal 21.

Subsequently, other aspect 2 in the embodiment 8 will be described.

While the present embodiment and the other aspect 1 have specified one of the two candidate points as the location of the terminal 21 based on the received electric field intensity and the propagation condition of the pilot signal from the base station 22 received by the terminal 21, a method for using information on geomagnetism measured by the terminal 21 instead of the received electric field intensity and the propagation condition to specify the location of the terminal 21 can be considered.

Hereinafter, the present aspect will be described in detail with reference to Fig. 16. Incidentally, the present aspect assumes that the terminal 21 has a function to measure the geomagnetism.

It should be noted that the geomagnetism is measured in the plurality of points in the sector formed by the base station 22. It is assumed that the measured geomagnetism is stored in the database 507 of the RNC 25 in relation to the location of the points in which the measurement has been performed.

In the case of specifying the location of the terminal 21, the RNC 25 first transmits a measurement request to the terminal 21 (Step 81). Specifically, the RNC 25 requests the terminal 21 to measure the difference of the reception time of the pilot signals from the base stations 22, 23, and 1001, and the geomagnetism. At this time, the RNC 25 notifies the supplementary information necessary for the measurement, but the supplementary information in the present embodiment is identical to the supplementary information in the embodiment 1, so that the description will be omitted.

In addition, the RNC 25 transmits the measurement request to the base station 22 (Step 82), and the base station 22 having received the request performs the measurement (Step 84), and reports the measurement results to the RNC 25 (Step 86).

Incidentally, the processing in each step is identical to the processing in the embodiment 1, so that the description will be omitted.

The terminal 21 having received the measurement request performs the requested measurement (Step 83). Specifically, the terminal 21 measures the difference of the reception time of the pilot signals from the base stations 22, 23, and 1001, and the geomagnetism.

The terminal 21 having completed the measurement reports the measurement results to the RNC 25 (Step 85). Specifically, the terminal 21 reports the difference of the reception time of the pilot signals from the base stations 22 and 23, and the measured geomagnetism.

The RNC 25 having received the measurement result report from the terminal 21 and the base station 22 performs the arithmetic processing for the location specification (Step 89).

Hereinafter, the processing in the arithmetic processing section 506 of the RNC 25 will be described with reference to Fig. 51.

The processing in F1 to F8 in the arithmetic processing section 506 of the RNC 25 is identical to that in the embodiment 1, so that the description will be omitted.

In F4301, the arithmetic processing section 506 of the RNC 25 refers to the database 507 to obtain the geomagnetism and the coordinates of the points in which the measurement has been performed. Incidentally, it is the geomagnetism measured in a point closest to each location of the candidate points 13 and 14 calculated in F8 that the arithmetic processing section 506 of the RNC 25 has obtained.

In F11, the arithmetic processing section 506 of the RNC 25 compares the geomagnetism reported from the terminal 21 with the geomagnetism obtained in F4301 to specify a point in which a value close to the geomagnetism measured in the terminal 21 has been measured. Then, the arithmetic processing section 506 of the RNC 25 compares the specified point with the location of the calculated candidate points 13 and 14 to specify the candidate point at a position close to the specified point as the location of the terminal 21.

Incidentally, while the present embodiment and the aspects 1 and 2 have described the procedure in Fig. 16 as an example, the location of the terminal 21 may be specified using the procedure in Fig. 17 in a way similar to the embodiment 1.

### (Embodiment 9)

An embodiment 9 of the present invention will be described in detail.

While the embodiments 1 to 8 have specified one of the two calculated candidate points for the terminal 21 as the location of the terminal 21 using the information on the sector 27 in which the terminal 21 is located, the arrival angles of the signals received by the base stations and the terminal, and the received electric field intensity, a method for using topographic information to specify the location of the terminal 21 from the calculated candidate points can be considered.

In the case of the present embodiment, candidate points 13 and 14 may be calculated by finding intersection points between a hyperbola 11 and a circle 12 in a way similar to the embodiments 1 and 2, or the candidate points may be calculated by finding intersection points between the circle 12 and a circle 1101 in a way similar to the embodiment 3, or the candidate points may be calculated by finding intersection points between a circle 1402 and a circle 1403 in a way similar to the embodiment 4, or the candidate points may be calculated by finding intersection points between the circle 1402 and a circle 3201 in a way similar to the embodiment 5. However, the present embodiment will describe a case in which the candidate points 13 and 14 are obtained by finding the intersection points between the hyperbola 11 and the circle 12.

In addition, arithmetic processing for specifying the location of the terminal 21 may be executed by the RNC 25, or by the terminal 21. However, the present embodiment will describe the processing for the case where the RNC 25 specifies the location of the terminal 21.

Incidentally, it is assumed that the topographic information is stored in database 508 of the RNC 25.

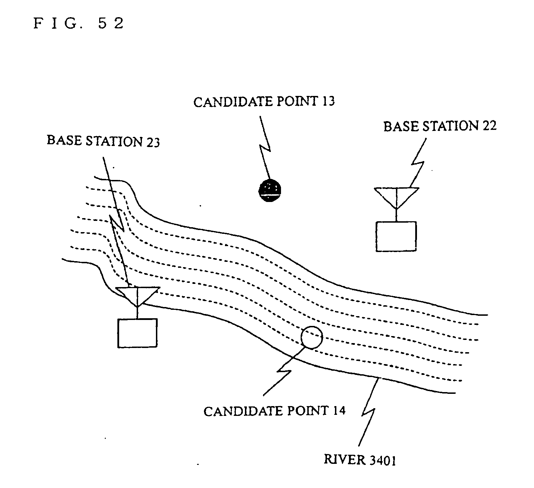

Fig. 52 is a drawing showing the principal of a method for specifying one of the two candidate points in accordance with the present embodiment as the location of the terminal 21.

Topographic information in each of the two candidate points 13 and 14 calculated as intersection points between a hyperbola and a circle, or between a circle and a circle is referred.

If the topographic information on the location of the candidate point 14 is a river 3401 as shown in Fig. 52, the terminal 21 judges it to be a point that is not likely to specify the candidate point 13 as the location of the terminal 21.

A procedure for specifying the location in the present embodiment will be described with reference to Fig. 16.

In the case of specifying the location of the terminal 21, the RNC 25 first transmits a measurement request to the terminal 21 (Step 81). Specifically, the RNC 25 requests the terminal 21 to measure a difference of the reception time of pilot signals from base stations 22, 23, and 1001. At this time, the RNC 25 notifies supplementary information necessary for the measurement, but the supplementary information in the present embodiment is identical to the supplementary information in the embodiment 1, so that the description will be omitted.

In addition, the RNC 25 transmits the measurement request to the base station 22 (Step 82), and the base station 22 having received the request performs the measurement (Step 84), and reports the measurement results to the RNC 25 (Step 86).

Incidentally, the processing in each step is identical to the processing in the embodiment 1, so that the description will be omitted.

The terminal 21 having received the measurement request performs the requested measurement (Step 83). Specifically, the terminal 21 measures the difference of the reception time of the pilot signals from the base stations 22, 23, and 1001.

The terminal 21 having completed the measurement reports the measurement results to the RNC 25 (Step 85). Specifically, the terminal 21 reports the measurement of the difference of the reception time of the pilot signals from the base stations 22 and 23.

The RNC 25 having received the measurement result report from the terminal 21 and the base station 22 performs the arithmetic processing for location specification (Step 89).

Hereinafter, processing in an arithmetic processing section 506 of the RNC 25 will be described with reference to Fig. 51.

The processing in F1 to F8 in the arithmetic processing section 506 of the RNC 25 is identical to that in the embodiment 1, so that the description will be omitted.

In F4301 in accordance with the present embodiment, the arithmetic processing section 506 of the RNC 25 refers to the database 507 to obtain the topographic information on the location of the calculated candidate points 13 and 14.

In F11, the arithmetic processing section 506 of the RNC 25 compares the obtained topographic information on the candidate points 13 and 14, and if the terminal 21 is not likely to exist in one of the candidate points, it excludes the one of the candidate point from the candidate points. In the case of the present embodiment, the candidate point 14 is located in the river 3401. This reveals that the terminal 21 cannot exist in the location of the candidate 14, with the result that the location of the candidate point 13 is specified as the location of the terminal 21.

Next, other aspect 1 in the embodiment 9 will be described.

While the present embodiment has excluded the location in which the terminal is not likely to exist, and specified the location of the terminal 21 by using the topographic information on the calculated points, a method for using altitude information on the candidate points to thereby specify the location of the terminal 21 can be considered.

Hereinafter, other aspects of the embodiment 9 will be described.

Incidentally, it is assumed that altitude information on a plurality of points in a sector formed by a base station is stored in the database 507 of the RNC 25. It is also assumed that the terminal 21 has a function to measure the altitude of its own location.

A procedure for specifying the location of the terminal 21 in accordance with the present modification will be described with reference to Fig. 16.

In the case of specifying the location of the terminal 21, the RNC 25 first transmits a measurement request to the terminal 21 (Step 81). Specifically, the RNC 25 requests the terminal 21 to measure the difference of the reception time of the pilot signals from the base stations 22, 23, and 1001, and the altitude. At this time, the RNC 25 notifies the supplementary information necessary for the measurement, but the supplementary information in the present embodiment is identical to the supplementary information in the embodiment 1, so that the description will be omitted.

In addition, the RNC 25 transmits the measurement request to the base station 22 (Step 82), and the base station 22 having received the request performs the measurement (Step 84), and reports the measurement results to the RNC 25 (Step 86).

Incidentally, the processing in each step is identical to the processing in the embodiment 1, so that the description will be omitted.

The terminal 21 having received the measurement request performs the requested measurement (Step 83). Specifically, the terminal 21 measures the difference of the reception time of the pilot signals from the base stations 22, 23, and 1001, and the altitude of its own location.

The terminal 21 having completed the measurement reports the measurement results to the RNC 25 (Step 85). Specifically, the terminal 21 reports the measurement results of the difference of the reception time of the pilot signals from the base stations 22 and 23, and the measurement results of the altitude.

The RNC 25 having received the measurement result report from the terminal 21 and the base station 22 performs the arithmetic processing for the location specification (Step 89). Hereinafter, the processing in the arithmetic processing section 506 of the RNC 25 will be described with reference to Fig. 51.

The processing in F1 to F8 in the arithmetic processing section 506 of the RNC 25 is identical to that in the embodiment 1, so that the description will be omitted.

In F4301 in accordance with the present embodiment, the arithmetic processing section 506 of the RNC 25 refers to the database 507 to obtain the altitude of the location of the calculated candidate points 13 and 14.

In F11, the arithmetic processing section 506 of the RNC 25 compares the obtained altitude of the candidate points 13 and 14 with the altitude reported from the terminal 21 to specify the candidate point having an approximate value as the location of the terminal 21.

Incidentally, while the present embodiment and the other aspect 1 have described the procedure in Fig. 16 as an example, the location of the terminal 21 may be specified using the procedure in Fig. 17 in a way similar to the embodiment 1.

### (Embodiment 10)

An embodiment 10 of the present invention will be described with reference to the drawings.

While the embodiments 1 to 9 have described a method for using the sector information, the arrival angles, the received electric field intensity, and cartographic information to specify one of the two candidate points as the location of the terminal 21, a method for utilizing the past positioning results to specify the location of the terminal 21 can be considered.

In the case of the present embodiment, candidate points 13 and 14 may be calculated by finding intersection points between a hyperbola 11 and a circle 12 in a way similar to the embodiments 1 and 2, or the candidate points may be calculated by finding intersection points between the circle 12 and a circle 1101 in a way similar to the embodiment 3, or the candidate points may be calculated by finding intersection points between a circle 1402 and a circle 1403 in a way similar to the embodiment 4, or the candidate points may be calculated by finding intersection points between the circle 1402 and a circle 3201 in a way similar to the embodiment 5. However, the present embodiment will describe a case in which the candidate points 13 and 14 are obtained by finding the intersection points between the hyperbola 11 and the circle 12.

In addition, arithmetic processing for specifying the location of the terminal 21 may be executed by the RNC 25, or by the terminal 21. However, the present embodiment will describe the processing for the case where the RNC 25 specifies the location of the terminal 21.

Incidentally, it is assumed that the positioning results of the terminal 21 are stored in database 507 of the RNC 25 in relation to the time when the positioning has been performed.

A procedure for specifying one of the two candidate points in accordance with the present embodiment as the location of the terminal 21 will be described with reference to Fig. 16.

In the case of specifying the location of the terminal 21, the RNC 25 first transmits a measurement request to the terminal 21 (Step 81). Specifically, the RNC 25 requests the terminal 21 to measure a difference of the reception time of pilot signals from the base stations 22, 23, and 1001. At this time, the RNC 25 notifies supplementary information necessary for the measurement, but the supplementary information in the present embodiment is identical to the supplementary information in the embodiment 1, so that the description will be omitted.

In addition, the RNC 25 transmits the measurement request to the base station 22 (Step 82), and the base station 22 having received the request performs the measurement (Step 84), and reports the measurement results to the RNC 25 (Step 86).

Incidentally, the processing in each step is identical to the processing in the embodiment 1, so that the description will be omitted.

The terminal 21 having received the measurement request performs the requested measurement (Step 83). Specifically, the terminal 21 measures the difference of the reception time of the pilot signals from the base stations 22, 23, and 1001.

The terminal 21 having completed the measurement reports the measurement results to the RNC 25 (Step 85). Specifically, the terminal 21 reports the measurement of the difference of the reception time of the pilot signals from the base stations 22 and 23.

The RNC 25 having received the measurement result report from the terminal 21 and the base station 22 performs the arithmetic processing for location specification (Step 89). Hereinafter, processing in an arithmetic processing section 506 of the RNC 25 will be described with reference to Fig. 51.

The processing in F1 to F8 in the arithmetic processing section 506 of the RNC 25 is identical to that in the embodiment 1, so that the description will be omitted.

In F4301 in accordance with the present embodiment, the arithmetic processing section 506 of the RNC 25 refers to the database 507 to obtain the latest positioning result of the positioning results of the terminal 21 which are kept.

In F11, the arithmetic processing section 506 of the RNC 25 calculates the distance between the candidate points 13 and 14, and the positioning result obtained in F4301 to specify the candidate point with shorter distance as the location of the terminal 21.

Incidentally, while the present embodiment and the modification 1 have described the procedure in Fig. 16 as an example, the location of the terminal 21 may be specified using the procedure in Fig. 17 in a way similar to the embodiment 1.

### (Embodiment 11)

An embodiment 11 of the present invention will be described below.

While the embodiments 1 to 10 have described a method for using the sector information, the arrival angles, the received electric field intensity, the cartographic information, and the past positioning results to specify one of the two candidate points as the location of the terminal 21, a method for utilizing building information around the candidate points to specify the location of the terminal 21 can be considered.

In the case of the present embodiment, candidate points 13 and 14 may be calculated by finding intersection points between a hyperbola 11 and a circle 12 in a way similar to the embodiments 1 and 2, or the candidate points may be calculated by finding intersection points between the circle 12 and a circle 1101 in a way similar to the embodiment 3, or the candidate points may be calculated by finding intersection points between a circle 1402 and a circle 1403 in a way similar to the embodiment 4, or the candidate points may be calculated by finding intersection points between the circle 1402 and a circle 3201 in a way similar to the embodiment 5. However, the present embodiment will describe a case in which the candidate points 13 and 14 are obtained by finding the intersection points between the hyperbola 11 and the circle 12.

In addition, arithmetic processing for specifying the location of the terminal 21 may be executed by the RNC 25, or by the terminal 21. However, the present embodiment will describe the processing for the case where the RNC 25 specifies the location of the terminal 21.

Incidentally, it is assumed that information on buildings in a sector formed by a base station is stored in database 507 of the RNC 25, and that the terminal 21 has an imaging function to measure the information on the buildings.

A procedure for specifying one of the two candidate points in accordance with the present embodiment as the location of the terminal 21 will be described with reference to Fig. 16.

In the case of specifying the location of the terminal 21, the RNC 25 first transmits a measurement request to the terminal 21 (Step 81). Specifically, the RNC 25 requests the terminal 21 to measure a difference of the reception time of pilot signals from the base stations 22, 23, and 1001, and the information on the buildings. At this time, the RNC 25 notifies supplementary information necessary for the measurement, but the supplementary information in the present embodiment is identical to the supplementary information in the embodiment 1, so that the description will be omitted.

In addition, the RNC 25 transmits the measurement request to the base station 22 (Step 82), and the base station 22 having received the request performs the measurement (Step 84), and reports the measurement results to the RNC 25 (Step 86).

Incidentally, the processing in each step is identical to the processing in the embodiment 1, so that the description will be omitted.

The terminal 21 having received the measurement request performs the requested measurement (Step 83). Specifically, the terminal 21 measures the difference of the reception time of the pilot signals from the base stations 22, 23, and 1001. In addition to this, the terminal 21 measures the information on the buildings. Specifically, the terminal 21 photographs the outward appearance of surrounding buildings using the imaging function.

The terminal 21 having completed the measurement reports the measurement results to the RNC 25 (Step 85). Specifically, the terminal 21 reports the measurement results of the difference of the reception time of the pilot signals from the base stations 22 and 23, and the outward appearance of the surrounding buildings photographed by the terminal 21 using the imaging function.

The RNC 25 having received the measurement result report from the terminal 21 and the base station 22 performs the arithmetic processing for location specification (Step 89). Hereinafter, processing in an arithmetic processing section 506 of the RNC 25 will be described with reference to Fig. 51.

The processing in F1 to F8 in the arithmetic processing section 506 of the RNC 25 is identical to that in the embodiment 1, so that the description will be omitted.

In F4301 in accordance with the present embodiment, the arithmetic processing section 506 of the RNC 25 refers to the database 507 to obtain the information on the buildings around the candidate points 13 and 14.

In F11, the arithmetic processing section 506 of the RNC 25 compares the outward appearance of the surrounding buildings reported from the terminal 21 with the information on the buildings around the candidate points obtained in F4301 to specify the candidate point having the information on the buildings which correspond with the outward appearance of the buildings reported from the terminal 21 as the location of the terminal 21.

Incidentally, while the present embodiment and the following other aspects describe the procedure in Fig. 16 as an example, the location of the terminal 21 may be specified using the procedure in Fig. 17 in a way similar to the embodiment 1.

Next, other aspects in the embodiment 11 will be described.

While the present embodiment has described a method for using the information on the buildings to specify the location of the terminal 21, a method for utilizing orbit information on GPS satellites when the two candidate points are calculated by finding the intersection points between the circle 1402 and the circle 1403 in a way similar to the embodiment 4, and when the candidate points are calculated by finding the intersection points between the circle 1402 and the circle 3201 in a way similar to the embodiment 5.

Hereinafter, a procedure for specifying the location of the terminal 21 in accordance with the present embodiment will be described with reference to Fig. 16.

Incidentally, it is assumed that the RNC 25 keeps terminal information, base station information, orbit information on a plurality of the GPS satellites, and the information on the buildings in the database 507.

The RNC 25 requests the terminal 21 to perform measurement (Step 81), and the terminal 21 having received the measurement request performs the requested measurement (Step 83), and reports the measurement results to the RNC 25 upon completion of the measurement (Step 85). Incidentally, the processing in each step is identical to the processing in the embodiment 4, so that the description will be omitted.

In addition, the RNC 25 requests the base station 22 to measure the round-trip propagation time with the terminal 21 (Step 82), and the base station 22 having received the measurement request measures the round-trip propagation time with the terminal 21 (Step 84), and reports the measurement results to the RNC 25 (Step 86). Incidentally, the processing in each step is identical to the processing described in the embodiment 1, so that the description will be omitted.

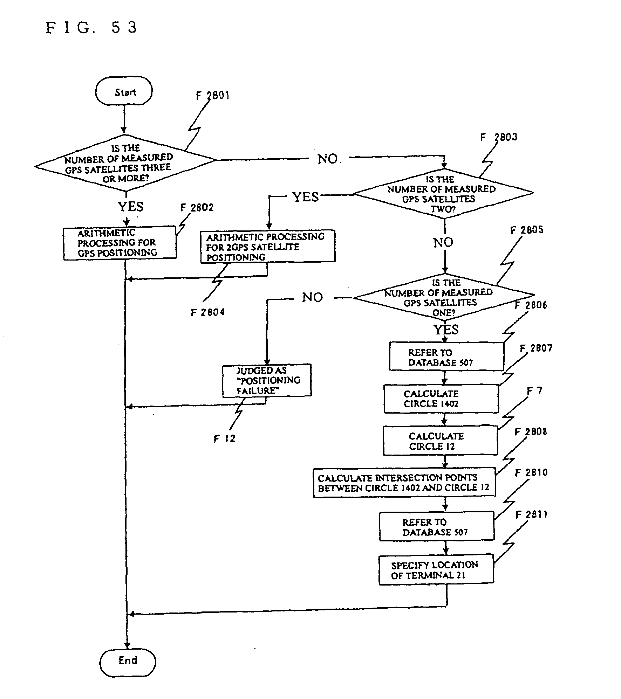

The RNC 25 having received the measurement result report from the terminal 21 and the base station 22 specifies the location of the terminal 21 (Step 83). Hereinafter, details of the processing in this step will be described with reference to Fig. 53.

The processing in F2801 to F2808 in the arithmetic processing section 506 of the RNC 25 is identical to that in the embodiment 4, so that the description will be omitted.

In F2810 in accordance with the present embodiment, the arithmetic processing section 506 of the RNC 25 refers to the database 507 to obtain orbit information on a GPS satellite 1401 that the terminal 21 has succeeded in the measurement, and the information on the buildings around the candidate points 13 and 14.

In F11, the arithmetic processing section 506 of the RNC 25 excludes the candidate point that cannot receive a signal from the GPS satellite 1401 due to a shield such as a building from the orbit information on the GPS satellite 1401 and the information on the buildings around the candidate points 13 and 14 to specify the remaining candidate point as the location of the terminal 21.

Incidentally, while the present embodiment and the other aspects have described the procedure in Fig. 16 as an example, the location of the terminal 21 may be specified using the procedure in Fig. 17 in a way similar to the embodiment 1.

### (Embodiment 12)

An embodiment 12 of the present invention will be described below.

While the embodiments 1 to 11 have described a method for using the sector information, the arrival angles, the received electric field intensity, the topographic information, the past positioning results, and the building information to specify one of the two candidate points as the location of the terminal 21, a method for utilizing information on terminals which are existing around the terminal 21, and the location of which has been specified to thereby specify the location of the terminal 21 can be considered.

In the case of the present embodiment, candidate points 13 and 14 may be calculated by finding intersection points between a hyperbola 11 and a circle 12 in a way similar to the embodiments 1 and 2, or the candidate points may be calculated by finding intersection points between the circle 12 and a circle 1101 in a way similar to the embodiment 3, or the candidate points may be calculated by finding intersection points between a circle 1402 and a circle 1403 in a way similar to the embodiment 4, or the candidate points may be calculated by finding intersection points between the circle 1402 and a circle 3201 in a way similar to the embodiment 5. However, the present embodiment will describe a case in which the candidate points 13 and 14 are obtained by finding the intersection points between the hyperbola 11 and the circle 12.

In addition, arithmetic processing for specifying the location of the terminal 21 may be executed by the RNC 25, or by the terminal 21. However, the present embodiment will describe the processing for the case where the RNC 25 specifies the location of the terminal 21.

Hereinafter, a procedure for specifying one of the two candidate points in accordance with the present embodiment as the location of the terminal 21 will be described with reference to Fig. 16.

Incidentally, in accordance with the present embodiment, it is assumed that the RNC 25 keeps information on the location of a terminal whose detailed location is known of terminals located in a sector 27 in database 507 in addition to terminal information and base station information.

In the case of specifying the location of the terminal 21, the RNC 25 first transmits a measurement request to the terminal 21 (Step 81). Specifically, the RNC 25 requests the terminal 21 to measure a difference of the reception time of pilot signals from base stations 22, 23, and 1001. At this time, the RNC 25 notifies supplementary information necessary for the measurement, but the supplementary information in the present embodiment is identical to the supplementary information in the embodiment 1, so that the description will be omitted.

In addition, the RNC 25 transmits the measurement request to the base station 22 (Step 82), and the base station 22 having received the request performs the measurement (Step 84), and reports the measurement results to the RNC 25 (Step 86).

Incidentally, the processing in each step is identical to the processing in the embodiment 1, so that the description will be omitted.

The terminal 21 having received the measurement request performs the requested measurement (Step 83). Specifically, the terminal 21 measures the difference of the reception time of the pilot signals from the base stations 22, 23, and 1001.

The terminal 21 having completed the measurement reports the measurement results to the RNC 25 (Step 85). Specifically, the terminal 21 reports the measurement results of the difference of the reception time of the pilot signals from the base stations 22 and 23.

The RNC 25 having received the measurement result report from the terminal 21 and the base station 22 performs the arithmetic processing for location specification (Step 89). Hereinafter, processing in an arithmetic processing section 506 of the RNC 25 will be described with reference to Fig. 51.

The processing in F1 to F8 in the arithmetic processing section 506 of the RNC 25 is identical to that in the embodiment 1, so that the description will be omitted.

In F4301 in accordance with the present embodiment, the arithmetic processing section 506 of the RNC 25 refers to the database 507 to obtain location information on terminals other than the terminal 21 existing in the sector 27.

In F11, the arithmetic processing section 506 of the RNC 25 compares the location information on the terminals other than the terminal 21 obtained in F4301 with the location of the candidate points 13 and 14 to specify the candidate point close to the location of the terminals other than the terminal 21 existing in the sector 27 as the location of the terminal 21.

Incidentally, while the present embodiment and the modification 1 have described the procedure in Fig. 16 as an example, the location of the terminal 21 may be specified using the procedure in Fig. 17 in a way similar to the first embodiment.

### (Embodiment 13)

An embodiment 13 of the present invention will be described with reference to the drawings.

While the embodiments 1 to 12 have assumed that when the terminal 21 does not perform the arithmetic processing for specifying its own location, the RNC 25 performs the arithmetic processing, a processor different from the RNC 25 may perform the operation.

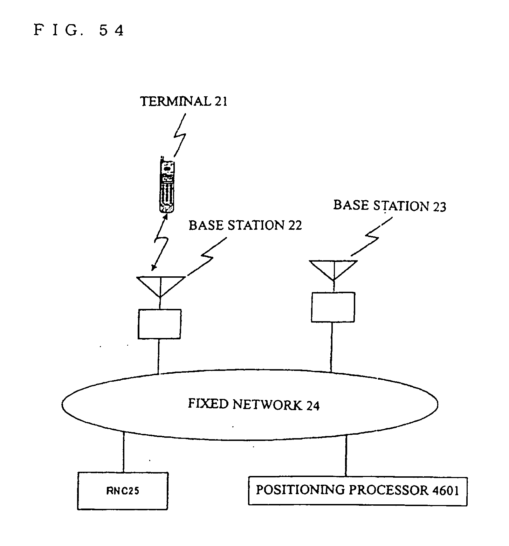

Fig. 54 is a drawing showing the configuration of a mobile communication network in accordance with the present embodiment.

In the case of the present embodiment, a positioning processor 4601 connected to a fixed network 24 performs the operation for specifying the location of the terminal 21.

Fig. 55 is a drawing showing the configuration of the positioning processor 4601.

An RNC I/F 4701 is an interface for connecting a plurality of RNCs to the positioning processor 4601.

A message processing section 4702 notifies a motion control section 4703 of the receipt of messages from the RNCs, and transmits the messages to the RNCs at the request of the motion control section 4703.

The motion control section 4703 requests an arithmetic processing section 4704 to perform arithmetic processing in response to the messages notified of the receipt from the message processing section 4702, and requests the message processing section 4702 to transmit messages containing the arithmetic results reported from the arithmetic processing section 4704. In addition, the motion control section 4703 refers to database 4705 to obtain necessary information, and requests the message processing section 4702 to transmit messages containing the obtained information.

The arithmetic processing section 4704 performs arithmetic processing for specifying the location of a terminal at the request of the motion control section 4703, and reports the processing results to the motion control section 4703. In addition, the arithmetic processing section 4704 refers to the database 4705 to obtain information necessary for the arithmetic processing.

The database 4705 keeps information necessary for arithmetic processing and measurement. In addition, the database 4705 allows an input or a reference of information from outside via an external I/F 4706.

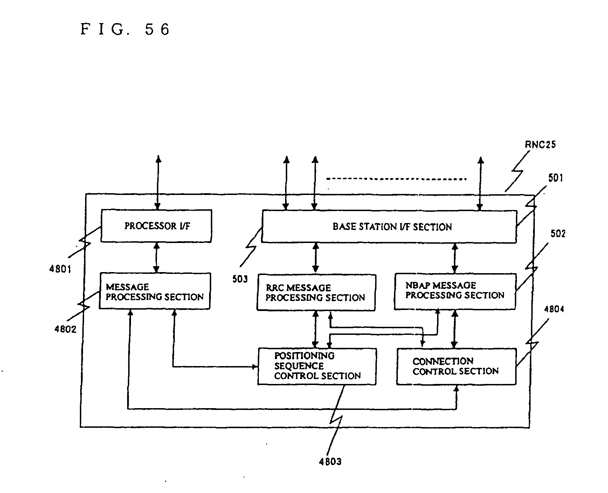

Fig. 56 is a drawing showing the configuration of the RNC 25 in accordance with the present embodiment. Incidentally, portions having nothing to do with the description of the present embodiment are not shown in the illustration.

In addition, a base station I/F section 501, an NBAP message processing section 502, and an RRC message processing section 503 are identical to those described in the embodiment 1, so that the description will be omitted.

A processor I/F 4801 is an interface for connecting the positioning processor 4601 to the RNC 25.

The message processing section 4802 notifies a positioning sequence control section 4803 of the notification of a message from the positioning processor 4601, and transmits a message to the positioning processor 4601 at the request of a positioning control section 4802 and a connection control section 4804.

The positioning sequence control section 4802 requests the RRC message processing section 503 and the NBAP message processing section 502 to transmit messages for requesting measurement to terminals and base stations, and requests the message processing section 4802 to transmit messages in response to messages notified of the receipt from the RRC message processing section 503 and the NBAP message processing section 502.

The connection control section 4804 requests the RRC message processing section 503 and the NBAP message processing section 502 to transmit messages for establishing connections with terminals, and requests the message processing section 4802 to transmit messages in response to messages notified of the receipt from the RRC message processing section 503 and the NBAP message processing section 502.

Hereinafter, a procedure for specifying the location of a terminal for the case of using the positioning processor 4601 will be described based on the embodiment 1.

Fig. 57 is a drawing showing a procedure for specifying the location of the terminal 21 executed after a connection between the terminal 21 and the RNC 25 has been established.

Incidentally, the processing in each of Steps 71 to 78, and Steps 81 to 86 is identical to the processing in the embodiment 1, so that the description will be omitted.

In addition, it is assumed that base station information generated when the base stations are located is stored in the database 4705 of the positioning processor 4601.

The RNC 25 having received the request for establishing the connection from the terminal 21 notifies the positioning processor 4601 of terminal information (Step 4901). The positioning processor 4601 having received the notification from the RNC 25 generates terminal information based on the received terminal information and stores the generated terminal information in the database 4705 (Step 4902).

In the case of specifying the location of the terminal 21, the RNC 25 requests the positioning processor 4601 to notify supplementary information necessary for measurement (Step 4903). positioning processor 4601 having received the request refers to database 4705 to generate and notify the supplementary information to the RNC 25 (Step 4904).

The RNC 25 having received the measurement results from terminal 21 and the base station 22 requests the positioning processor 4601 to perform the arithmetic processing (Step 4905). Incidentally, at the same time, the RNC 25 notifies the measurement results from the terminal 21 and the base station 22.

The positioning processor 4601 having received the request the arithmetic processing from the RNC 25 specifies the location the terminal 21 using the notified measurement results and the station stored in the database 4705 (Step 4906).

The positioning processor 4601 reports the specified location the terminal 21 to the RNC 25 (Step 4907).

Incidentally, while the description of the present embodiment sed on that of the embodiment 1, it is possible to realize similar procedures in the aforementioned other aspects. [Industrial Applicability]

It is to be understood that the present invention is applicable to anything that relates to a mobile radio communication field, and to a method used in determining the geographical location of a mobile station in a mobile communication network and is not intended to be limited in its applicability.

While the present invention has been described in relation to some preferred embodiments and exemplary embodiments, it is to be understood that these embodiments and exemplary embodiments are for the purpose of description by example, and not of limitation. While it will be obvious to those skilled in the art upon reading the present specification that various changes and substitutions may be easily made by equal components and art, it is obvious that such changes and substitutions lie within the true scope and spirit of the appended claims.

### [Brief Description of the Drawings]

FIG. 1 is a drawing showing the principle of GPS positioning;
FIG. 2 is a drawing showing the principle of OTDOA positioning;
FIG. 3 is a drawing showing the principle of AFLT positioning;
FIG. 4 is a drawing showing the principle of a positioning system using both of a signal from a GPS satellite and a signal from a base station;
FIG. 5 is a drawing showing the principle of specifying the location of a terminal 21 in accordance with an embodiment 1;
FIG. 6 is a drawing showing a mobile communication network in accordance with an embodiment 1;
FIG. 7 is a drawing showing a procedure for establishing a connection between a terminal 21 and an RNC 25 in accordance with an embodiment 1;
FIG. 8 is a drawing showing an example of terminal information 30 kept by an RNC 25 in accordance with an embodiment 1;

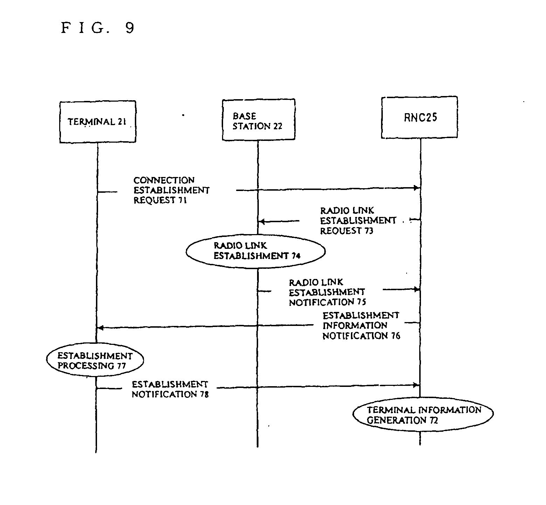

FIG. 9 is a drawing showing a procedure for establishing a connection between a terminal 21 and an RNC 25 in accordance with an embodiment 1;

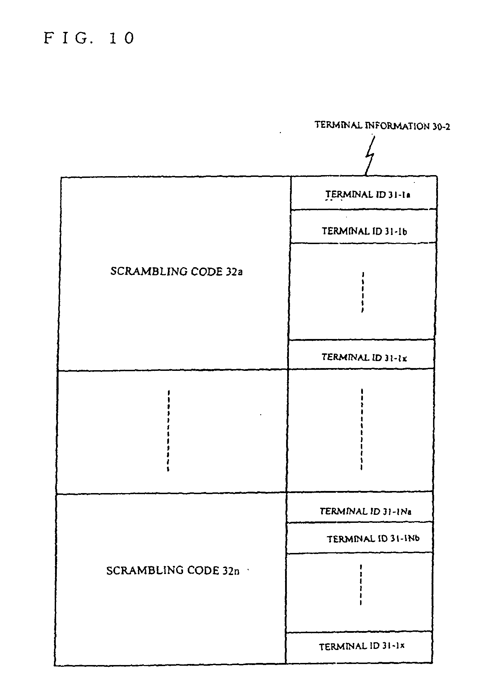

FIG. 10 is a drawing showing an example of terminal information 30 kept by an RNC 25 in accordance with an embodiment 1;
FIG. 11 is a drawing showing an example of terminal information 40 kept by an RNC 25 in accordance with an embodiment 1;
FIG. 12 is a drawing showing an example of terminal information 40 kept by an RNC 25 in accordance with an embodiment 1;
FIG. 13 is a drawing showing the configuration of an RNC 25 in accordance with an embodiment 1;
FIG. 14 is a drawing showing terminal information on a terminal 21 kept by database 507 of an RNC 25 in accordance with an embodiment 1;
FIG. 15 is a drawing showing base station information on base stations 22 and 23 kept by database 507 of an RNC 25 in accordance with an embodiment 1;
FIG. 16 is a drawing showing an example of a procedure for specifying the location of a terminal 21 in accordance with an embodiment 1;
FIG. 17 is a drawing showing the flow of processing in Step 89 in accordance with an embodiment 1;
FIG. 18 is a drawing showing an example of a procedure for specifying the location of a terminal 21 in accordance with other aspect 1 of an embodiment 1;
FIG. 19 is a drawing showing the flow of processing in Step 89 in accordance with other aspect 1 of an embodiment 1;
FIG. 20 is a drawing showing the configuration of a terminal 21 in accordance with an embodiment 2;
FIG. 21 is a drawing showing an example of a procedure for specifying the location of a terminal 21 in accordance with an embodiment 2;
FIG. 22 is a drawing showing the flow of processing in Step 98 in accordance with an embodiment 2;
FIG. 23 is a drawing showing an example of a procedure for specifying the location of a terminal 21 in accordance with other aspect 1 of an embodiment 2;
FIG. 24 is a drawing showing the flow of processing in Step 98 in accordance with other aspect 1 of an embodiment 2;
FIG. 25 is a drawing showing the principle of specifying the location of a terminal 21 in accordance with an embodiment 3;
FIG. 26 is a drawing showing an example of a procedure for specifying the location of a terminal 21 in accordance with an embodiment 3;
FIG. 27 is a drawing showing the flow of processing in Step 1213 in accordance with an embodiment 3;
FIG. 28 is a drawing showing an example of a procedure for specifying the location of a terminal 21 in accordance with other aspect 1 of an embodiment 3;
FIG. 29 is a drawing showing the flow of processing in Step 1302 in accordance with other aspect 1 of an embodiment 3;
FIG. 30 is a drawing showing the principle of specifying the location of a terminal 21 in accordance with an embodiment 4;
FIG. 31 is a drawing showing the configuration of a terminal 21 in accordance with an embodiment 4;
FIG. 32 is a drawing showing the flow of processing in Step 89 in accordance with an embodiment 4;
FIG. 33 is a drawing showing the flow of processing in Step 98 in accordance with other aspect 1 of an embodiment 4;
FIG. 34 is a drawing showing the flow of processing in Step 89 in accordance with other aspect 3 of an embodiment 4;
FIG. 35 is a drawing showing the flow of processing in Step 98 in accordance with other aspect 3 of an embodiment 4;
FIG. 36 is a drawing showing the principle of specifying the location of a terminal 21 in accordance with an embodiment 5;

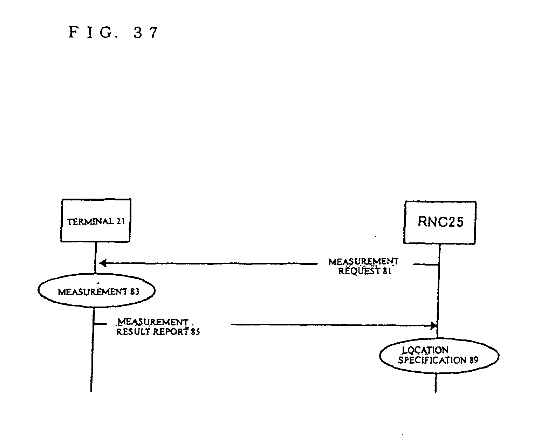

FIG. 37 is a drawing showing an example of a procedure for specifying the location of a terminal 21 in accordance with an embodiment 5;
FIG. 38 is a drawing showing the flow of processing in Step 89 in accordance with an embodiment 5;
FIG. 39 is a drawing showing an example of a procedure for specifying the location of a terminal 21 in accordance with other aspect 1 of an embodiment 5;
FIG. 40 is a drawing showing the flow of processing in Step 98 in accordance with other aspect 1 of an embodiment 5;
FIG. 41 is a drawing showing a procedure for specifying the location of a terminal 21 in accordance with other aspect 4 of an embodiment 5;

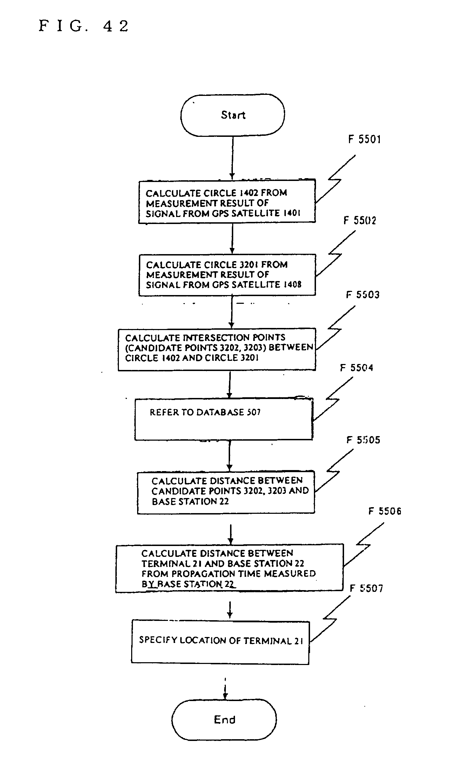

FIG. 42 is a drawing showing details of the flow of processing executed in an arithmetic processing section 506 of an RNC 25 in Step 5405;
FIG. 43 is a drawing showing a procedure for specifying the location of a terminal 21 in accordance with other aspect 5 of an embodiment 5;

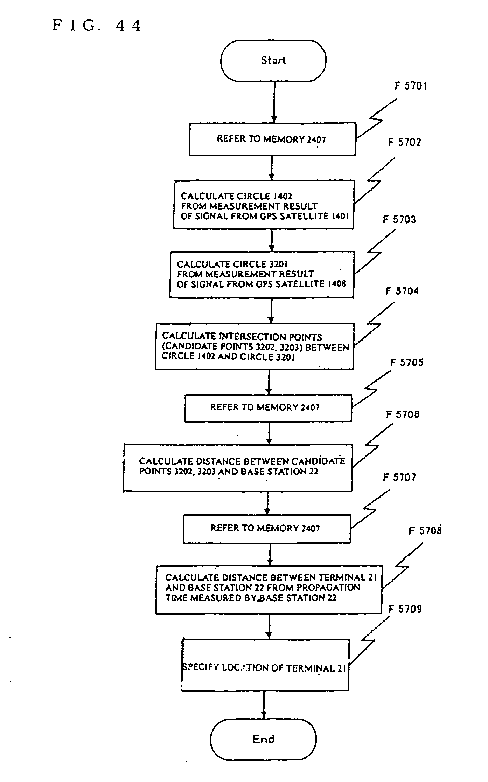

FIG. 44 is a diagram showing the flow of processing in an arithmetic processing section 2406 of a terminal 21 in Step 5604;
FIG. 45 is a drawing showing the principle of specifying the location of a terminal 21 in accordance with an embodiment 6;
FIG. 46 is a drawing showing the flow of processing in Step 89 in accordance with an embodiment 6;

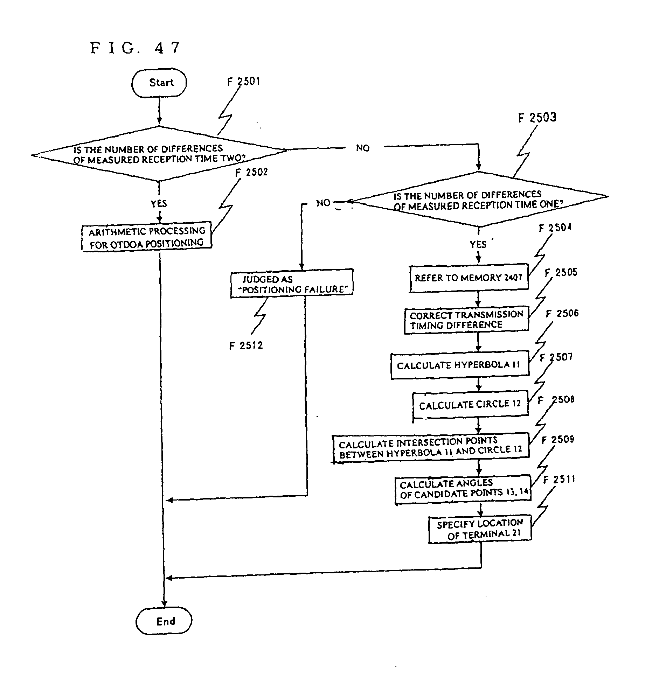

FIG. 47 is a drawing showing the flow of processing in Step 98 in accordance with other aspect 1 of an embodiment 6;
FIG. 48 is a drawing showing the principle of specifying the location of a terminal 21 in accordance with an embodiment 7;
FIG. 49 is a drawing showing the flow of processing in Step 89 in accordance with an embodiment 7;
FIG. 50 is a drawing showing the flow of processing in Step 98 in accordance with other aspect 1 of an embodiment 7;
FIG. 51 is a drawing showing the flow of processing in Step 89 in accordance with an embodiment 8;
FIG. 52 is a drawing showing the principle of specifying the location of a terminal 21 in accordance with an embodiment 9;
FIG. 53 is a drawing showing the flow of processing in Step 89 in accordance with other aspect of an embodiment 11;
FIG. 54 is a drawing showing a mobile communication network in accordance with an embodiment 13;
FIG. 55 is a drawing showing the configuration of a positioning arithmetic processor 4601 in accordance with an embodiment 13;
FIG. 56 is a drawing showing the configuration of an RNC 25 in accordance with an embodiment 13; and
FIG. 57 is a drawing showing procedures for establishing a connection between a terminal 21 and an RNC 25, and for specifying the location of the terminal 21 in accordance with an embodiment 13.

## Claims

1. A terminal location specification method for specifying geographical location of a radio terminal by transmission and reception of signals between two radio stations, geographical location of which is known and the geographical location of which is different and the radio terminal, the geographical location of which is unknown, the terminal location specification method comprising the steps of:
depicting two curves to determine two intersection points between the two curves as two candidate points for the geographical location of the radio terminal by the use of propagation time of radio signals between the two radio stations and the radio terminal; and
specifying a communication range of at least one of the two radio stations to determine the candidate point included in the communication range of the two candidate points as the geographical location of the radio terminal.

2. The terminal location specification method according to claim 1,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

3. The terminal location specification method according to claim 1,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

4. The terminal location specification method according to claim 1,
wherein in a mobile communication network comprising at least one said radio terminal and at least two base stations, in which one the base station forms a plurality of communication ranges; and said radio terminal and the base stations existing in the communication ranges conduct radio communication, said two radio stations are the base stations.

5. The terminal location specification method according to claim 1,
wherein in said mobile communication network, said radio terminal has a function to receive a signal from a GPS satellite, and one of said radio stations is said base station, the other of said radio stations being the GPS satellite.

6. The terminal location specification method according to claim 1,
wherein said radio terminal has a function to receive a signal from a GPS satellite, said radio stations being the GPS satellites.

7. A terminal location specification method for specifying geographical location of a radio terminal by transmission and reception of signals between two radio stations, geographical location of which is known and the geographical location of which is different, and the radio terminal, the geographical location of which is unknown, the terminal location specification method comprising the steps of:
depicting two curves to determine two intersection points between the two curves as two candidate points for the geographical location of the radio terminal by the use of propagation time of radio signals between the two radio stations and the radio terminal; and
specifying a arrival direction of the signal from the radio terminal received in a first radio station to compare the direction of a straight line connecting each of the two candidate points and the first radio station with the arrival direction to determine the candidate point in which the arrival direction corresponds with the direction of the straight line as the geographical location of the radio terminal.

8. The terminal location specification method according to claim 7,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

9. The terminal location specification method according to claim 7,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

10. The terminal location specification method according to claim 7,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

11. The terminal location specification method according to claim 7,
wherein in said mobile communication network, said radio terminal has a function to receive a signal from a GPS satellite, and one of said radio stations is said base station, the other of said radio stations being the GPS satellite.

12. The terminal location specification method according to claim 7,
wherein said radio terminal has a function to receive a signal from a GPS satellite, said radio stations being the GPS satellites.

13. A terminal location specification method for specifying geographical location of a radio terminal by transmission and reception of signals between two radio stations, geographical location of which is known and the geographical location of which is different, and the radio terminal, the geographical location of which is unknown, the terminal location specification method comprising the steps of:
depicting two curves to determine two intersection points between the two curves as two candidate points for the geographical location of the radio terminal by the use of propagation time of radio signals between the two radio stations and the radio terminal; and
specifying arrival directions of the signals received by the radio terminal from each of the two radio stations as arrival angles to calculate angles which a straight line connecting the candidate points and one of the two radio stations forms with a straight line connecting the candidate points and the other of said two radio stations for each of the candidate points as candidate angles to compare a difference of the arrival angles with each of the candidate angles to determine the candidate point having the candidate angle which corresponds with the difference of the arrival angles as the geographical location of the radio terminal.

14. The terminal location specification method according to claim 13,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

15. The terminal location specification method according to claim 13,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

16. The terminal location specification method according to claim 13,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

17. The terminal location specification method according to claim 1,
wherein in said mobile communication network, said radio terminal has a function to receive a signal from a GPS satellite, and one of said radio stations is said base station, the other of said radio stations being the GPS satellite.

18. The terminal location specification method according to claim 13,
wherein said radio terminal has a function to receive a signal from a GPS satellite, said radio stations being the GPS satellites.

19. A terminal location specification method for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification method comprising the steps of:
depicting two curves to determine two intersection points between the two curves as two candidate points for the geographical location of the radio terminal by the use of propagation time of radio signals between the two radio stations and the radio terminal; and
measuring the electric field intensity of the signal received by the radio terminal from one of the two radio stations to compare this electric field intensity with received electric field intensity information which is kept in any one of the apparatus, the base stations, and the terminal, and in which the electric field intensity of the signals from the radio stations measured in a plurality of measurement points in communication ranges of the radio stations is related to the geographical location of the measurement points to specify the geographical location of the measurement points related to a value close to the electric field intensity to determine the candidate point close to the specified geographical location of the measurement points as the geographical location of the radio terminal.

20. The terminal location specification method according to claim 19,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

21. The terminal location specification method according to claim 19,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

22. The terminal location specification method according to claim 19,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

23. The terminal location specification method according to claim 19,
wherein in said mobile communication network, said radio terminal has a function to receive a signal from a GPS satellite, and one of said radio stations is said base station, the other of said radio stations being the GPS satellite.

24. The terminal location specification method according to claim 19,
wherein said radio terminal has a function to receive a signal from a GPS satellite, said radio stations being the GPS satellites.

25. A terminal location specification method for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification method comprising the steps of:
depicting two curves to estimate two intersection points between the two curves as two candidate points for the geographical location of the radio terminal by the use of propagation time of radio signals between the two radio stations and the radio terminal; and
measuring the propagation condition of the signal received by the radio terminal from one of the two radio stations to compare this propagation condition with propagation condition information which is kept in any one of the apparatus, the base stations, and the radio terminal, and in which the propagation conditions of the signals from the radio stations measured in a plurality of measurement points in communication ranges of the radio stations are related to the geographical location of the measurement points to specify the geographical location of the measurement points having a propagation condition close to the propagation condition measured by the radio terminal to determine the candidate point close to the specified geographical location of the measurement points as the geographical location of the radio terminal.

26. The terminal location specification method according to claim 25,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

27. The terminal location specification method according to claim 25,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

28. The terminal location specification method according to claim 25,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

29. The terminal location specification method according to claim 25,
wherein in said mobile communication network, said radio terminal has a function to receive a signal from a GPS satellite, and one of said radio stations is said base station, the other of said radio stations being the GPS satellite.

30. The terminal location specification method according to claim 25,
wherein said radio terminal has a function to receive a signal from a GPS satellite, said radio stations being the GPS satellites.

31. A terminal location specification method for specifying geographical location of a radio terminal by transmission and reception of signals between two radio stations, geographical location of which is known and the geographical location of which is different and the radio terminal having a function to measure geomagnetism, the geographical location of which is unknown in a mobile communication network composed of a fixed network to which the radio terminal, the radio stations, and at least one of the radio stations are connected, and other necessary apparatus connected to the fixed network, the terminal location specification method comprising the steps of:
depicting two curves to determine two intersection points between the two curves as two candidate points for the geographical location of the radio terminal by the use of propagation time of radio signals between the two radio stations and the radio terminal; and
comparing the geomagnetism measured by the radio terminal with geomagnetism information which is kept in any one of the apparatus, the base stations, and the radio terminal, and in which geomagnetism measured in a plurality of measurement points in communication ranges of the radio stations is related to the geographical location of the measurement points to specify the geographical location of the measurement points related to the value of geomagnetism close to the geomagnetism to determine the candidate point close to the specified geographical location of the measurement points as the geographical location of the radio terminal.

32. The terminal location specification method according to claim 31,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

33. The terminal location specification method according to claim 31,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

34. The terminal location specification method according to claim 31,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

35. The terminal location specification method according to claim 31,
wherein in said mobile communication network, said radio terminal has a function to receive a signal from a GPS satellite, and one of said radio stations is said base station, the other of said radio stations being the GPS satellite.

36. The terminal location specification method according to claim 31,
wherein said radio terminal has a function to receive a signal from a GPS satellite, said radio stations being the GPS satellites.

37. A terminal location specification method for specifying geographical location of a radio terminal by transmission and reception of signals between two radio stations, geographical location of which is known and the geographical location of which is different and the radio terminal, the geographical location of which is unknown, the terminal location specification method comprising the steps of:
depicting two curves to determine two intersection points between the two curves as two candidate points for the geographical location of the radio terminal by the use of propagation time of radio signals between the two radio stations and the radio terminal; and
determining, if geographical location of one of the two candidate points is a location in which the radio terminal is not likely to exist, the other candidate point as the geographical location of the radio terminal.

38. The terminal location specification method according to claim 37,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

39. The terminal location specification method according to claim 37,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

40. The terminal location specification method according to claim
37,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

41. The terminal location specification method according to claim 37,
wherein in said mobile communication network, said radio terminal has a function to receive a signal from a GPS satellite, and one of said radio stations is said base station, the other of said radio stations being the GPS satellite.

42. The terminal location specification method according to claim 37,
wherein said radio terminal has a function to receive a signal from a GPS satellite, said radio stations being the GPS satellites.

43. A terminal location specification method for specifying geographical location of a radio terminal by transmission and reception of signals between two radio stations, geographical location of which is known and the geographical location of which is different and the radio terminal having a function to measure altitude, the geographical location of which is unknown in a mobile communication network composed of a fixed network to which the radio terminal, the radio stations, and at least one of the radio stations are connected, and other necessary apparatus connected to the fixed network, the terminal location specification method comprising the steps of:
depicting two curves to determine two intersection points between the two curves as two candidate points for the geographical location of the radio terminal by the use of propagation time of radio signals between said two radio stations and said radio terminal; and
comparing the altitude measured by the radio terminal with the altitude information on the candidate points of the altitude information which is kept in any one of the apparatus, the base stations, and the radio terminal, and in which altitude information on points of communication ranges of the radio stations is related to the geographical location to determine the candidate point in which the altitude information close to the measured altitude is kept as the location of the radio terminal.

44. The terminal location specification method according to claim 43,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

45. The terminal location specification method according to claim 43,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

46. The terminal location specification method according to claim 43,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

47. The terminal location specification method according to claim 43,
wherein in said mobile communication network, said radio terminal has a function to receive a signal from a GPS satellite, and one of said radio stations is said base station, the other of said radio stations being the GPS satellite.

48. The terminal location specification method according to claim 43,
wherein said radio terminal has a function to receive a signal from a GPS satellite, said radio stations being the GPS satellites.

49. A terminal location specification method for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification method comprising the steps of:
depicting two curves to determine two intersection points between the two curves as two candidate points for the geographical location of the radio terminal by the use of propagation time of radio signals between the two radio stations and the radio terminal; and comparing each of the candidate points with positioning history information in which the location of the radio terminal specified by any one of the apparatus, the base stations, and the radio terminal in the past is kept to determine the candidate point close to the location of the radio terminal kept in the positioning history information as the location of the radio terminal.

50. The terminal location specification method according to claim 49,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

51. The terminal location specification method according to claim 49,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

52. The terminal location specification method according to claim 49,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

53. The terminal location specification method according to claim 49,
wherein in said mobile communication network, said radio terminal has a function to receive a signal from a GPS satellite, and one of said radio stations is said base station, the other of said radio stations being the GPS satellite.

54. The terminal location specification method according to claim
49,
wherein said radio terminal has a function to receive a signal from a GPS satellite, said radio stations being the GPS satellites.

55. A terminal location specification method for specifying geographical location of a radio terminal by transmission and reception of signals between two radio stations, geographical location of which is known and the geographical location of which is different and a first radio terminal, geographical location of which is unknown, the terminal location specification method comprising the steps of:
depicting two curves to determine two intersection points between the two curves as two candidate points for the geographical location of the radio terminal by the use of propagation time of radio signals between the two radio stations and the first radio terminal; and
conducting communication between the radio terminal and its same radio station to compare geographical location of a second radio terminal, the geographical location of which is known with the candidate points to determine the candidate point close to the geographical location of the second radio terminal as the geographical location of the first radio terminal.

56. The terminal location specification method according to claim 55,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

57. The terminal location specification method according to claim 55,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

58. The terminal location specification method according to claim 55,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

59. The terminal location specification method according to claim 55,
wherein in said mobile communication network, said radio terminal has a function to receive a signal from a GPS satellite, and one of said radio stations is said base station, the other of said radio stations being the GPS satellite.

60. The terminal location specification method according to claim 55,
wherein said radio terminal has a function to receive a signal from a GPS satellite, said radio stations being the GPS satellites.

61. A terminal location specification method for specifying geographical location of a radio terminal by transmission and reception of signals between two radio stations, geographical location of which is known and the geographical location of which is different and the radio terminal having an imaging function, the geographical location of which is unknown in a mobile communication network composed of a fixed network to which the radio terminal, the radio stations, and at least one of the radio stations are connected, and other necessary apparatus connected to the fixed network, the terminal location specification method comprising the steps of:
depicting two curves to determine two intersection points between the two curves as two candidate points for the geographical location of the radio terminal by the use of propagation time of radio signals between the two radio stations and the first radio terminal; and
comparing the outward appearance of surrounding buildings photographed by the radio terminal using the imaging function with the outward appearance information of buildings in communication areas of the radio stations, which is kept in any one of the apparatus, the base stations, and the radio terminal to determine the candidate point in which the photographed outward appearance corresponds with the outward appearance information as the location of the radio terminal.

62. The terminal location specification method according to claim 61,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

63. The terminal location specification method according to claim 61,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

64. The terminal location specification method according to claim 61,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

65. The terminal location specification method according to claim 61,
wherein in said mobile communication network, said radio terminal has a function to receive a signal from a GPS satellite, and one of said radio stations is said base station, the other of said radio stations being the GPS satellite.

66. The terminal location specification method according to claim 61,
wherein said radio terminal has a function to receive a signal from a GPS satellite, said radio stations being the GPS satellites.

67. A terminal location specification method for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification method comprising the steps of:
depicting two curves to determine two intersection points between the two curves as two candidate points for the geographical location of the radio terminal by the use of propagation time of radio signals between the two radio stations and the first radio terminal; and
estimating the effect of a shield due to a building based on the disposition information of buildings in communication ranges of the radio stations, which is kept in any one of the apparatus, the base stations, and the radio terminal to determine, if one of the candidate points cannot receive the signal from at least one the radio station, the other candidate point as the location of the radio terminal.

68. The terminal location specification method according to claim 67,
wherein it is possible to measure the propagation time of the radio signals between said radio stations and said radio terminal in the step of finding two candidate points, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are determined as said two candidate points.

69. The terminal location specification method according to claim 67,
wherein, when it is possible to measure the propagation time of the radio signal between one of said two radio stations and said radio terminal, it being possible to measure a difference of the propagation time of the radio signals between said radio terminal and said two radio stations in the step of finding two candidate points, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are determined as said two candidate points for said radio terminal.

70. The terminal location specification method according to claim 67,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

71. The terminal location specification method according to claim 67,
wherein in said mobile communication network, said radio terminal has a function to receive a signal from a GPS satellite, and one of said radio stations is said base station, the other of said radio stations being the GPS satellite.

72. The terminal location specification method according to claim 67,
wherein said radio terminal has a function to receive a signal from a GPS satellite, said radio stations being the GPS satellites.

73. A terminal location specification system for specifying geographical location of a radio terminal by transmission and reception of signals between two radio stations, geographical location of which is known and the geographical location of which is different and the radio terminal, the geographical location of which is unknown, the terminal location specification system comprising:
a first function block for depicting two curves to calculate two intersection points between the two curves as two candidate points for the geographical location of the radio terminal by the use of propagation time of radio signals between the two radio stations and the radio terminal; and
a second function block for specifying a communication range of at least one of the two radio stations to determine the candidate point included in the communication range of said two candidate points as the geographical location of the radio terminal.

74. The terminal location specification system according to claim 73,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

75. The terminal location specification system according to claim 73,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

76. The terminal location specification system according to claim 73,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

77. The terminal location specification system according to claim 73,
wherein in said mobile communication network, said radio terminal has means for receiving a signal from a GPS satellite, and one of said radio stations is said base station, the other of said radio stations being the GPS satellite.

78. The terminal location specification system according to claim 73,
wherein said radio terminal has a function block to receive a signal from a GPS satellite, said radio stations being the GPS satellites.

79. A terminal location specification system for specifying geographical location of a radio terminal by transmission and reception of signals between two radio stations, geographical location of which is known and the geographical location of which is different and the radio terminal, the geographical location of which is unknown, the terminal location specification system comprising:
a first function block for depicting two curves to calculate two intersection points between the two curves as two candidate points for the geographical location of the radio terminal by the use of propagation time of radio signals between the two radio stations and the radio terminal; and
a second function block for specifying a arrival direction of the signal from the radio terminal received in a first radio station to compare the direction of a straight line connecting each of said two candidate points and the first radio station with the arrival direction to determine the candidate point in which the arrival direction corresponds with the direction of the straight line as the geographical location of the radio terminal.

80. The terminal location specification system according to claim 79,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

81. The terminal location specification system according to claim 79,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

82. The terminal location specification system according to claim 79,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

83. The terminal location specification system according to claim 79,
wherein in said mobile communication network, said radio terminal has means for receiving a signal from a GPS satellite, and one of said radio stations is said base station, the other of said radio stations being the GPS satellite.

84. The terminal location specification system according to claim 79,
wherein said radio terminal has a function block to receive a signal from a GPS satellite, said radio stations being the GPS satellites.

85. A terminal location specification system for specifying geographical location of a radio terminal by transmission and reception of signals between two radio stations, geographical location of which is known and the geographical location of which is different and the radio terminal, the geographical location of which is unknown, the terminal location specification system comprising:
a first function block for depicting two curves to calculate two intersection points between the two curves as two candidate points for the geographical location of the radio terminal by the use of propagation time of radio signals between the two radio stations and the radio terminal; and
a second function block for specifying arrival directions of the signals received by the radio terminal from each of the two radio stations as arrival angles to calculate angles which a straight line connecting the candidate points and one of the two radio stations forms with a straight line connecting the candidate points and the other of said two radio stations for each of the candidate points as candidate angles to compare a difference of the arrival angles with each of the candidate angles to determine the candidate point having the candidate angle which corresponds with the difference of the arrival angles as the geographical location of the radio terminal.

86. The terminal location specification system according to claim 85,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

87. The terminal location specification system according to claim 85,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

88. The terminal location specification system according to claim 85,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

89. The terminal location specification system according to claim 85,
wherein in said mobile communication network, said radio terminal has means for receiving a signal from a GPS satellite, and one of said radio stations is said base station, the other of said radio stations being the GPS satellite.

90. The terminal location specification system according to claim 85,
wherein said radio terminal has a function block to receive a signal from a GPS satellite, said radio stations being the GPS satellites.

91. A terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification system comprising:
a storage function block in which received electric field intensity information in which electric field intensity of the signals from the radio stations measured in a plurality of measurement points in communication ranges of the radio stations is related to the geographical location of the measurement points has been stored;
a first function block for depicting two curves to calculate two intersection points between the two curves as two candidate points for the geographical location of the radio terminal by the use of propagation time of radio signals between the two radio stations and the radio terminal; and
a second function block for measuring the electric field intensity of the signal received by the radio terminal from one of the two radio stations to compare this electric field intensity with said stored, received electric field intensity information to specify the geographical location of the measurement points related to a value close to the electric field intensity to determine the candidate point close to the specified geographical location of the measurement points as the geographical location of the radio terminal.

92. The terminal location specification system according to claim 91,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

93. The terminal location specification system according to claim 91,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

94. The terminal location specification system according to claim 91,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

95. The terminal location specification system according to claim 91,
wherein in said mobile communication network, said radio terminal has means for receiving a signal from a GPS satellite, and one of said radio stations is said base station, the other of said radio stations being the GPS satellite.

96. The terminal location specification system according to claim 91,
wherein said radio terminal has a function block to receive a signal from a GPS satellite, said radio stations being the GPS satellites.

97. A terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification system comprising:
a first function block for depicting two curves to estimate two intersection points between the two curves as two candidate points for the geographical location of the radio terminal by the use of propagation time of radio signals between the two radio stations and the radio terminal;
a storage function block in which propagation condition information in which propagation conditions of the signals from the radio stations measured in a plurality of measurement points in communication ranges of the radio stations is related to the geographical location of the measurement points has been stored; and
a second function block for measuring the propagation condition of the signal received by the radio terminal from one of the two radio stations to compare this propagation condition with said propagation condition information to specify the geographical location of the measurement points having a propagation condition close to the propagation condition measured by the radio terminal to determine the candidate point close to the specified geographical location of the measurement points as the geographical location of the radio terminal.

98. The terminal location specification system according to claim 97,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

99. The terminal location specification system according to claim 97,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

100. The terminal location specification system according to claim 97,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

101. The terminal location specification system according to claim 97,
wherein in said mobile communication network, said radio terminal has means for receiving a signal from a GPS satellite, and one of said radio stations is said base station, the other of said radio stations being the GPS satellite.

102. The terminal location specification system according to claim 97,
wherein said radio terminal has a function block to receive a signal from a GPS satellite, said radio stations being the GPS satellites.

103. A terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification system comprising:
a radio terminal having a first function block for measuring geomagnetism;
a second function block for depicting two curves to calculate two intersection points between the two curves as two candidate points for the geographical location of the radio terminal by the use of propagation time of radio signals between the two radio stations and the radio terminal;
a storage function block in which geomagnetism information in which geomagnetism measured in a plurality of measurement points in communication ranges of the radio stations is related to the geographical location of the measurement points has been stored; and
a third function block for comparing the geomagnetism measured by the radio terminal with said geomagnetism information to specify the geographical location of the measurement points related to the value of geomagnetism close to the geomagnetism to determine the candidate point close to the specified geographical location of the measurement points as the geographical location of the radio terminal.

104. The terminal location specification system according to claim 103,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

105. The terminal location specification system according to claim 103,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

106. The terminal location specification system according to claim 103,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

107. The terminal location specification system according to claim 102,
wherein in said mobile communication network, said radio terminal has means for receiving a signal from a GPS satellite, and one of said radio stations is said base station, the other of said radio stations being the GPS satellite.

108. The terminal location specification system according to claim 103,
wherein said radio terminal has a function block to receive a signal from a GPS satellite, said radio stations being the GPS satellites.

109. A terminal location specification system for specifying geographical location of a radio terminal by transmission and reception of signals between two radio stations, geographical location of which is known and the geographical location of which is different and the radio terminal, the geographical location of which is unknown, the terminal location specification system comprising:
a first function block for depicting two curves to calculate two intersection points between the two curves as two candidate points for the geographical location of the radio terminal by the use of propagation time of radio signals between the two radio stations and the radio terminal; and
a second function block for determining, if geographical location of one of the two candidate points is a location in which the radio terminal is not likely to exist, the other candidate point as the geographical location of the radio terminal.

110. The terminal location specification system according to claim 109,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

111. The terminal location specification system according to claim 109,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

112. The terminal location specification system according to claim 109,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

113. The terminal location specification system according to claim 109,
wherein in said mobile communication network, said radio terminal has means for receiving a signal from a GPS satellite, and one of said radio stations is said base station, the other of said radio stations being the GPS satellite.

114. The terminal location specification system according to claim 109,
wherein said radio terminal has a function block to receive a signal from a GPS satellite, said radio stations being the GPS satellites.

115. A terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification system comprising:
a radio terminal having a first function block for measuring altitude;
a storage function block in which altitude information in which altitude information on points of communication ranges of the radio stations is related to the geographical location has been stored;
a second function block for depicting two curves to calculate two intersection points between the two curves as two candidate points for the geographical location of the terminal by the use of propagation time of radio signals between said two radio stations and said radio terminal; and
a third function block for comparing the altitude measured by the radio terminal with the altitude information on the candidate points of said altitude information to determine the candidate point in which the altitude information close to the measured altitude is kept as the location of the radio terminal.

116. The terminal location specification system according to claim 115,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

117. The terminal location specification system according to claim 115,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

118. The terminal location specification system according to claim 115,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

119. The terminal location specification system according to claim 115,
wherein in said mobile communication network, said radio terminal has means for receiving a signal from a GPS satellite, and one of said radio stations is said base station, the other of said radio stations being the GPS satellite.

120. The terminal location specification system according to claim 115,
wherein said radio terminal has a function block to receive a signal from a GPS satellite, said radio stations being the GPS satellites.

121. A terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification system comprising:
a storage function block in which positioning history information in which the location of the radio terminal specified by any one of the apparatus, the base stations, and the radio terminal specified in the past is kept has been stored;
a first function block for depicting two curves to calculate two intersection points between the two curves as two candidate points for the geographical location of the radio terminal by the use of propagation time of radio signals between the two radio stations and the radio terminal; and
a second function block for comparing each of the candidate points with said positioning history information to determine the candidate point close to the location of the radio terminal kept in said positioning history information as the location of the radio terminal.

122. The terminal location specification system according to claim 121,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

123. The terminal location specification system according to claim
121,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

124. The terminal location specification system according to claim 121,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

125. The terminal location specification system according to claim 121,
wherein in said mobile communication network, said radio terminal has means for receiving a signal from a GPS satellite, and one of said radio stations is said base station, the other of said radio stations being the GPS satellite.

126. The terminal location specification system according to claim 121,
wherein said radio terminal has a function block to receive a signal from a GPS satellite, said radio stations being the GPS satellites.

127. A terminal location specification system for specifying geographical location of a radio terminal by transmission and reception of signals between two radio stations, geographical location of which is known and the geographical location of which is different and a first radio terminal, geographical location of which is unknown, comprising:
a first function block for depicting two curves to calculate two intersection points between the two curves as two candidate points for the geographical location of the radio terminal by the use of propagation time of radio signals between the two radio stations and the first radio terminal; and
a second function block for conducting communication between the radio terminal and its same radio station to compare geographical location of a second radio terminal, the geographical location of which is known with the candidate points to determine the candidate point close to the geographical location of the second radio terminal as the geographical location of the first radio terminal.

128. The terminal location specification system according to claim 127,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

129. The terminal location specification system according to claim 127,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

130. The terminal location specification system according to claim 127,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

131. The terminal location specification system according to claim 127,
wherein in said mobile communication network, said radio terminal has means for receiving a signal from a GPS satellite, and one of said radio stations is said base station, the other of said radio stations being the GPS satellite.

132. The terminal location specification system according to claim 127,
wherein said radio terminal has a function block to receive a signal from a GPS satellite, said radio stations being the GPS satellites.

133. A terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification system comprising:
a radio terminal having imaging means;
a storage function block in which outward appearance information of buildings in communication areas of the radio stations has been stored in relation to the geographical location thereof;
a first function block for depicting two curves to calculate two intersection points between the two curves as two candidate points for the geographical location of the radio terminal by the use of propagation time of radio signals between the two radio stations and the first radio terminal; and
a second function block for comparing the outward appearance of the buildings photographed by the imaging means of the radio terminal with outward appearance information related to the candidate points of said outward appearance information to determine the candidate point in which said photographed outward appearance corresponds with said outward appearance information as the location of the radio terminal.

134. The terminal location specification system according to claim 133,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

135. The terminal location specification system according to claim 133,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

136. The terminal location specification system according to claim 133,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

137. The terminal location specification system according to claim 133,
wherein in said mobile communication network, said radio terminal has means for receiving a signal from a GPS satellite, and one of said radio stations is said base station, the other of said radio stations being the GPS satellite.

138. The terminal location specification system according to claim 133,
wherein said radio terminal has a function block to receive a signal from a GPS satellite, said radio stations being the GPS satellites.

139. A terminal location specification system for specifying geographical location of a radio terminal by transmission and reception of signals between two radio stations, geographical location of which is known and the geographical location of which is different and the radio terminal, the geographical location of which is unknown in a mobile communication network composed of a fixed network to which the radio terminal, the radio stations, and at least one of the radio stations are connected, and other necessary apparatus connected to the fixed network, the terminal location specification system comprising:
a storage function block in which disposition information of buildings in communication ranges of the radio stations has been stored;
a first function block for depicting two curves to calculate two intersection points between the two curves as two candidate points for the geographical location of the radio terminal by the use of propagation time of radio signals between the two radio stations and the first radio terminal; and
a second function block for estimating the effect of a shield of a building based on said disposition information to determine, if one of the candidate points cannot receive the signal from at least one the radio station, the other candidate point as the location of the radio terminal.

140. The terminal location specification system according to claim 139,
wherein a function block for calculating said two candidate points is capable of measuring the propagation time of the radio signals between said radio stations and said radio terminal, and
wherein a first distance is found from the propagation time between a first said radio station and said radio terminal, a second distance is found from the propagation time between a second said radio station and said radio terminal, and two intersection points between a first circle centering on geographical location of the first said radio station with a radius as the first distance, and a second circle centering on geographical location of the second said radio station with a radius as the second distance are calculated as said two candidate points.

141. The terminal location specification system according to claim 139,
wherein, when a function block for calculating said two candidate points is capable of measuring the propagation time of the radio signal between one of said two radio stations and said radio terminal, and is capable of measuring a difference of the propagation time of the radio signals between said radio terminal and said two radio stations, a first distance is found from the propagation time, a difference of the first distance calculated from the difference of the propagation time is found, and two intersection points between a first circle centering on geographical location of the first said radio station having measured the propagation time with a radius as the first distance, and a hyperbola in which a difference of distances from said two radio stations is the difference of the first distance are calculated as said two candidate points for said radio terminal.

142. The terminal location specification system according to claim 139,
wherein in a mobile communication network comprising at least one said radio terminal and at least two base stations, in which one the base station forms a plurality of communication ranges, and said radio terminal and the base stations existing in the communication ranges conduct radio communication, said two radio stations are the base stations.

143. The terminal location specification system according to claim 139,
wherein in said mobile communication network, said radio terminal has means for receiving a signal from a GPS satellite, and one of said radio stations is said base station, the other of said radio stations being the GPS satellite.

144. The terminal location specification system according to claim 139,
wherein said radio terminal has a function block to receive a signal from a GPS satellite, said radio stations being the GPS satellites.
